# EUROPÄISCHE PATENTSCHRIFT

(11) **EP 2 940 749 B1**
(45) Veröffentlichungstag und Bekanntmachung des Hinweises auf die Patenterteilung: **14.03.2018**
(21) Anmeldenummer: 15166520.5
(22) Anmeldetag: 16.01.2014
(51) Int. Cl.: H01L 45/00, H01L 27/24, H01L 31/0749, H03K 19/08, H04L 9/00

(54) **KOMPLEMENTÄRER WIDERSTANDSSCHALTER**
COMPLEMENTARY RESISTANCE SWITCH
COMMUTATEUR DE RÉSISTANCE COMPLÉMENTAIRE

(30) Priorität: 16.01.2013 DE 102013200615; 29.01.2013 DE 102013201443
(43) Veröffentlichungstag der Anmeldung: 04.11.2015
(62) Teilanmeldung aus: 14703281.7
(73) Patentinhaber: Helmholtz-Zentrum Dresden - Rossendorf e.V., 01328 Dresden (DE)
(72) Erfinder: You, Tiangui, 09126 Chemnitz (DE); Schmidt, Heidemarie, 01187 Dresden (DE); Du, Nan, 09126 Chemnitz (DE); Bürger, Danilo, 01219 Dresden (DE); Skorupa, Ilona, 01108 Dresden (DE)
(74) Vertreter: Viering, Jentschura & Partner mbB Patent- und Rechtsanwälte

(56) Entgegenhaltungen:
- EP-A1- 0 660 412
- WO-A2-2013/017131
- US-A1- 2010 135 061
- LEE D ET AL: "Polarity control of carrier injection at ferroelectric/metal interfaces for electrically switchable diode and photovoltaic effects", PHYSICAL REVIEW B, Bd. 84, Nr. 12, 8. September 2011 (2011-09-08), Seiten 125305/1-9, XP055118212, ISSN: 1098-0121, DOI: 10.1103/PhysRevB.84.125305
- SHUAI Y ET AL: "Nonvolatile Multilevel Resistive Switching in Ar+ Irradiated BiFeO3 Thin Films", IEEE ELECTRON DEVICE LETTERS, Bd. 34, Nr. 1, 13. Dezember 2012 (2012-12-13), Seiten 54-56, XP011482252, ISSN: 0741-3106, DOI: 10.1109/LED.2012.2227666
- YAO Y P ET AL: "Multi-state resistive switching memory with secure information storage in Au/BiFe0.95Mn0.05O3/La5/8Ca3/8MnO3 heterostructure", APPLIED PHYSICS LETTERS, Bd. 100, Nr. 19, 7. Mai 2012 (2012-05-07), Seiten 193504/1-4, XP012155987, ISSN: 0003-6951, DOI: 10.1063/1.4714514
- YOU T ET AL: "Exploiting Memristive BiFeO3 Bilayer Structures for Compact Sequential Logics", ADVANCED FUNCTIONAL MATERIALS, Bd. 24, Nr. 22, 24. Februar 2014 (2014-02-24), Seiten 3357-3365, XP055184900, ISSN: 1616-301X, DOI: 10.1002/adfm.201303365

## Beschreibung

Die Erfindung betrifft eine Widerstandsstruktur und ein Verfahren zum Betreiben einer Widerstandsstruktur. Ferner sind ein komplementärer Widerstandsschalter, die Herstellung eines komplementären Widerstandsschalters, die Verwendung eines komplementären Widerstandsschalters, eine kontaktierte polykristalline piezo- oder ferroelektrische Dünnschicht und deren Herstellung und Verwendung, eine Schichtenstruktur, und ein Verfahren zum Bearbeiten einer Schichtenstruktur beschrieben, welche zur weiteren Erläuterung der Erfindung dienen. Ferner sind ein Verfahren zum Verschlüsseln einer Bitfolge und ein Verfahren zum Entschlüsseln einer verschlüsselten Bitfolge beschrieben, welche zur weiteren Erläuterung der Erfindung dienen und nicht Teil dieser sind.

Im Allgemeinen kann eine dünne Schicht oder können mehrere dünne Schichten verschiedener Materialien mittels geeigneter Herstellungsverfahren auf einem Substrat oder einem Träger abgeschieden werden. Dabei können Herstellungsverfahren wie beispielsweise die physikalische Gasphasenabscheidung (PVD) und die chemische Gasphasenabscheidung (CVD) zum Einsatz kommen, wobei diese Verfahren in einer Vielzahl von verschiedenen Ausführungen zum Einsatz kommen können, beispielsweise als gepulste Laserdeposition (PLD), Sputtern, Elektronenstrahlverdampfen, Molekularstrahl-Epitaxie, plasmaunterstützte chemische Gasphasenabscheidung (PECVD), und andere Verfahren.

Ferroelektrische und/oder piezoelektrische Materialien, Schichten oder Schichtsysteme können eine Vielzahl von chemischen oder physikalischen Eigenschaften aufweisen, welche in unterschiedlichen Anwendungsgebieten nutzbar gemacht werden können. Dabei können ferroelektrische Materialien, ferroelektrische Schichten oder ferroelektrische Schichtsysteme auch pyroelektrisch und somit auch piezoelektrisch sein. Im Unterschied zu piezo- und pyroelektrischen Stoffen kann die elektrische Polarisation in Ferroelektrika mittels Anlegens einer Spannung permanent umgepolt werden.

Bei herkömmlichen mechanischen, elektronischen oder elektromechanischen Anwendungen können beispielsweise die elektrische Polarisation der ferroelektrischen Materialien, oder auch der direkte Piezoeffekt und/oder der inverse Piezoeffekt genutzt werden.

In US 2010/0135061 A1 ist eine nicht-flüchtige Speicherzelle beschrieben. Dabei werden zumindest zwei Schichten, welche ein ferroelektrisches Metalloxid bzw. ein ferroelektrisches Material aufweisen, zwischen zwei Elektroden angeordnet.

In der Veröffentlichung von D. Lee et al: "Polarity control of carrier injection at ferroelectric/metal Interfaces for electrically switchable diode and photovoltaic effects", PHYSICAL REVIEW B, Bd. 84, Nr. 12, 8. September 2011, Seiten 125305/1-9 (XP055118212) sind Untersuchungen beschrieben, welche einen schaltbaren ferroelektrischen Dioden-Effekt und dessen physikalische Mechanismen betreffen, wobei diese Untersuchungen an einen Pt/BiFeO₃/SrRuO₃ Schichtstapel durchgeführt wurden.

In EP 0 660 412 A1 ist ein Schaltelement bzw. ein Speicherelement beschrieben, welches zwei Elektroden aufweist wobei eine halbleitende dielektrische Schicht zwischen den Elektroden angeordnet ist. Die dielektrische Schicht weist ein ferroelektrisches Material mit einer permanenten Polarisation auf.

In WO 2013/017131 A2 ist eine Anordnung beschrieben, bei der mindestens eine piezo-und/oder ferroelektrische Schicht zwischen zwei elektrischen Kontakten angeordnet ist. Dabei ist mindestens einer der beiden Kontakte als gleichrichtender Kontakt ausgebildet, wobei sich Raumladungszonen innerhalb der piezo-und/oder ferroelektrischen Schicht bilden.

In der Veröffentlichung von Y. Shuai et al.: "Nonvolatile Multilevel Resistive Switching in Ar+ Irradiated BiFeO3 Thin Films", IEEE ELECTRON DEVICE LETTERS, Bd. 34, Nr. 1, 13. Dezember 2012, Seiten 54-56 (XP011482252) ist das Schaltverhalten einer Au/BiFev₃/Pt Schichtstruktur beschrieben, wobei diese mittels Argon-Ionen bestrahlt wurde.

In der Veröffentlichung von Y. P. Yao et al.: "Multi-state resistive switching memory with secure information storage in Au/BiFe0.35Mn0.05O3/La5/8Ca3/8MnO3 heterostructure", APPLIED PHYSICS LETTERS, Bd. 100, Nr. 19, 7. Mai 2012, Seiten 193504/1-4 (XP012155987) ist das resistive Schaltverhalten einer Au/BiFe_{0.35}Mn_{0.05}O₃/La_{5/8}Ca_{3/8}MnO₃ Heterostruktur beschrieben. Dabei basiert das Schaltverhalten beispielsweise auf mehreren Schaltzuständen.

Gemäß verschiedenen Ausführungsformen werden eine Memristor-Anordnung (ein Widerstandsschalter bzw. eine memristive Widerstandsschalter-Anordnung) und/oder entsprechende Herstellungsverfahren zum Herstellen (oder Bearbeiten) einer Memristor-Anordnung und/oder Verfahren zum Betreiben einer Memristor-Anordnung bereitgestellt.

Ein sogenannter Memristor (engl. memory resistor) kann ein passives elektrisches Bauelement aufweisen oder sein, dessen elektrischer Widerstand von der Vergangenheit abhängig sein kann. Dabei kann der jeweils aktuelle Widerstand eines Memristors davon abhängig sein, wie viele Ladungen (bzw. wieviel elektrischer Strom) geflossen sind und in welcher Richtung diese geflossen sind; und/oder wieviel elektrische Spannung an dem Memristor angelegt war und mit welcher Polung die elektrische Spannung an dem Memristor angelegt war.

Beispielsweise kann ein komplementärer Widerstandsschalter (3) (z.B. eine Memristor-Anordnung) Folgendes aufweisen: zwei äußere Kontakte (T1, T2), zwischen denen zwei piezo- oder ferroelektrische Schichten (11a und 11b) liegen, die durch einen inneren gemeinsamen Kontakt voneinander getrennt sind, dadurch gekennzeichnet, dass mindestens ein Bereich der piezo- oder ferroelektrischen Schicht (11a und 11b) mindestens einmal derart modifiziert ist, dass in der piezo- oder ferroelektrische Schicht (11a und 11b) jeweils zwischen dem inneren Kontakt und dem zugehörigen äußeren Kontakt ein Bereich (11') der Dicke (d') entsteht, welcher mindestens zusätzlich in einem Bereich (11") der Dicke (d") modifiziert sein kann, wobei
a) die äußeren Kontakte Oberflächenkontakte (Sa) und (Sb) und der innere Kontakt ein gemeinsamer zugehöriger Gegenkontakt (O) oder die äußeren Kontakte Gegenkontakte (Oa) und (Ob) und der innere Kontakt ein gemeinsamer zugehöriger Oberflächenkontakt (S) sind,
b) die Oberflächenkontakte (S), (Sa) und (Sb) gleichrichtend und die Gegenkontakte (O) bzw. (Oa) und (Ob) nichtgleichrichtend sind,
c) sich die modifizierten Bereiche in der piezo- oder ferroelektrischen Schicht (11a) und (11b) an den Oberflächenkontakten (S) bzw. (Sa) und (Sb) ausbilden,
d) die piezo- oder ferroelektrische Schichten (11, 11', 11") verschiedene verspannungsabhängige strukturelle Phasen mit unterschiedlicher Bandlücke und/oder unterschiedlicher Polarisationsladung aufweisen und
e) die elektrische Leitfähigkeit der piezo- oder ferroelektrischen Schichten (11, 11', 11") unterschiedlich ist.

Ferner kann bei dem komplementären Widerstandsschalter (3) vorgesehen sein, dass unterschiedliche Schwellwert-Spannungen (Uₖᵣᵢₜ) zum Ändern der strukturellen Phase in mindestens einem der Bereiche (11, 11', 11") beim Anlegen einer Schreibspannung (U_{schreib}) zwischen den äußeren Kontakten (Sₐ) und (S_{b}) oder (Oₐ) und (O_{b}) notwendig sind, wobei eine Pulslänge der Schreibspannung (U_{schreib}) vorzugsweise auf der Piko- bis Millisekunden-Zeitskala, besonders bevorzugt auf der Nano- bis Mikrosekunden-Zeitskala, liegt.

Ferner können die Kristallite des polykristallinen piezo- oder ferroelektrischen Materials der Schicht (11a) oder (11b) oder die Strukturgrößen von einkristallinem piezo- oder ferroelektrischen Material der Schicht (11a) oder (11b) kleiner als die laterale Ausdehnung der äußeren Kontakte (Sₐ), (S_{b}) oder (Oₐ, O_{b}) sein.

Ferner können mehrere äußere Kontakte (T1(m), T2(n)) mit (m, n) ≥ 1 in einem Array angeordnet sein, wobei in den piezo- oder ferroelektrische Materialien (11, 11', 11") an jedem Oberflächenkontakt (Sₐ(m), S_{b}(n)) bzw. S(m,n) die Bereiche (11') und/oder (11") individuell modifiziert sein können und wobei die Anzahl der äußeren Kontakte (m, n) unterschiedlich sein kann.

Ferner kann an mindestens einem der äußeren Kontakte (T1, T2) eine Niedrigspannungsquelle und/oder eine Hochspannungsquelle angeschlossen sein, wodurch die piezo- oder ferroelektrischen Materialien zwischen den äußeren Kontakten antiseriell verschalteten bipolaren Widerständen (a, b) entsprechen.

Ferner kann durch Anlegen einer hohen Spannung an einen oder an beide äußeren Kontakte (T1, T2) ein Zustandspaar ({LRSa, HRSb}) oder ({HRSa, LRSb}) in die anti-seriell verschalteten bipolaren Widerstände (a, b) geschrieben werden.

Ferner kann durch Anlegen einer niedrigen, positiven oder negativen Lesespannung (Uₗₑₛₑₐ) das Zustandspaar ({LRSa, HRSb}) oder ({HRSa, LRSb}) ausgelesen werden.

Beispielsweise kann eine Herstellung des komplementären Widerstandsschalters (3) mit gemeinsamem gleichrichtenden Kontakt (S) Folgendes aufweisen:
a) Bildung des äußeren Kontaktes (O_{b}) durch Metallisierung und/oder Strukturierung,
b) Züchtung und optionale Modifikation einer Schicht aus einem undotierten piezo- oder ferroelektrischen Material (11b) auf dem äußeren Kontakt (O_{b}),
c) anschließend Bildung des gemeinsamen Kontaktes (S) auf der Schicht (11b) durch Metallisierung,
d) anschließend Züchtung und optionale Modifikation der Schicht (11a) auf dem gemeinsamen Kontakt (S) aus einem dotierten oder undotierten piezo- oder ferroelektrischen Material,
e) abschließend Bildung des äußeren Kontaktes (Oₐ) durch Metallisierung und/oder Strukturierung.

Gemäß verschiedenen Ausführungsformen kann eine Herstellung des komplementären Widerstandsschalters (3) mit gemeinsamem nichtgleichrichtenden Kontakt (O) Folgendes aufweisen:
a) Bildung des äußeren Kontaktes (S_{b}) durch Metallisierung und/oder Strukturierung,
b) Züchtung und optionale Modifikation einer Schicht aus einem dotierten piezo- oder ferroelektrischen Material (11b) auf dem äußeren Kontakt (S_{b}),
c) anschließend Bildung des gemeinsamen Kontaktes (O) auf der Schicht (11b) durch Metallisierung und/oder Strukturierung; oder durch Diffusion der Dotanden in der Schicht (11b) an die Oberfläche der Schicht (11b),
d) anschließend Züchtung und optionale Modifikation der Schicht (11a) auf dem gemeinsamen Kontakt (O) aus einem undotierten piezo- oder ferroelektrischen Material,
e) abschließend Bildung des äußeren Kontaktes (Sₐ) durch Metallisierung.

Ferner können die Bereiche (11a, 11b, 11'a) und/oder (11'b) der piezo- oder ferroelektrischen Schichten mit Laser-, Ionen-, Wärme- und/oder Elektronenstrahlen (2) modifiziert werden, wobei die piezo- oder ferroelektrische Schicht (11) vorzugsweise großflächig mittels Laser- und/oder Ionenstrahlen modifiziert wird, und die Bereiche (11') vorzugweise lokal mittels Ionen- und/oder Elektronenstrahlen modifiziert werden.

Gemäß verschiedenen Ausführungsformen kann das piezo- oder ferroelektrische Material der Schichten (11a) und (11b) eine elektrische Restleitfähigkeit aufweisen und die Konzentration der freien Ladungsträger kann im Bereich von ca. 10¹⁴ bis ca. 10¹⁹ cm⁻³, vorzugsweise im Bereich von 10¹⁵ bis 10¹⁸ cm⁻³, liegen.

Ferner kann die elektrische Restleitfähigkeit der modifizierten Bereiche (11') und (11") im Vergleich zur elektrischen Restleitfähigkeit der Schicht (11) geändert sein und die Konzentration der freien Ladungsträger der modifizierten Bereiche (11') und (11") kann zwischen ca. 10¹² und ca. 10²³ cm⁻³ variieren.

Ferner kann das undotierte piezo- oder ferroelektrische Material der Schicht (11) aus BiFeO₃ bestehen und das dotierte piezo- oder ferroelektrische Material der Schicht (11) aus Ti-dotiertem BiFeO₃ bestehen, vorzugsweise mit einer Titankonzentration von ca. 0,05 at% (Atomprozent).

Beispielsweise kann der komplementäre Widerstandsschalter (3) als Logiktor in einem Logikschaltkreis zur Realisierung nichtflüchtiger Boolescher Funktionen oder als analoger Block mit Logiktor zur Realisierung von Filtern und Verstärkern verwendet werden.

Beispielsweise kann der komplementäre Widerstandsschalter (3) als programmierbares Logiktor verwendet werden, dadurch gekennzeichnet, dass der komplementäre Widerstandsschalter (3) :
a) durch Anlegen einer hohen Spannung an einen oder an beide äußere Kontakte (T1, T2) initialisiert wird,
b) durch Anlegen einer von den Booleschen Eingangsparametern abhängigen hohen Spannung an einen oder an beide äußere Kontakte (T1,T2) die Booleschen Funktionen (jede der beispielsweise 16 Booleschen Funktionen) geschrieben oder programmiert wird,
c) durch Anlegen einer von den Booleschen Eingangsparametern abhängigen niedrigen Spannung an einen oder an beide äußere Kontakte (T1, T2) die Boolesche Funktionen gelesen wird,
wobei das Zustandspaar ({LRSa, HRSb}) oder ({HRSa, LRSb}) des komplementären Widerstandsschalters beim Lesen nicht geändert wird.

Beispielsweise kann der komplementäre Widerstandsschalter (3) als programmierbarer analoger Block mit programmierbarem Logiktor verwendet werden, dadurch gekennzeichnet, dass der komplementäre Widerstandsschalter:
a) durch Anlegen einer hohen Spannung an einen oder an beide äußere Kontakte (T1, T2) initialisiert wird,
b) durch Anlegen einer von den Booleschen Eingangsparametern und dem Wert des Analogparameters abhängigen hohen Spannung im Bereich zwischen (Uₘᵢₙ) und (Uₘₐₓ) an einen oder an beide äußere Kontakte (T1, T2) die Boolesche Funktion des Logiktors sowie der Analogwert des analogen Blocks im Zustandspaar ({LRSia, HRSb}) oder ({HRSa, LRSib}) geschrieben oder programmiert wird,
c) durch Anlegen einer von den Booleschen Eingangsparametern abhängigen niedrigen Spannung an einen oder an beide äußere Kontakte (T1, T2) die Boolesche Funktionen gelesen wird,
d) durch Anlegen einer von dem geschriebenen Zustandspaar ({LRSia, HRSb}) oder ({HRSa, LRSib}) abhängigen niedrigen positiven oder negativen Spannung an einen oder an beide äußere Kontakte (T1, T2) der Analogwert (LRSia) oder (LRSib) gelesen wird,
wobei das Zustandspaar des komplementären Widerstandsschalters (3) beim Lesen nicht geändert wird.

Gemäß einem Ausführungsbeispiel der Erfindung weist eine Widerstandsstruktur (3) (z.B. eine Memristor-Anordnung), Folgendes auf: einen ersten elektrisch leitfähigen Kontakt (T1); einen zweiten elektrisch leitfähigen Kontakt (T2); eine erste ferroelektrische Schicht (11a); eine zweite ferroelektrische Schicht (11b); wobei die erste ferroelektrische Schicht (11a) und die zweite ferroelektrische Schicht (11b) miteinander in körperlichem Kontakt stehen und zwischen dem ersten elektrischen Kontakt (T1) und dem zweiten elektrischen Kontakt (T2) angeordnet sind; und wobei der erste Kontakt (T1) mit der ersten ferroelektrischen Schicht (11a) einen Schottky-Kontakt bildet und/oder der zweite Kontakt (T2) mit der zweiten ferroelektrischen Schicht (11b) einen Schottky-Kontakt bildet, wobei die zweite ferroelektrische Schicht mit mindestens einem zusätzlichen Metall und/oder einem zusätzlichen Halbmetall als Dotand dotiert ist.

Ferner können die erste ferroelektrische Schicht (11a) und die zweite ferroelektrische Schicht (11b) voneinander verschiedene Dotierungen und/oder räumliche Dotierungsverteilungen aufweisen.

Ferner kann die erste ferroelektrische Schicht (11a) mindestens einen ersten Schichtbereich (11'a, 11"a) aufweisen, wobei sich die Eigenschaften des ersten Schichtbereichs (11'a, 11''a) von denen der restlichen ersten ferroelektrischen Schicht (11a) unterscheiden. Ferner kann die zweite ferroelektrische Schicht (11b) mindestens einen zweiten Schichtbereich (11'b, 11''b) aufweisen, wobei sich die Eigenschaften des zweiten Schichtbereichs (11'a, 11''a) von denen der restlichen zweiten ferroelektrischen Schicht (11a) unterscheiden.

Ferner können/kann die erste ferroelektrische Schicht (11a) und/oder die zweite ferroelektrische Schicht (11b) eine n-Dotierung aufweisen (z.B. aufgrund von Leerstellen, sogenannter Vakanzen, z.B. Sauerstoffvakanzen). Gemäß verschiedenen Ausführungsformen kann die auf den Leerstellen basierende Dotierung mittels einer elektrischen Spannung und/oder mittels eines elektrischen Stroms verändert bzw. beeinflusst werden, z.B. kann die räumliche Verteilung von Sauerstoffvakanzen verändert werden.

Dabei können/kann die erste ferroelektrische Schicht (11a) und/oder die zweite ferroelektrische Schicht (11b) einen Dotierungsgradienten in der n-Dotierung aufweisen.

Ferner können/kann die erste ferroelektrische Schicht (11a) und/oder die zweite ferroelektrische Schicht (11b) eine zusätzliche n-Dotierung aufweisen (z.B. mittels Einbringens von Fremdatomen in das Material zumindest einer der ferroelektrischen Schichten, z.B. Metallatome). Gemäß verschiedenen Ausführungsformen kann die zusätzliche n-Dotierung von einer angelegten elektrischen Spannung und/oder von einem angelegten elektrischen Strom unbeeinflusst bleiben.

Gemäß verschiedenen Ausführungsformen kann das ferroelektrische Material der ferroelektrischen Schichten Bismut-Ferrit (BiFeO₃) aufweisen oder sein. Dabei kann eine n-Dotierung aufgrund von Sauerstoffvakanzen (Leerstellen an den vorgesehenen Gitterplätzen des Sauerstoffs) auftreten. Ferner kann eine zusätzliche Dotierung (n-Dotierung oder p-Dotierung) dadurch erreicht werden, dass die Eisenatome teilweise mit Atomen anderer Wertigkeit (z.B. höher als 3⁺ für eine n-Dotierung oder niedriger als 3⁺ für eine p-Dotierung) ersetzt (substituiert) werden.

Ferner können/kann die erste ferroelektrische Schicht (11a) und/oder die zweite ferroelektrische Schicht (11b) einen Dotierungsgradienten in der n-Dotierung aufweisen.

Dabei können die erste ferroelektrische Schicht (11a) und die zweite ferroelektrische Schicht (11b) eine n-Dotierung aufgrund von Sauerstoffvakanzen aufweisen. Ferner kann die zweite ferroelektrische Schicht (11b) eine zusätzliche n-Dotierung aufweisen, z.B. Titan (4⁺) an Gitterplätzen des Eisens (3⁺).

Mit anderen Worten kann die zweite ferroelektrische Schicht (11b) mit mindestens einem Metall dotiert sein; z.B. basierend auf partieller Substitution von Fe³⁺-Ionen mittels geeigneter AII/BIV-Dotierungen von Metallatomen.

Gemäß verschiedenen Ausführungsformen kann die erste ferroelektrische Schicht (11a) Bismut-Ferrit (BiFeO₃) aufweisen und die zweite ferroelektrische Schicht (11b) kann mit Titan dotiertes Bismut-Ferrit (Bi(Fe,Ti)O₃) aufweisen.

Gemäß verschiedenen Ausführungsformen können die erste ferroelektrische Schicht (11a) und die zweite ferroelektrische Schicht (11b) derart eingerichtet sein, dass an der (z.B. gemeinsamen) Grenzfläche, an der die erste ferroelektrische Schicht (11a) in körperlichem Kontakt mit der zweiten ferroelektrische Schicht (11b) steht, eine hohe Dotierung und elektrische Leitfähigkeit aufweist. Anschaulich können die erste ferroelektrische Schicht (11a) und die zweite ferroelektrische Schicht (11b) in einem elektrisch leitfähigen Kontaktbereich aneinander angrenzen.

Gemäß verschiedenen Ausführungsformen können die erste ferroelektrische Schicht (11a) und die zweite ferroelektrische Schicht (11b) oxidisch sein und eine Sauerstoff-Fehlstellen-n-Dotierung aufweisen. Dabei kann der elektrisch leitfähige Kontaktbereich eine hohe n-Dotierung aufweisen, z.B. basierend auf der Titan Dotierung und/oder zumindest auf einem Teil der Sauerstoff-Fehlstellen.

Gemäß verschiedenen Ausführungsformen kann der Kontaktbereich jeweils das Schichtmaterial der ersten ferroelektrischen Schicht (11a) und/oder der zweiten ferroelektrische Schicht (11b) mit einer Konzentration an freien Ladungsträgern von mehr als 10¹⁹ cm⁻³ (z.B. mehr als 10²⁰ cm⁻³, z.B. mehr als 10²¹ cm⁻³, z.B. mehr als 10²² cm⁻³, z.B. mehr als 10²³ cm⁻³) aufweisen.

Ferner können der erste Kontakt (T1) und der zweite Kontakt (T2) jeweils mindestens ein Metall aufweisen, z.B. Titan, Aluminium, Kupfer, Platin, Gold, oder ein anderes als Elektrode oder Kontakt geeignetes Material.

Gemäß einem weiteren Ausführungsbeispiel der Erfindung weist eine Widerstandsstruktur Folgendes auf: einen ersten elektrisch leitfähigen Kontakt (T1); einen zweiten elektrisch leitfähigen Kontakt (T2); eine erste piezoelektrische Schicht (11a); eine zweite piezoelektrische Schicht (11b); wobei die erste piezoelektrische Schicht (11a) und die zweite piezoelektrische Schicht (11b) miteinander in körperlichem Kontakt stehen und zwischen dem ersten elektrisch leitfähigen Kontakt (T1) und dem zweiten elektrisch leitfähigen Kontakt (T2) angeordnet sind; und wobei der erste elektrisch leitfähige Kontakt (T1) mit der ersten piezoelektrischen Schicht (11a) einen Schottky-Kontakt bildet und/oder der zweite elektrisch leitfähige Kontakt (T2) mit der zweiten piezoelektrischen Schicht (11b) einen Schottky-Kontakt bildet, wobei die zweite piezoelektrische Schicht mit mindestens einem zusätzlichen Metall und/oder einem zusätzlichen Halbmetall als Dotand dotiert ist.

Gemäß verschiedenen Ausführungsformen können/kann die erste piezoelektrische Schicht (11a) und/oder die zweite piezoelektrische Schicht mindestens ein Material aus der folgenden Gruppe von Materialien aufweisen Blei-Zirkonat-Titanat, Bariumtitanat, Blei-Magnesium-Niobat, Aluminiumorthophosphat, einem Material aus der Turmalingruppe, und Kaliumnatriumtartrat-Tetrahydrat.

Beispielsweise kann mittels Anlegens einer ersten Spannung mit einer ersten Polarität zwischen dem ersten elektrischen Kontakt (T1) und dem zweiten elektrischen Kontakt (T2) die Widerstands-Anordnung (3) derart beeinflusst oder eingestellt werden, dass die erste ferroelektrische Schicht (11a) mit dem ersten elektrischen Kontakt (T1) einen ohmschen Übergang bildet und die zweite ferroelektrische Schicht (11b) mit dem zweiten elektrischen Kontakt (T2) einen Schottky-Kontakt bildet. Dies kann anschaulich dadurch realisiert sein oder werden, dass mittels der Spannung und dem daraus resultierend fließenden Strom die elektrische Leitfähigkeit (z.B. die Dotierungsverteilung der Sauerstoffvakanzen) in den beiden ferroelektrischen Schichten verändert oder eingestellt werden kann. Somit kann beispielsweise die elektrische Leitfähigkeit der ersten ferroelektrischen Schicht (11a) im Kontaktbereich mit dem metallischen ersten elektrischen Kontakt (T1) groß genug sein (z.B. kann die erste ferroelektrische Schicht (11a) im Kontaktbereich mit dem metallischen ersten elektrischen Kontakt (T1) eine Konzentration freier Ladungsträger in einem Bereich von ungefähr 10¹⁹ cm⁻³ bis ungefähr 10²³ cm⁻³ aufweisen, oder mehr als 10²³ cm⁻³), dass sich ein ohmscher Übergang (ohmscher Kontakt) zwischen der ersten ferroelektrischen Schicht (11a) und dem ersten elektrischen Kontakt (T1) ausbildet oder einstellt. Ferner kann beispielsweise die elektrische Leitfähigkeit der zweiten ferroelektrischen Schicht (11b) im Kontaktbereich mit dem metallischen zweiten elektrischen Kontakt (T2) gering genug sein (z.B. kann die zweite ferroelektrische Schicht (11b) im Kontaktbereich mit dem metallischen zweiten elektrischen Kontakt (T2) eine Konzentration freier Ladungsträger in einem Bereich von ungefähr 10¹⁴ cm⁻³ bis ungefähr 10¹⁹ cm⁻³ aufweisen), so dass sich ein Halbleiter-Metall-Übergang (Schottky-Kontakt) zwischen der zweiten ferroelektrischen Schicht (11b) und dem zweiten elektrischen Kontakt (T2) ausbildet oder einstellt.

Beispielsweise kann mittels Anlegens einer zweiten Spannung mit der ersten Polarität entgegengesetzten Polarität zwischen dem ersten elektrischen Kontakt (T1) und dem zweiten elektrischen Kontakt (T2) die Widerstands-Anordnung (3) derart beeinflusst oder eingestellt werden, dass die erste ferroelektrische Schicht (11a) mit dem ersten elektrischen Kontakt (T1) einen Schottky-Kontakt bildet und die zweite ferroelektrische Schicht (11b) mit dem zweiten elektrischen Kontakt (T2) einen ohmschen Übergang bildet. Dies kann anschaulich dadurch realisiert sein oder werden, dass mittels der Spannung und dem daraus resultierend fließenden Strom die elektrische Leitfähigkeit (z.B. die Dotierungsverteilung der Sauerstoffvakanzen) in den beiden ferroelektrischen Schichten verändert oder eingestellt werden kann. Somit kann beispielsweise die elektrische Leitfähigkeit der zweiten ferroelektrischen Schicht (11b) im Kontaktbereich mit dem metallischen zweiten elektrischen Kontakt (T2) groß genug sein (z.B. kann die zweite ferroelektrische Schicht (11b) im Kontaktbereich mit dem metallischen zweiten elektrischen Kontakt (T2) eine Konzentration freier Ladungsträger in einem Bereich von ungefähr 10¹⁹ cm⁻³ bis ungefähr 10²³ cm⁻³ aufweisen, oder mehr als 10²³ cm⁻³), dass sich ein ohmscher Übergang (ohmscher Kontakt) zwischen der zweiten ferroelektrischen Schicht (11b) und dem zweiten elektrischen Kontakt (T2) ausbildet oder einstellt. Ferner kann beispielsweise die elektrische Leitfähigkeit der ersten ferroelektrischen Schicht (11a) im Kontaktbereich mit dem metallischen ersten elektrischen Kontakt (T1) gering genug sein (z.B. kann die erste ferroelektrische Schicht (11a) im Kontaktbereich mit dem metallischen ersten elektrischen Kontakt (T1) eine Konzentration freier Ladungsträger in einem Bereich von ungefähr 10¹⁴ cm⁻³ bis ungefähr 10¹⁹ cm⁻³ aufweisen), so dass sich ein Halbleiter-Metall-Übergang (Schottky-Kontakt) zwischen der ersten ferroelektrischen Schicht (11a) und dem ersten elektrischen Kontakt (T1) ausbildet oder einstellt.

Gemäß verschiedenen Ausführungsformen kann die Konzentration freier Ladungsträger von der n-Dotierung abhängig sein bzw. sich aus der n-Dotierung ergeben.

Anschaulich können die ferroelektrischen Schichten halbleitend sein und eine (beispielsweise räumlich in der jeweiligen Schicht oder in beiden Schichten) verschiebbare Ladungsträgerdichte (z.B. freier Ladungsträger bzw. der Elektronen) aufweisen, so dass sowohl ein Schottky-Kontakt als auch ein ohmscher Kontakt mit einem Metall bereitgestellt werden kann, beispielsweise indem die ferroelektrischen Schichten teilweise im Bereich an den metallischen Kontakten elektrisch leitend oder elektrische halbleitend geschaltet werden.

Die verschiebbare Ladungsträgerdichte bzw. die verschiebbare Dotierung kann beispielsweise mittels mobiler Dotieratome (welche beispielsweise in dem Material der Schicht diffundieren, bzw. driften, bzw. sich bewegen können) und mittels fixierter (fest in das Kristallgitter des Materials der Schicht eingebauter) Dotieratome beeinflusst, eingestellt oder erzeugt werden. Gemäß verschiedenen Ausführungsformen kann beispielsweise in jeder der piezo- oder ferroelektrischen Schichten eine asymmetrische Verteilung fester Dotanden bereitgestellt sein oder werden (für BFO beispielsweise Titanatome als fixierte Dotieratome), so dass die Diffusivität bzw. der Drift der mobilen Dotanden (für BFO beispielsweise Sauerstoff-Vakanzen) entsprechend asymmetrisch ist. Beispielsweise kann in Bereichen mit einer höheren Konzentration an fixierten Dotieratomen (z.B. Titanatomen in BFO) die Diffusivität der mobilen Dotieratome (z.B. Sauerstoff-Vakanzen für BFO) kleiner sein als in Bereichen mit einer niedrigeren (oder keinen) Konzentration an fixierten Dotieratomen. Anschaulich können die mobilen Dotieratome mittels der fest eingebauten Dotieratome räumlich lokalisiert (bzw. getrappt oder eingefangen) werden, so dass eine permanente verschiebbare Dotierung eingestellt werden kann.

Gemäß einem erfindungsgemäßen Ausführungsbeispiel weist ein Verfahren zum Betreiben der Widerstandsstruktur (3) (Memristor-Anordnung) gemäß einem Ausführungsbeispiel der Erfindung Folgendes auf: Bereitstellen einer ersten Spannung mit einer ersten Polarität zwischen dem ersten elektrischen Kontakt (T1) und dem zweiten elektrischen Kontakt (T2), so dass die erste ferroelektrische Schicht (11a) mit dem ersten elektrischen Kontakt (T1) einen ohmschen Übergang bildet und die zweite ferroelektrische Schicht (11b) mit dem zweiten elektrischen Kontakt (T2) einen Schottky-Kontakt bildet; und/oder Bereitstellen einer zweiten Spannung mit einer zweiten Polarität zwischen dem ersten elektrischen Kontakt (T1) und einem zweiten elektrischen Kontakt (T2), so dass die erste ferroelektrische Schicht (11a) mit dem ersten elektrischen Kontakt (T1) einen Schottky-Kontakt bildet und die zweite ferroelektrische Schicht (11b) mit dem zweiten elektrischen Kontakt (T2) einen ohmschen Übergang bildet.

Beispielsweise kann eine (z.B. kontaktierte) polykristalline, piezo- oder ferroelektrische Dünnschicht (eine Schicht oder ein Dünnfilm) mindestens einen piezo- oder ferroelektrischen Kristallit mit (mehreren) Bereichen (11"), (11') und (11) aufweisen, wobei an den Kristallit bzw. an die Kristallite mindestens zwei äußere Kontakte angebracht sind und die Kristallite der modifizierten polykristallinen piezo- oder ferroelektrischen Dünnschicht im Bereich der Korngrenzen (GB") elektrisch voneinander isoliert sind; wobei die physikalischen und/oder chemischen Eigenschaften der Bereiche (11") sich von den physikalischen und/oder chemischen Eigenschaften der Bereiche (11) unterscheiden und sich isolierende verspannte Bereiche (11') zwischen (11") und dem verbleibenden unverspannten Bereich (11) der Kristallite ausbilden.

Ferner kann die Grenze zwischen verspannter Phase (11') und unverspannter Phase (11) in jedem Kristallit durch das Anlegen einer Spannung zwischen den Kontakten innerhalb des Kristallits verschoben werden.

Beispielsweise kann die Herstellung einer piezo- oder ferroelektrischen Dünnschicht (einer Schicht) dadurch gekennzeichnet sein, dass ein Metallfilm (eine Metallschicht) auf ein Trägermaterial (Substrat) aufgebracht wird, ein polykristallines piezo- oder ferroelektrisches Material auf die Metallschicht aufgebracht wird, die Bereiche (11") und die Korngrenzen (GB'') an der Außenfläche der Kristallite durch Modifikation der polykristallinen Dünnschicht gebildet werden, und ein Metallfilm (Metallschicht) auf die polykristalline Dünnschicht aufgebracht wird, wobei die Modifikation der polykristallinen Dünnschicht zur Bildung und anschließenden Drift und/oder Diffusion von Vakanzen an die Außenfläche der einzelnen Kristallite und zur Änderung der Valenz der Vakanzen in der Außenfläche der Kristallite und damit zur Bildung der Bereiche (11") und der Korngrenzen (GB") führt.

Beispielsweise kann die Herstellung einer piezo- oder ferroelektrischen Dünnschicht aufweisen, dass die Modifikation mittels Ionenimplantation, mittels Plasma basierter Ionenimplantation (PIII), mittels Laserbestrahlung oder mittels Elektronenstrahlen erfolgt.

Beispielsweise kann eine kontaktierte polykristalline piezo- oder ferroelektrische Dünnschicht zum Transport von Ladungsträgern zwischen zwei äußeren Kontakten verwendet werden, wobei der Transport von Ladungsträgern durch die elektrisch voneinander isolierten Kristallite der polykristallinen Dünnschicht und in den Korngrenzen (GB'') erfolgt, wobei der Anteil des Stroms, welcher durch die Korngrenzen (GB") fließt, die Größenordnung des Stromsignales in kontaktierten polykristallinen, piezo- oder ferroelektrischen Dünnschichten bestimmt.

Beispielsweise kann eine kontaktierte polykristalline piezo- oder ferroelektrische Dünnschicht als Widerstandsschalter (z.B. Memristor) mit hoher Retention und Endurance und hohem Stromsignal verwendet werden, wobei die beiden Kontakte vorzugsweise ein gleichrichtender (S) und ein nichtgleichrichtender Kontakt (O) sind.

Beispielsweise kann eine kontaktierte polykristalline piezo- oder ferroelektrische Dünnschicht in einer Solarzelle zur Trennung von photogenerierten Ladungsträgern in der polykristallinen Dünnschicht mit elektrisch voneinander isolierten Kristalliten verwendet werden, wobei die Trennung (der Ladungsträger) jeweils in dem Kristallit erfolgt, in dem die Elektron-Loch-Paare durch Absorption von Licht generiert wurden und wobei die beiden Kontakte (S) und (O) vorzugsweise zwei nichtgleichrichtende Kontakte sind.

Beispielsweise kann ein nichtgleichrichtender Kontakt ein ohmscher Kontakt sein, z.B. wenn die Leitfähigkeits-Differenz oder der Ladungsträger-Unterschied zwischen dem Metallkontakt und der ferroelektrischen Schicht gering ist, wie vorangehend beschrieben. Ferner kann ein gleichrichtender Kontakt ein Schottky-Kontakt (Halbleiter-Leiter-Kontakt bzw. Halbleiter-Metall-Kontakt) sein, z.B. wenn die Leitfähigkeits-Differenz oder der Ladungsträger-Unterschied zwischen dem Metallkontakt und der ferroelektrischen Schicht groß ist, also die ferroelektrischen Schicht halbleitend ist, wie vorangehend beschrieben.

Beispielsweise kann eine Schichtenstruktur (z.B. eine mittels mindestens zwei Kontakten kontaktierte polykristalline piezo- oder ferroelektrische Schicht) Folgendes aufweisen: zwei elektrisch leitfähige Kontaktelemente (z.B. einen ersten elektrisch leitfähigen Kontakt und einen zweiten elektrisch leitfähigen Kontakt); und eine Schicht mit mehreren ferroelektrischen Kristalliten (z.B. eine polykristalline ferroelektrische Schicht), die an den Grenzen zwischen den ferroelektrischen Kristalliten (an den Korngrenzen) zumindest teilweise elektrisch isolierend ausgebildet sind, so dass ein Stromfluss durch die Grenzen zwischen den ferroelektrischen Kristalliten hindurch gehemmt ist, wobei die Schicht zwischen den zwei elektrisch leitfähigen Kontaktelementen angeordnet ist.

Beispielsweise kann die Schicht auch als ein Bereich mit ferroelektrischem Material angesehen werden, wobei dieser Bereich zwischen den zwei elektrisch leitfähigen Kontaktelementen angeordnet ist.

Ferner kann die Schicht strukturiert sein, z.B. in einzelne Schichtbereiche unterteilt oder separiert sein.

Beispielsweise können die mehreren ferroelektrischen Kristallite an den Grenzen zwischen den ferroelektrischen Kristalliten einen elektrisch leitfähigen Bereich, einen metallischen Bereich oder eine Metallschicht aufweisen. Ferner können die mehreren ferroelektrischen Kristallite an den Grenzen zwischen den ferroelektrischen Kristalliten mindestens einen Schottky-Kontakt oder mindestens einen Halbleiter-Leiter-Übergang aufweisen.

Anschaulich kann sich eine Sperrschicht bzw. ein Sperrbereich zwischen den mehreren ferroelektrischen Kristalliten ausbilden oder bereitgestellt werden. Dabei kann der Sperrbereich jeweils in dem Material der mehreren ferroelektrischen Kristallite gebildet sein. Beispielsweise kann mittels Sputterns (Ionenbeschuss, Bestrahlung mit Teilchen oder Ähnlichem) die Korngrenze derart modifiziert sein oder werden, dass bevorzugt leichte Atome wie Sauerstoff aus dem ferroelektrischen Material herausgesputtert sind oder werden, so dass das verbleibende Material aus den schwereren Atomen, wie beispielsweise Bismut und Eisen, einen metallischen Charakter aufweist oder einen metallischen Bereich bildet. Dieser metallischen Bereiche an den Korngrenzen können dann mit dem halbleitenden ferroelektrischen Material der Kristallite einen Schottky-Kontakt oder einen Leiter-Halbleiter-Kontakt bilden.

Beispielsweise kann ein Verfahren zum Bearbeiten einer Schichtenstruktur Folgendes aufweisen: das Bestrahlen einer Schicht, die mehrere in Korngrenzbereichen aneinander angrenzende ferroelektrische Kristallite aufweist, wodurch die Korngrenzbereiche derart beeinflusst werden, dass die elektrische Leitfähigkeit entlang eines Pfads durch die Korngrenzbereiche hindurch reduziert wird.

Ferner kann das Bestrahlen mittels Ionen, mittels Ionenimplantation, mittels Plasma-Immersions-Ionenimplantation (PIII), mittels Laserbestrahlung, mittels Wärmestrahlung und/oder mittels Elektronenstrahlen erfolgen. Beispielsweise kann das Bestrahlen (z.B. mittels Ionen) die Kristallite derart modifizieren, dass deren chemische Zusammensetzung (z.B. lokal an den Korngrenzen oder an der freiliegenden Oberfläche) verändert wird.

Beispielsweise können die mehreren ferroelektrischen Kristallite Sauerstoff aufweisen, und das Bestrahlen kann derart erfolgen, dass an der Oberfläche der Schicht und/oder in den Korngrenzbereichen Sauerstoff-Leerstellen gebildet werden.

Eine Leerstelle kann sich dabei auf das entsprechend ideale Kristallgitter (eine Leerstelle im sonst vollbesetzten Gitter) des ferroelektrischen Materials der Kristallite beziehen, beispielsweise auf Atompositionen im Kristallgitter.

Ferner können die mehreren ferroelektrischen Kristallite n-leitend sein (halbleitend mit Elektronen als dominierende freie Ladungsträger), wobei das Bestrahlen derart erfolgen kann, dass zumindest in den Korngrenzbereichen ein metallisches bzw. elektrisch leitfähiges Material mit metallischem Charakter (z.B. mit einem im Wesentlichen freien Elektronengas) gebildet wird.

Gemäß verschiedenen Ausführungsformen können die mehreren piezoelektrischen oder ferroelektrischen Kristallite ferner mindestens ein Material aus der folgenden Gruppe von Materialien aufweisen: Blei-Zirkonat-Titanat, Bariumtitanat, Blei-Magnesium-Niobat, Aluminiumorthophosphat, einem Material aus der Turmalingruppe, und Kaliumnatriumtartrat-Tetrahydrat.

Die Erfindung betrifft eine Widerstandsstruktur gemäß Anspruch 1 und ein Verfahren gemäß Anspruch 12 zum Betreiben derselben; Ausführungsformen ergeben sich aus den abhängigen Ansprüchen.

Ausführungsbeispiele der Erfindung sowie Beispiele zum Verständnis der Erfindung sind in den Figuren dargestellt und werden im Folgenden näher erläutert.

Es zeigen
- Figuren 1A und 1B: jeweils einen komplementären Widerstandsschalter oder eine Widerstandsstruktur in einer schematischen Ansicht;
- Figuren 1C bis 1E: jeweils eine schematische Ansicht eines Leseschemas und/oder Schreibschemas für einen komplementären Widerstandsschalter oder eine Widerstandsstruktur;
- Figuren 2A bis 2D: jeweils eine Anordnung mehrerer komplementärer Widerstandsschalter oder eine Widerstandsstruktur in einer schematischen Ansicht;
- Figur 3: eine schematische Ansicht für eine Realisierung einer Booleschen Funktion (XNOR) im "zwei-Schritt"-Verfahren;
- Figur 4A: eine Widerstandsstruktur gemäß einem Ausführungsbeispiel der Erfindung in einer schematischen Ansicht;
- Figur 4B: ein schematisches Ablaufdiagramm für ein Verfahren zum Betreiben einer Widerstandsstruktur gemäß einem Ausführungsbeispiel der Erfindung;
- Figuren 5A bis 5D: jeweils eine polykristallinen piezo- oder ferroelektrischen Dünnschicht bzw. eine Schichtenstruktur in einer schematischen Ansicht;
- Figuren 6A bis 6C: jeweils eine kontaktierte polykristalline piezo- oder ferroelektrische Dünnschicht bzw. eine Schichtenstruktur in einer schematischen Ansicht;
- Figur 7A: schematisch die Funktionsweise eines Widerstandsschalters oder einer Widerstandsstruktur bzw. eines Memristors oder Widerstandselements veranschaulicht;
- Figuren 7B und 7C: schematisch einen Widerstandsschalter oder eine Widerstandsstruktur bzw. einen Memristor oder ein Widerstandselement veranschaulicht
- Figur 7D: schematisch das Zuführen eines elektrischen Signals zu einem Lastwiderstand und einem Widerstandselement veranschaulicht;
- Figuren 8A bis 8E: jeweils schematisch einen Aspekt des Verfahrens zum Verschlüsseln und/oder Entschlüsseln einer Bitfolge veranschaulicht, gemäß verschiedenen Ausführungsformen, welche zur weiteren Erläuterung der Erfindung dienen und nicht Teil dieser sind;
- Figur 9: ein Verfahren zum Verschlüsseln einer Bitfolge und/oder Entschlüsseln einer verschlüsselten Bitfolge veranschaulich, gemäß verschiedenen Ausführungsformen, welche zur weiteren Erläuterung der Erfindung dienen und nicht Teil dieser sind; und
- Figuren 10A und 10B: jeweils ein Ablaufdiagramm für ein Verfahren zum Verschlüsseln einer Bitfolge und/oder Entschlüsseln einer verschlüsselten Bitfolge veranschaulich, gemäß verschiedenen Ausführungsformen, welche zur weiteren Erläuterung der Erfindung dienen und nicht Teil dieser sind.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Offenbart wird die Herstellung eines komplementären Widerstandsschalters mit zwei Terminals **T₁** und **T₂** (z.B. ein erstes Terminal T₁ und ein zweites Terminal T₂), in welchen jede Boolesche Grundfunktion (z.B. jede der 16 Booleschen Funktionen für zwei Variablen *y* = f(*x*₁, *x*₂) bzw. jede zweistellige Boolesche Funktion) nichtflüchtig durch Anlegen einer Schreibspannung im Zweischritt-Verfahren geschrieben werden kann. Der Zustand des komplementären Widerstandsschalters kann durch Anlegen einer konstanten, von den Eingangsparametern der Booleschen Funktion abhängigen, niedrigen positiven oder negativen Lesespannung (engl. "Level Read") ausgelesen werden. Weiterhin wird im Folgenden eine Integration des komplementären Widerstandsschalters an den Kreuzungspunkten einer Gitterstruktur (Array) als Logiktor (im Folgenden auch bezeichnet als Gatter oder Logikgatter, engl. "gate" oder "logic gate") in einem Logikschaltkreis zur Realisierung nichtflüchtiger Boolescher Funktionen oder als analoger Block mit Logiktor zur Realisierung von Filtern und Verstärkern beschrieben.

Im Folgenden und in den Figuren werden die folgenden Bezugszeichen genutzt:
- bipolarer Widerstandsschalter a, b bzw. erster bipolarer Widerstandsschalter a und zweiter bipolarer Widerstandsschalter b, wobei a und b auch jeweils als Zusatzindizes für andere Bezugszeichen dienen können, welche diese dann jeweils zu dem ersten oder zweiten bipolaren Widerstandsschalter zuordnen können;
- Oberflächenkontakt S, Sₐ, S_{b} ;
- zugehöriger Gegenkontakt O, Oₐ, O_{b};
- Terminal T1, T2 für Eingabe- und Ausgabeparameter des integrierten, nichtflüchtigen Logikbauelementes 3
- Dicke d, dₐ, d_{b} der piezo- oder ferroelektrischen Schicht vor einer Modifikation;
- Bereiche 11, 11', 11'' der piezo- oder ferroelektrischen Schicht;
- Dicke d', d'ₐ, d'_{b}, d", d"ₐ, d"_{b} modifizierter ferroelektrischer, leitender Bereiche 11' (für d') und 11" (für d");
- Spannung U, U₁, U₂, Uᵢⱼ (wobei i,j ganzzahlige Zählindizes sein können);
- Strom I, I₁, I₂, Iᵢⱼ (wobei i,j ganzzahlige Zählindizes sein können);
- Widerstand R, R₁, R₂, Rᵢⱼ (wobei i,j ganzzahlige Zählindizes sein können)
- modifizierende Strahlen 2 z.B. Laser-, Wärme-, Plasma-, Ionen- oder Elektronenstrahlen
- komplementärer Widerstandsschalter 3
- Bereich 6, 6ₐ, 6_{b} (z.B. ein Feldbereich) zwischen zwei Kontakten, in dem sich bei angelegter Spannung U an die (entsprechenden) beiden Kontakte ein elektrisches Feld ausbildet und Strom fließen kann;
- piezo- oder ferroelektrische Schicht 11, 11ₐ, 11_{b} in der verspannungsfreien Phase bzw. Bereiche 11, 11ₐ, 11_{b} der piezo- oder ferroelektrische Schicht in der verspannungsfreien Phase oder piezo- oder ferroelektrischer Kristallit einer piezo- oder ferroelektrischen Schicht, wobei der piezo- oder ferroelektrischer Kristallit in einer unverspannten Phase sein kann;
- modifizierter, ferroelektrischer Bereich (z.B. ein erster modifizierter, ferroelektrischer Bereich) 11', 11'ₐ, 11'_{b} der piezo- oder ferroelektrischen Schicht 11 oder piezo- oder ferroelektrischer Kristallit einer piezo- oder ferroelektrischen Schicht, wobei der piezo- oder ferroelektrischer Kristallit in einer verspannten Phase sein kann;
- (weiterer) modifizierter, ferroelektrischer Bereich 11", 11"ₐ, 11"_{b} (z.B. ein zweiter modifizierter, ferroelektrischer Bereich der piezo- oder ferroelektrischen Schicht 11 oder ein zusätzlicher modifizierter, ferroelektrischer Bereich des ersten modifizierten, ferroelektrische Bereichs 11', 11'ₐ, 11'_{b}) in Kontakt zum Oberflächenkontakt S und/oder zum zugehörigen Gegenkontakt O;
- Bereich 15, 15ₐ, 15_{b} (z.B. ein dritter Bereich der piezo- oder ferroelektrischen Schicht 11) geringster Leitfähigkeit zwischen Oberflächenkontakt S und zugehörigem Gegenkontakt O, in dem oberhalb der kritischen elektrischen Feldstärke bzw. Schwellwert-Spannung Uₖᵣᵢₜ die verspannungsbehaftete Phase eingestellt wird oder werden kann oder eine Grenze zwischen der verspannten Phase 11' und unverspannten Phase 11 im Kristallit;
- Strukturgrenze 16, 16ₐ, 16_{b} (oder Strukturgrenzbereich) zwischen zwei verschiedenen Phasen der piezo- oder ferroelektrischen Schicht oder Ende der Raumladungszone in einem piezo- oder ferroelektrischen Kristallit;
- integrierter Schaltkreis oder Trägermaterial 17;
- Schreibspannung (U_{write}) U_{schreib}, U⁺_{schreib}, U⁻_{schreib};
- Lesespannung (U_{read}) Uₗₑₛₑ, U⁺ₗₑₛₑ, U⁻ₗₑₛₑ ;
- Schwellwert-Spannung Uₖᵣᵢₜ, Uₖᵣᵢₜₐ, U_{kritb} zur Einstellung der verspannungsbehafteten Phase des Bereichs 15,
- Maximaler Wert der Schreibspannung Uₘₐₓ, Uₘₐₓₐ, U_{maxb};
- Strom I@Uₗₑₛₑ beim Anliegen einer Lesespannung Uₗₑₛₑ;
- ein Zustand oder mehrere Zustände LRS, LRS', LRS", LRSi, LRSb, LRSb', LRSb", LRSbi, LRSa, LRSa', LRSa", LRSai (z.B. ein erster Zustand oder mehrere (z.B. i) erste Zustände der Widerstandsschalter a, b) mit geringem Widerstand (engl. "low resistance state") mit i=1 bis n (i als Zählindex);
- kleinster Wert Uₘᵢₙ, Uₘᵢₙₐ, U_{minb} der Schreibspannung zum Schreiben des LRS1 (des ersten Zustands mit geringem Widerstand);
- maximaler Wert Uₘₐₓ, Uₘₐₓₐ, U_{maxb} der Schreibspannung zum Schreiben des LRSn (z.B. des n-ten ersten Zustands);
- ein Zustand oder mehrere Zustände HRS, HRSb, HRSb', HRSb'', HRSa, HRSa', HRSa'' (z.B. ein zweiter Zustand oder mehrere zweite Zustände der Widerstandsschalter a, b) mit hohem Widerstand (engl. "high resistance state") mit i=1 bis n (i als Zählindex);
- Lesestrom I_{LRS}, I_{LRSb}, I_{LRSb}', I_{LRSb}", I_{LRSbi}, I_{LRSa}, I_{LRSa}', I_{LRSa}", I_{LRSai} im LRS beim Anlegen der Lesespannung Uₗₑₛₑ ;
- Lesestrom I_{HRSb}, I_{HRSb}', I_{HRSb}", I_{HRSa}, I_{HRSa}', I_{HRSa}" im HRS beim Anlegen der Lesespannung Uₗₑₛₑ ;
- Erster Zyklusschritt C.VH1 zum Initialisieren der Knotenpunkte eines Arrays;
- Zweiter Zyklusschritt C.VH2 zum Schreiben der zum Ausführen einer logischen Funktion benötigten Kreuzungspunkte eines Arrays;
- Schritt C.VL zum Lesen des Zustandes der zum Ausführen einer logischen Funktion benötigten Kreuzungspunkte eines Arrays;
- Zeilen m und Spalten n eines Arrays;
- Korngrenze GB (engl. "grain boundary"); und
- Vakanzen V, Sauerstoffvakanzen V_{O}.

Die Offenbarung umfasst einen komplementären Widerstandsschalter zur Integration in elektrischen Bauelementen, die Herstellung des komplementären Widerstandsschalters und dessen Verwendung, beispielsweise in einem Logiktor (Logikgatter) oder in einem analogen Block.

Ein Block kann auch CAB (engl. für Configurable Analog Block) genannt werden (z.B. als Teil eines programmierbaren analogen Schaltkreises, z.B. einer feldprogrammierbare Analoganordnung FPAA, engl. "field programmable analog array"). Mittels eines solchen Blocks können verschiedene analoge Grundschaltungen (z.B. Filter und/oder Verstärker) realisiert sein oder werden. Dabei kann eine logische Schaltung zum Herstellen der notwendigen Verbindungen innerhalb und zwischen mehreren Blöcken (CABs) verwendet werden. Ferner können analoge Ein- und Ausgänge eine Verbindung des Blocks oder der Blöcke mit einer Peripherie herstellen. Dabei kann eine Konfiguration des Blocks oder der Blöcke unter Verwendung von digitalen Ein- und Ausgängen erfolgen, wobei die Ein- und Ausgänge an Speicherbausteine oder Mikroprozessoren angeschlossen sein können oder werden können.

Ein Logiktor bzw. ein Logikgatter oder Gatter (engl. gate) kann eine elektronische Struktur aufweisen zum Realisieren einer Booleschen Funktion, so dass Eingangssignale zu Ausgangssignalen verarbeitet werden können. Die Eingangssignale können beispielsweise mittels einer Implementierung logischer Operatoren, wie UND, ODER, NICHT, XOR und NOR usw. zu einem einzigen logischen Ergebnis umgewandelt und durch die Ausgabesignale abgebildet werden. Für die Implementierung gibt es unterschiedliche Möglichkeiten.

Beispielsweise können unterschiedliche Spannungen als Signale verwendet werden und beispielsweise an einen Eingang oder an mehrere Eingänge des Gatters angelegt werden. Die Spannungen können beispielsweise logische Zustände repräsentieren (z.B. repräsentiert durch "0" oder "1"). Ergebnisse derartiger Gatter können ferner als Eingangssignale für weitere Gatter verwendet werden (z.B. in einem Array), sodass sich vielseitige Schaltungen erstellen lassen.

Im Allgemeinen kann ein Logiktor ein physisches Gerät sein, welches eine der 16 Booleschen Funktionen ausführt, das heißt, es verknüpft ein oder mehrere Eingangsvariable zu einer Ausgangsvariablen. Ein ideales Logiktor kann die entsprechende Boolesche Funktion sofort und beliebig oft ausführen. Eine Kontrolleinheit bildet die Zentraleinheit eines Computers und diese kontrolliert seine Operationen. Kontrolleinheiten sind ad hoc aus Logikbauelementen aufgebaut. Fest verdrahtete Logiktore werden in erster Linie mit Hilfe von Dioden oder Transistoren realisiert. Ihre Kontrollfunktion basiert auf einer festen Architektur. Muss der Befehlssatz modifiziert werden, muss auch die Verdrahtung dieser Logiktore geändert werden. Fest verdrahtete Logiktore werden in Computern mit reduziertem Befehlssatz eingesetzt. Mikroprogramme sind als eine Folge von Mikrobefehlen organisiert und werden im speziellen Kontrollgedächtnis abgelegt. Der Hauptvorteil der Mikroprogramm-Kontrolleinheit ist die Einfachheit ihrer Struktur. So können Mikrobefehle leicht ersetzt werden.

Mit einer Tunnel-Magnetowiderstands (TMR) - Struktur oder einer anderen Magnetowiderstands-Struktur können beispielsweise die Ausgangsvariablen eines CMOS-Schaltkreises gespeichert werden [US 2012/0195105 A1]. Die Ausgangsvariable kann durch einen, von der Ausgangsvariablen abhängigen spinpolarisierten Strom großer Stromdichte (10⁶ bis 10⁷ A/cm²) in die Magnetowiderstands-Struktur geschrieben werden. Logikschaltungen schließen solche Geräte wie Multiplexgeräte (Multiplexer (kurz: MUX), Register, arithmetische Logikeinheiten (ALUs) und Computergedächtnis durch vollständige Mikroprozessoren ein, die mehr als 100 Millionen Tore enthalten können. Zusammengesetzte Logiktore und-oder-Umgekehrtes (AOI, UND/ODER/INVERS-Schaltungen) und oder-und-Umgekehrtes (OAI, ODER/UND/INVERS-Schaltungen) werden oft in Rundgangsentwurf (Verknüpfungsnetzen) verwendet, weil ihr Bau, der MOSFETs verwendet, einfacher und effizienter als die Summe der einzelnen Tore ist.

Neue Entwicklungen verwenden nichtflüchtige bipolare Widerstandsschalter und antiseriell verschaltete bipolare Widerstandsschalter, komplementäre Widerstandsschalter, als Logiktore zur Ausführung einer Booleschen Funktion. Dabei wird die Ausgangsvariable eines Logiktores aus einem bipolaren Widerstandsschalter mit einem konstanten niedrigen Lesestrom ("Level Read") ausgelesen. Die Ausgangsvariable eines Logiktores aus einem komplementären Widerstandsschalters wird mit einem großen Lesestrompuls ("Spike read") ausgelesen. Mit einem herkömmlichen komplementären Widerstandsschalter wurden bisher 14 der 16 Booleschen Funktionen realisiert [E Linn u.a: Beyond von Neumann - logic operations in passive crossbar arrays alongside memory operations. Nanotechnology 23, 2012, S. 305205-1 bis 6]. Für p OR q, p NAND q, p NOR q und p AND q benötigt ein komplementärer Widerstandsschalter 3 Zyklusfunktionen. XNOR und XOR konnte bisher nicht mit einem komplementären Widerstandsschalter realisiert werden. Außerdem müssen nach jedem "Spike read" die 3 Zyklusfunktionen wieder durchlaufen werden. Des Weiteren schreibt die erste Zyklusfunktion zur Realisierung der verschiedenen Booleschen Funktionen entweder einen Zustand geringen Widerstandes (LRS, engl. low resistance state) oder einen Zustand hohen Widerstandes (HRS, engl. high resistance state). Es ist nicht möglich, im ersten Zyklus den Zustand für alle Logiktore einheitlich auf HRS oder auf LRS zu setzen. Die mikrophysikalische Ursache der resistiven Schaltprozesse ist für Widerstandsspeicherbauelemente mit verschiedenen Materialien verschieden.

Das resistive Schalten in Widerstandsspeicherbauelementen aus Cu-dotierten Ge_{0.3}Se_{0.7} Festkörperelektrolyten beruht auf dem elektrochemischen Wachstum und auf der elektrochemischen Auflösung metallischer, fadenförmiger Pfade (Filamentbildung), die sich in dem Festkörperelektrolyten zwischen einer oxidierbaren Elektrode (Cu) und einer inerten Elektrode (Pt) beim Anlegen einer Spannung ausbilden. Widerstandsspeicherbauelemente mit Filamentbildung können zwischen zwei Widerstandszuständen schalten.

Die Leistungsmerkmale von Widerstandsspeicherbauelementen sind die Nichtflüchtigkeit, der Betrieb bei niedrigen Spannungen und Strömen, ein großes Verhältnis R_{off}/Rₒₙ zwischen den Widerständen im "abgeschalteten" (R_{off}) und im "eingeschalteten" (Rₒₙ) Zustand, schnelle Schaltzeiten und lange Standzeiten. Nichtflüchtiges resistives Multilevel-Schalten wird in Widerstandsspeicherbauelementen mit Filamentbildung aufgrund der stochastischen Natur der Filamentbildung nicht möglich sein. Phase Change Materialien ändern ihre Phase oberhalb der Phasenumwandlungstemperatur von kristallin zu amorph und werden derzeit hauptsächlich zur Latentwärmespeicherung sowie zur Datenspeicherung verwendet. Problematisch sind die zu verwendenden sehr hohen Stromdichten, welche zu Elektromigration in den Metallbahnen (z.B. in der Metallisierung) führen können. Außerdem müssen diese Phase Change Materialien thermisch isoliert werden. Beispielsweise betragen die Stromdichten zum Erreichen der Phasenumwandlungstemperatur von 600°C in GeSbTe mehr als 10⁷ A/cm² [Lee, Benjamin C. u.a.: Phase Change-Technology and the Future of Main Memory. 36th Annual International Symposium on Computer Architecture Location: Austin, TX 2009, IEEE MICRO 30 (2010), S.: 131-141.].

Gemäß verschiedenen Ausführungsformen ist die Herstellung eines komplementären Widerstandsschalters beschrieben, wobei mittels des komplementären Widerstandsschalters jede der sechszehn Booleschen Grundfunktionen nichtflüchtig geschrieben werden kann und dessen Zustand mit einem (z.B. konstanten) niedrigen Lesestrom ("Level Read") ausgelesen werden kann. Weiterhin kann für das Programmieren der Logikfunktionen eine feste Sequenzfolge aus Initialisierungs-Spannung und Schreibspannung verwendet werden.

Gemäß verschiedenen Ausführungsformen werden zwei antiseriell verschaltete passive Kondensatorstrukturen verwendet, aus jeweils einem piezo- oder ferroelektrischen Material mit lokal unterschiedlichen Leitfähigkeiten mit einer vom elektrischen Feld abhängigen Phase, mit metallisch leitenden Oberflächen- und zugehörigen Rückseitenkontakten, und der Einstellung eines lokal unterschiedlichen Spannungsabfalls in dem piezo- oder ferroelektrischen Material.

Piezo- oder ferroelektrische Materialien (PF-Material) können verschiedene Phasen besitzen. Verschiedene Phasen unterscheiden sich bezüglich ihrer Kristallstruktur, ihrer elektronischen Bandstruktur und ihrer Bandlücke sowie bezüglich ihrer piezo- oder ferroelektrischen Eigenschaften und ihrer spontanen Polarisationsladungen. Für jeden Verspannungszustand des piezo- oder ferroelektrischen Materials gibt es eine Phase minimaler Energie. Der Verspannungszustand in piezo- oder ferroelektrischen Materialien wird aufgrund des piezoelektrischen Effektes, d.h. der Änderung des Volumens in einem elektrischen Feld, über ein elektrisches Feld durch Anlegen einer elektrischen Spannung gesteuert.

Beim Anlegen einer Spannung zwischen gegenüberliegenden Kontakten fällt aufgrund der unterschiedlichen lokalen Leitfähigkeit im PF-Material in den Bereichen geringster Leitfähigkeit der Großteil der Spannung ab, so dass sich in den Bereichen geringer Leitfähigkeit ein sehr großes elektrisches Feld ausbilden kann.

Im Folgenden wird eine Spannungsquelle (z.B. eine Schreibspannungsquelle) zum Bereitstellen einer Schreibspannung als Hochspannungsquelle bezeichnet. Um die komplementären Widerstandsschalter (z.B. aus BiFeO₃) nicht zu zerstören, sollte die Spannung aus der Hochspannungsquelle am komplementären Widerstandschalter 20 V nicht überschreiten. Die Spannungsquelle zum Bereitstellen der Lesespannung am komplementären Widerstandsschalter wird als Niedrigspannungsquelle bezeichnet und die Lesespannungen am komplementären Widerstandsschalter ist so gering, dass der Zustand (des Widerstandsschalters) beim Lesen nicht geändert wird, und so groß, dass ein detektierbarer Lesestrom erzeugt wird. Typische Werte für die Lesespannung (für BiFeO₃) liegen bei ca. 2 V. Somit kann die Schreibspannung größer als 2 V sein.

Das piezo- oder ferroelektrische Material ändert beim Überschreiten einer kritischen Feldstärke (im inneren des Materials) seine Phase. Zum Beispiel beträgt die kritische elektrische Feldstärke in BiFeO₃ 176 MV/m [Pice Chen u.a.: Nonlinearity in the high-electric-field piezoelectricity of epitaxial BiFeO3 on SrTiO3. Appl. Phys. Lett. 100, 062906 (2012)]. Beim Überschreiten dieser (kritischen) Feldstärke ändert BiFeO₃ seine Struktur von rhomboedrisch zu tetragonal, seine Bandlücke von 2,1 eV zu 2,7 eV und seine spontane Polarisationsladung von 100 µC/cm² zu 150 µC/cm². Durch hohe elektrische Felder hervorgerufene Verspannungen führen auch in anderen piezo- und ferroelektrischen Materialien zu einer Strukturänderung. Das wurde auch in anderen Dünnschichten und Nanostrukturen beobachtet, z.B. in SrTiO₃-Dünnschichten (bzw. Schichten oder Dünnschichten) [K. C. Park u.a.: Electric field dependence of ferroelectric phase transition in epitaxial SrTiO3 films on SrRuO3 and La0.5Sr0.5CoO3. Appl. Phys. Lett. 77, 435 (2000)] und in KNO₃ [M.K. Teng u.a.: Pressure induced ferroelectric phase transition in potassium nitrate. Solid State Communication 9 (1971) 465].

Eine Dünnschicht kann beispielsweise eine Schichtdicke von kleiner als 20 µm aufweisen, z.B. kleiner als 10 µm, kleiner als 5 µm, z.B. kleiner als 2 µm.

Es werden spontane Polarisationsladungen (z.B. eine makroskopische Ladungsverteilung) an den Strukturgrenzflächen zwischen dem piezo- oder ferroelektrischen Material verschiedener Phasen lokalisiert. Die Nichtflüchtigkeit dieser Lokalisierung hängt von dem Band-Alignment, das heißt von der stufenförmigen Änderung der elektronischen Bandstruktur an der Strukturgrenzfläche ab. Die Flächendichte der an der Strukturgrenzfläche lokalisierten spontanen Polarisationsladung hängt von dem Unterschied der spontanen Polarisationsladung in den verschiedenen Phasen ab.

Für die nichtflüchtige Lokalisierung der spontanen Polarisationsladung an der Strukturgrenzfläche ist es sinnvoll, dass die spontanen Polarisationsladungen lateral im Bereich zwischen den Kontakten gehalten werden und nicht in andere Bereiche driften können. Sinnvoll ist die Verwendung eines polykristallinen piezo- oder ferroelektrischen Materials, wobei die Kristallite kleiner als die laterale Ausdehnung der Oberflächenkontakte oder Gegenkontakte sind. Eine andere Möglichkeit ist die Verwendung eines strukturierten, epitaktischen piezo- oder ferroelektrischen Materials mit Strukturgrößen kleiner als die laterale Ausdehnung der Oberflächenkontakte oder Gegenkontakte.

Die Position der Grenzfläche und der Unterschied in den spontanen Polarisationsladungen zwischen verschiedenen Phasen des piezo- oder ferroelektrischen Materials bestimmt den Wert des Widerstandes des piezo- oder ferroelektrischen Materials zwischen gegenüberliegenden Kontakten und damit den nichtflüchtigen Zustand des Widerstandsspeicherbauelements, der durch eine von außen angelegte Spannung kontrolliert verändert werden (z.B. gesteuert oder geregelt werden).

Im Vergleich zu Phase Change Materialien, welche sehr hohe Stromdichten zur Änderung ihrer Phase oberhalb einer Phasenumwandlungstemperatur von kristallin zu amorph benötigen, ist der Stromfluss bei Phase Change Materialien, welche ihre Phase oberhalb einer kritischen elektrischen Feldstärke ändern (PF-Materialien), gering und hängt nur davon ab, wohin die Strukturgrenze zwischen den verschiedenen piezo- oder ferroelektrischen Phasen zwischen zwei gegenüberliegenden Kontakten verschoben wird und wie groß der Unterschied der spontanen Polarisationsladung der beiden verschiedenen piezo- oder ferroelektrischen Phasen ist. Der Stromfluss ist außerdem durch die Zeit bestimmt, welche benötigt wird, um den Lokalisierungsort der spontanen Polarisationsladung durch Anlegen einer äußeren Spannung zu ändern.

Durch den geringen Stromfluss (Verschiebestrom zur Änderung der Position der spontanen Polarisationsladung) kann gleichzeitig die Elektromigration in den Metallbahnen der verwendeten Kontakte vermieden werden. Außerdem bedarf es keiner gleichzeitigen thermischen Isolation der Phase Change Materialien, welche ihre Phase oberhalb einer kritischen elektrischen Feldstärke oder Temperatur ändern.

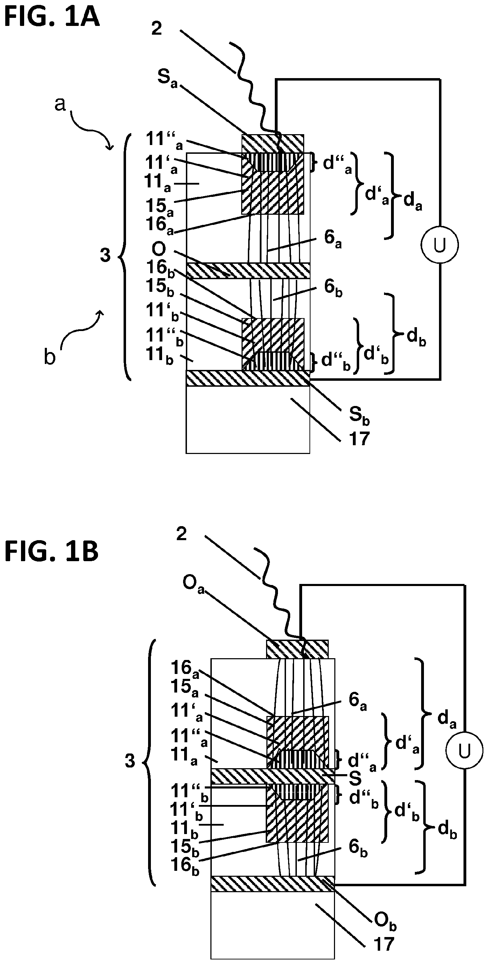

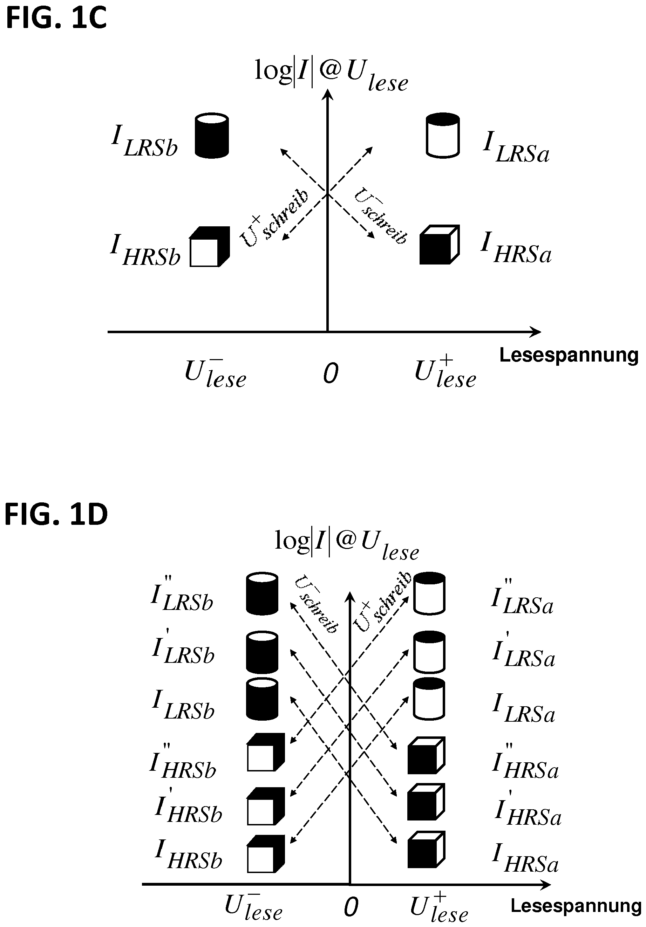

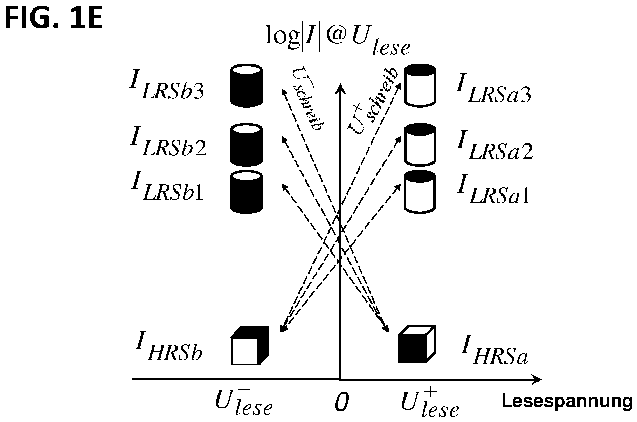

Fig. 1A und 1B zeigen jeweils einen Aufbau eines komplementären Widerstandsschalters (Memristors) für die Integration in nichtflüchtige Logikbauelemente. Fig. 1C zeigt schematisch das Schreiben des Zustandspaares {LRSa, HRSb} mit einem positiven Schreibpuls und des Zustandspaares {HRSa, LRSb} mit einem negativen Schreibpuls. Fig. 1D zeigt schematisch das Schreiben der Zustandspaare {LRSa, HRSb} mit einem positiven Schreibpuls und des Zustandspaares {HRSa, LRSb} mit einem negativen Schreibpuls im unmodifizierten Material, im modifizierten Material (') und im mehrfach modifizierten Material ("). Fig. 1E zeigt schematisch das Schreiben der Zustandspaare {LRSai, HRSb} mit einem positiven Schreibpuls und der Zustandspaare {HRSa, LRSbi} mit einem negativen Schreibpuls.

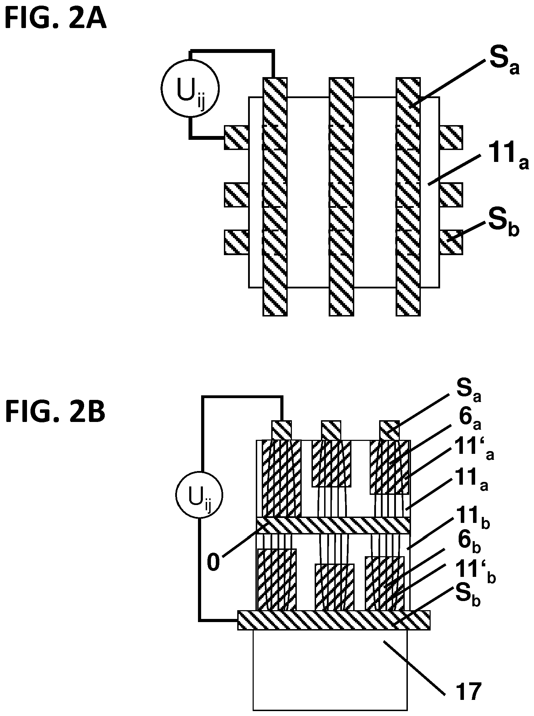

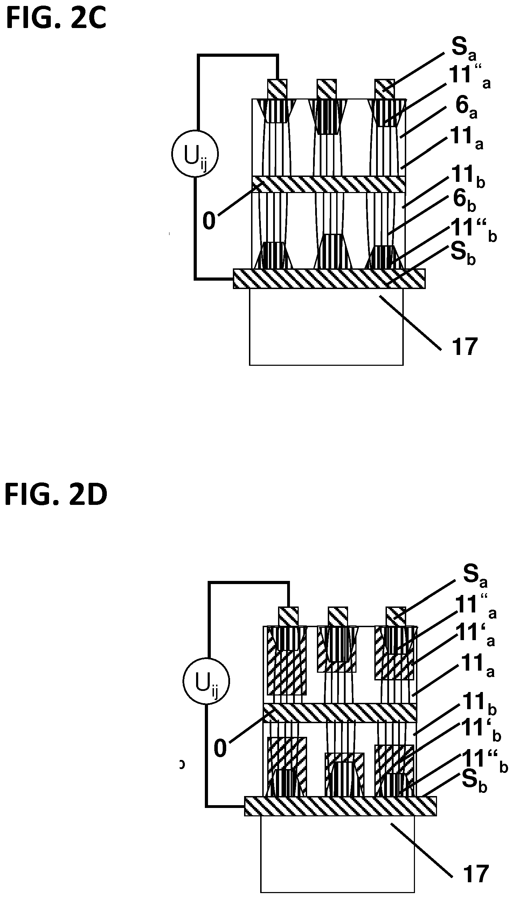

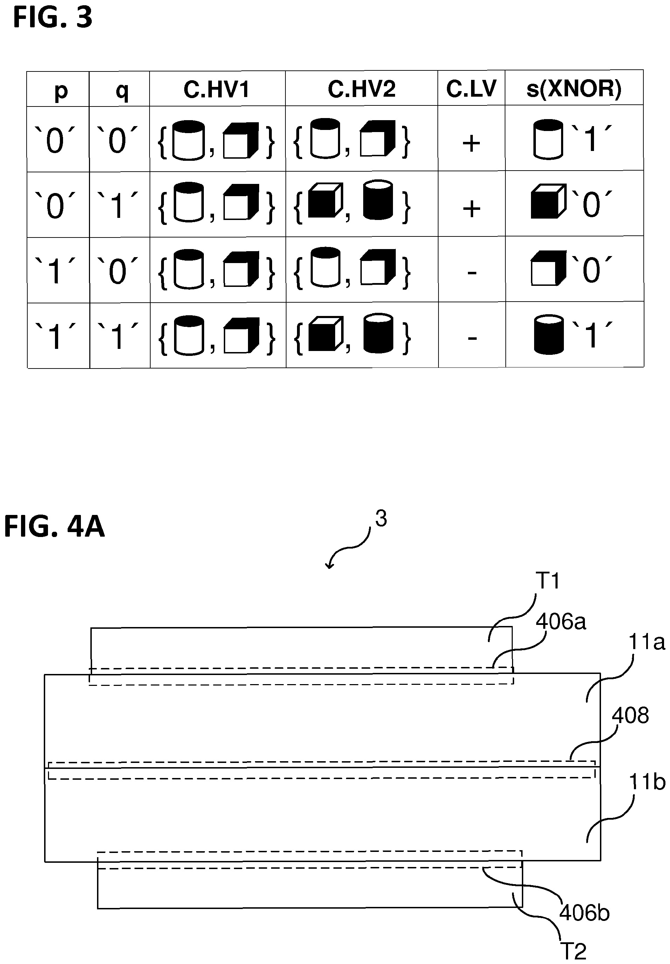

Fig. 2A, Fig. 2B, Fig. 2C und Fig. 2D zeigen jeweils den Aufbau eines Arrays mit komplementären Widerstandsschaltern, welche modifizierte Bereiche 11'(Fig. 2B), modifizierte Bereiche 11'' (Fig. 2C) und modifizierte Bereiche 11', 11'' (Fig. 2D) enthalten, von oben (Fig. 2A) und von der Seite (Fig. 2B, Fig. 2C und Fig. 2d). Fig. 3 zeigt schematisch ein Zwei-Schritt-Verfahren zur Programmierung der komplementären Widerstandsschalter zur Verwendung in integrierten, nichtflüchtigen Logikbauelementen am Beispiel der Booleschen Funktion XNOR. Dabei können p und q die zwei Variablen einer Booleschen Funktion zweier Variablen sein.

Fig. 1A zeigt den Aufbau eines komplementären Widerstandsschalters für die Integration in nichtflüchtige Logikbauelemente 3, gemäß verschiedenen Ausführungsformen. Der komplementäre Widerstandsschalter 3 besteht aus zwei antiseriell gegeneinander geschalteten bipolaren Widerstandsschaltern a, b mit gemeinsamem Oberflächenkontakt O (wie in Fig. 1A veranschaulicht ist) oder mit gemeinsamem Rückseitenkontakt **S** (wie in Fig. 1B veranschaulicht ist) auf einem Trägermaterial (oder Substrat) 17. Anschaulich können zwei (z.B. bipolare) Widerstandsschalter zu einem komplementären Widerstandsschalters kombiniert werden. Dabei können die beiden gerichteten Bauelemente a, b (antiseriell, engl. back-to-back) in Reihe verschaltet sein oder werden.

Der bipolare (der gerichtete) Widerstandsschalter a, b kann jeweils eine piezo- oder ferroelektrische Schicht a, b aufweisen, wobei die erste piezo- oder ferroelektrische Schicht a ein piezo- oder ferroelektrisches Material 11a aufweisen kann und die zweite piezo- oder ferroelektrische Schicht b ein piezo- oder ferroelektrisches Material 11b. Ferner können die beiden piezo- oder ferroelektrischen Schichten a, b aneinander angrenzen, mit körperlichem Kontakt O (in Fig. 1A) und S (in Fig. 1B). Der körperliche Kontakt kann auch ein Kontaktbereich O oder S sein. Anschaulich kann der körperliche Kontakt O oder S zwischen den beiden piezo- oder ferroelektrischen Schichten a, b dotiertes piezo- oder ferroelektrisches Material aufweisen. Jede der beiden ferroelektrischen Schichten a, b (als gerichtete Widerstandselemente) kann eine Vorderseite und eine Rückseite aufweisen, welches die Bezeichnungen Vorderseitenkontakt und Rückseitenkontakt festlegen kann.

Gemäß verschiedenen Ausführungsformen können die bipolaren Widerstandsschalter jeweils eine piezo- oder ferroelektrischen Dünnschicht aufweisen mit einem Rückseitenkontakt O und einem gegenüberliegenden Vorderseitenkontakt Sₐ und S_{b} (in Fig. 1A)) oder mit einem Vorderseitenkontakt S und einem gegenüberliegenden Rückseitenkontakt Oₐ und O_{b} (in Fig. 1B)). An jedem Widerstandsschalter ist einer der beiden Kontakte als gleichrichtender Kontakt und einer der beiden Kontakte als nichtgleichrichtender Kontakt ausgebildet. Im Folgenden sind der gleichrichtende Kontakt (z.B. der Schottky-Kontakt) der Einfachheit halber mit S und der nichtgleichrichtenden Kontakt (z.B. der ohmsche Kontakt) mit O bezeichnet. Alle Bezugszeichen in der piezo- oder ferroelektrischen Dünnschicht 11_{b}, 11_{b}', 11_{b}" auf dem Trägermaterial 17 (dem zweiten piezo- oder ferroelektrischen Dünnschicht) tragen den zusätzlichen Index b und alle Bezugszeichen in der darüber liegenden piezo- oder ferroelektrischen Dünnschicht 11ₐ, 11ₐ', 11ₐ" (der ersten piezo- oder ferroelektrischen Dünnschicht) tragen den zusätzlichen Index a.

Die Bereiche 11, 11' und 11'' (jeweils für a und b) in dem piezo- oder ferroelektrischen Material besitzen aufgrund der Modifikation während des Schichtwachstums oder aufgrund einer Modifikation mittels Ionenstrahlen, Plasmastrahlen, Laserstrahlen, Wärmestrahlen und/oder Elektronenstrahlen 2 eine unterschiedliche Ausdehnung d, d' und d" und unterschiedliche elektrische Leitfähigkeiten. Anschaulich sind die Materialien in den beiden piezo- oder ferroelektrischen Schichten a, b unterschiedlich, z.B. bereits aufgrund des Schichtwachstums der Schichten a, b während der Schichtherstellung oder beispielsweise nach einer nachträglichen Modifikation der Schichten a, b oder eine gleichzeitigen Modifikation während der Schichtherstellung.

Beispielsweise kann die erste Schicht eine erste Dotierung aufweisen, welche unterschiedlich zu einer zweiten Dotierung der zweiten Schicht sein kann. Gemäß verschiedenen Ausführungsformen können die Bereiche 11, 11' und 11'' (jeweils für a und b) jeweils lediglich veranschaulichen, dass die Schichten a, b unterschiedliche physikalische oder chemische Eigenschaften (z.B. Dotierung, Dotierungsprofil, strukturelle Phase, räumliche Verteilung der strukturellen Phasen usw.) aufweisen können.

Empfehlenswert kann es sein, die piezo- oder ferroelektrische Schicht a, b (z.B. die erste und/oder die zweite piezo- oder ferroelektrische Schicht) vorzugsweise großflächig mittels Laser- und/oder Ionenstrahlen zu modifizieren und die Bereiche 11' (z.B. die ersten Bereiche 11'a oder 11'b der piezo- oder ferroelektrische Schicht a, b) vorzugweise lokal mittels Ionen- und/oder Elektronenstrahlen zu modifizieren. Ferner kann die piezo- oder ferroelektrische Schicht a, b (z.B. die erste und/oder die zweite piezo- oder ferroelektrische Schicht) in den weiteren Bereichen 11'' (z.B. in den zweiten Bereiche 11"a oder 11"b) vorzugweise lokal mittels Ionen- und/oder Elektronenstrahlen modifiziert werden. Dabei kann das Modifizieren eine Änderung der elektrischen Leitfähigkeit des modifizierten Materials verursachen. Ferner kann mittels einer Dotierung auch beispielsweise die Struktur des ferroelektrischen oder piezoelektrischen Materials verändert werden, z.B. die Kristallstruktur oder die strukturelle Phase für ein Material mit mehr als eine mögliche Kristallstruktur.

Um eine sinnvolle Ausdehnung der elektrischen Felder 6 in den Bereichen 11, 11', 11" zu erreichen, kann es empfehlenswert sein, dass das piezo- oder ferroelektrische Material der Schicht a, b eine elektrische Restleitfähigkeit aufweist und die Konzentration der freien Ladungsträger im Bereich von ca. 10¹⁴ bis ca. 10¹⁹ cm⁻³, vorzugsweise im Bereich von 10¹⁵ bis 10¹⁸ cm⁻³, liegt, und/oder dass die elektrische Restleitfähigkeit der modifizierten Bereiche 11' und 11'' im Vergleich zur elektrischen Restleitfähigkeit der Schicht (z.B. im Bereich 11**)** geändert ist und die Konzentration der freien Ladungsträger der modifizierten Bereiche 11' und 11" zwischen ca. 10¹² und ca. 10²³ cm⁻³ variieren sollte.

Für eine Schicht 11 aus BiFeO₃ kann es besonders sinnvoll sein, dass die Konzentration der freien Ladungsträger vor der Modifikation in einem Bereich von 10¹⁵ bis 10¹⁸ cm⁻³ liegt und die Modifikation mittels Laserbestrahlung und Ionenbestrahlung erfolgt. Der komplementäre Widerstandsschalter kann in einem integrierten Logikbauelement 3 verwendet werden. Vorzugsweise ist die elektrische Leitfähigkeit in den Bereichen 11'' und 11' nahe dem Vorderseitenkontakt S und/oder nahe dem Rückseitenkontakt O am geringsten, so dass eine von außen angelegte Spannung U hauptsächlich in den Bereichen 11'' und 11' abfällt und beim Überschreiten einer kritischen elektrischen Feldstärke bzw. der Schwellwert-Spannung Uₖᵣᵢₜ einen strukturellen Phasenübergang verursacht. Die Strukturgrenze 16 trennt die Bereiche hoher Leitfähigkeit in einer ohne Verspannung stabilen piezo- oder ferroelektrischen Phase von den Bereichen geringer Leitfähigkeit in einer unter Verspannung stabilen piezo- oder ferroelektrischen Phase. Die Unterschiede in der elektronischen Bandstruktur und in der spontanen Polarisationsladung beider Phasen an der Strukturgrenze 16 verursachen eine stufenförmige Änderung des Leitungsbandes und des Valenzbandes des piezo- oder ferroelektrischen Materials. Die stufenförmige Änderung des Leitungsbandes und des Valenzbandes verursacht die Lokalisation von spontaner Polarisationsladung an der Strukturgrenze 16. Beim Abschalten der Spannung U kann die lokalisierte Polarisationsladung aufgrund der stufenförmigen Änderung des Leitungsbandes und des Valenzbandes nicht von der Strukturgrenze 16 wegdriften oder wegdiffundieren. Eine von außen angelegte Spannung U verschiebt die an der Strukturgrenze 16 lokalisierte Polarisationsladung und damit die Strukturgrenze selber.

Der Widerstand der bipolaren Widerstandsspeicher hängt von der jeweiligen Position der Strukturgrenze 16 ab und ist groß, wenn die Strukturgrenze weit in das piezo- oder ferroelektrische Material verschoben ist. In diesem Fall ist der bipolare Widerstandsspeicher im HRS (engl. "high resistance state"). Liegt die Strukturgrenze nahe an einen der beiden gegenüberliegenden Kontakte, ist der bipolare Widerstandsspeicher im LRS (engl. "low resistance state").

Gemäß verschiedenen Ausführungsformen kann es ausreichend sein, dass jeweils die Widerstände (bzw. die mindestens zwei Widerstands-Zustände, z.B. HRS und LRS) der beiden Schichten verschieden voneinander sind, bzw. beim Auslesen der Widerstände mittels positiver und negativer Spannung von einander unterscheidbar sind.

Fig. 1C zeigt den Lesestrom I auf der logarithmischen Skale beim Anlegen der Lesespannung Uₗₑₛₑ an den Vorderseitenkontakt Sₐ in Abhängigkeit von der vorher an den Vorderseitenkontakt Sₐ des in Fig. 1A dargestellten nichtflüchtigen Logikbauelementes 3 angelegten Schreibspannung U_{schreib}. Der Vorderseitenkontakt S_{b} kann beispielsweise geerdet sein oder auf einem festgelegten elektrischen Potential liegen.

In einem bipolaren Widerstandspeicher muss die Schreibspannung U_{schreib} größer als die Schwellwertspannung Uₖᵣᵢₜ sein und kann Werte zwischen Uₘᵢₙ und Uₘₐₓ annehmen. Ist die Schreibspannung kleiner als Uₘᵢₙ, dann wird der Widerstandswert eines bipolaren Widerstandsspeichers beim Anlegen dieser kleinen Schreibspannung U_{schreib} nicht geändert. Ist die Schreibspannung U_{schreib} größer als Uₘₐₓ, dann fließt beim Schreiben durch das piezo- oder ferroelektrische Material ein zu großer Schreibstrom I_{schreib} und das piezo- oder ferroelektrische Material wird zumindest zwischen den beiden Kontakten, an denen eine zu große Spannung U angelegt wurde, zerstört. Für jede Schreibspannung U_{schreib} zwischen Uₘᵢₙ und Uₘₐₓ wird ein kleiner (geringer) Widerstand LRSi im bipolaren Widerstandsspeicher eingestellt. Beim Anlegen von Uₘᵢₙ beträgt der kleine Widerstand R_{LRS1} und beim Anlegen von Uₘₐₓ beträgt der kleine Widerstand R_{LRSn}.

Beispielsweise kann sich jeweils die Festlegung des kleinen Widerstands R_{LRSi} und des großen Widerstands R_{HRSi} mit i von 1 bis n als Zählindex aus der Relation der beiden Widerstände zueinander ergeben. Anschaulich kann sich zumindest ein Bereich der ferroelektrischen Schichten in einem von mehreren Widerstandszuständen befinden, wobei dabei einer der Widerstandszustände einen kleineren elektrischen Widerstand (LRS) aufweisen kann und ein anderer Widerstandszustand einen größeren elektrischen Widerstand (HRS) aufweisen kann.

Wird an den komplementären Widerstandsschalter (vgl. Fig. 1A) eine positive Schreibspannung U_{schreib} angelegt (z.B. an den Kontakt Sa eine positivere Spannung als an den Kontakt Sb), wird in den bipolaren Widerstandsschalter b der Zustand HRSn und im darüber liegenden bipolaren Widerstandsschalter a der Zustand LRSa geschrieben. Diese beiden Zustände können als Zustandspaar {LRSa, HRSb} zusammengefasst werden (vgl. Fig. 1C). Wird an den komplementären Widerstandsschalter (vgl. Fig. 1A) eine negative Schreibspannung U_{schreib} angelegt (z.B. an den Kontakt Sb eine positivere Spannung als an den Kontakt Sa), wird in den bipolaren Widerstandsschalter b der Zustand L_{RSb} und im darüber liegenden bipolaren Widerstandsschalter a der Zustand HRSa geschrieben. Diese beiden Zustände können als Zustandspaar {HRSa, LRSb} zusammengefasst werden (vgl. Fig. 1C) .

Das Vorzeichen des Lesepulses Uₗₑₛₑ definiert, welcher Zustand des geschriebenen Zustandspaares {LRSa, HRSb} oder des geschriebenen Zustandspaares {HRSa, LRSb} gelesen wird. Alle Zustände des komplementären Widerstandsschalters 3 können im "Level read"-Schema gelesen werden. Der Vorteil ist, dass im Gegensatz zum "Spike read"-Schema im "Level read"-Schema die Lesespannung viel kleiner als die Schreibspannung ist. Dadurch werden beim Lesen die Zustandspaare nicht geändert und das Neuschreiben von Zustandspaaren entfällt. Wird an einen komplementären Widerstandschalter 3 im Zustand {LRSa, HRSb} eine positive (negative) Lesespannung Uₗₑₛₑ⁺(Uₗₑₛₑ⁻) angelegt, beträgt der Lesestrom I_{LRSa} (I_{HRSb}). • Wird an einen komplementären Widerstandschalter 3 im Zustand {HRSa, LRSb} eine positive (negative) Lesespannung Uₗₑₛₑ⁺(Uₗₑₛₑ⁻) angelegt, beträgt der Lesestrom I_{HRSa} (I_{LRSb}). Fig. 1D zeigt schematisch das Schreiben der Zustandspaare {LRSa, HRSb} mit einem positiven Schreibpuls U_{schreib}⁺ und des Zustandspaares {HRSa, LRSb} mit einem negativen Schreibpuls U_{schreib}⁻ im unmodifizierten Material, im modifizierten Material (11') und im mehrfach modifizierten Material (11").

Wird an einen komplementären Widerstandschalter 3 im Zustand {LRSa, HRSb} eine positive (negative) Lesespannung Uₗₑₛₑ⁺ (Uₗₑₛₑ⁻) angelegt, beträgt der Lesestrom I_{LRSa} (I_{HRSb}). Wird an einen komplementären Widerstandschalter 3 im Zustand {HRSa, LRSb} eine positive (negative) Lesespannung Uₗₑₛₑ⁺(Uₗₑₛₑ⁻) angelegt, beträgt der Lesestrom I_{HRsa} (I_{LRSb}) (vgl. Fig. 1D). Wird an einen komplementären Widerstandschalter 3 im Zustand {LRSa', HRSb'} eine positive (negative) Lesespannung Uₗₑₛₑ⁺(Uₗₑₛₑ⁻) angelegt, beträgt der Lesestrom I_{LRSa}' (I_{HRSb'}). Wird an einen komplementären Widerstandschalter 3 im Zustand {HRSa', LRSb'} eine positive (negative) Lesespannung Uₗₑₛₑ⁺(Uₗₑₛₑ⁻) angelegt, beträgt der Lesestrom I_{HRSa}' (I_{LRSb}') (vgl. Fig. 1D).

Wird an einen komplementären Widerstandschalter 3 im Zustand {LRSa", HRSb"} eine positive (negative) Lesespannung Uₗₑₛₑ⁺(Uₗₑₛₑ⁻) angelegt, beträgt der Lesestrom I_{LRSa}" (I_{HRSb}"). Wird komplementären Widerstandschalter 3 im Zustand {HRSa", LRSb"} eine positive (negative) Lesespannung Uₗₑₛₑ⁺(Uₗₑₛₑ⁻) angelegt, beträgt der Lesestrom I_{HRSa}" (I_{LRSb}") (vgl. Fig. 1D).

Fig. 1E zeigt schematisch das Schreiben der Zustandspaare {LRSai, HRSb} mit einem positiven Schreibpuls und der Zustandspaare {HRSa, LRSbi} mit einem negativen Schreibpuls. Der Schreibpuls ist größer als Uₘᵢₙ und kleiner als Uₘₐₓ. Beim Anlegen von Uₘᵢₙ beträgt der kleine Widerstand R_{LRS1} und beim Anlegen von Uₘₐₓ beträgt der kleine Widerstand R_{LRSn}.

Wird an einen komplementären Widerstandschalter 3 im Zustand {LRSa1, HRSb} eine positive (negative) Lesespannung Uₗₑₛₑ⁺(Uₗₑₛₑ⁻) angelegt, beträgt der Lesestrom I_{LRSa1} ( I_{HRSb}). Wird an einen komplementären Widerstandschalter 3 im Zustand {HRSa, LRSb1} eine positive (negative) Lesespannung Uₗₑₛₑ⁺(Uₗₑₛₑ⁻) angelegt, beträgt der Lesestrom I_{HRsa} (I_{LRSb1}).

Wird an einen komplementären Widerstandschalter 3 im Zustand {LRSa2, HRSb} eine positive (negative) Lesespannung Uₗₑₛₑ⁺(Uₗₑₛₑ⁻) angelegt, beträgt der Lesestrom I_{LRSa2} (I_{HRSb}). Wird an einen komplementären Widerstandschalter 3 im Zustand {HRSa, LRSb2} eine positive (negative) Lesespannung Uₗₑₛₑ⁺(Uₗₑₛₑ⁻) angelegt, beträgt der Lesestrom I_{HRSa} (I_{LRSb2}) (vgl. Fig. 1E).

Wird an einen komplementären Widerstandschalter 3 im Zustand {LRSa3, HRSb} eine positive (negative) Lesespannung Uₗₑₛₑ⁺(Uₗₑₛₑ⁻) angelegt, beträgt der Lesestrom I_{LRSa3} (I_{HRSb}). Wird an einen komplementären Widerstandschalter 3 im Zustand {HRSa, LRSb3} eine positive (negative) Lesespannung Uₗₑₛₑ⁺(Uₗₑₛₑ⁻) angelegt, beträgt der Lesestrom I_{HRSa} (I_{LRSb3}) (vgl. Fig. 1E).

Fig. 2A zeigt den Aufbau eines Arrays mit komplementären Widerstandsschaltern (wie in Fig. 1A dargestellt), welche modifizierte Bereiche 11' (Fig. 2B), 11" (Fig. 2C) und 11', 11" (Fig. 2D) enthalten, in der Draufsicht (Fig. 2A) und in der Seitenansicht (Fig. 2B bis 2D). Der komplementäre Widerstandsschalter 3 ist so strukturiert, dass sich zwischen zwei Kontakten Sₐ(m) und S_{b}(n), bei angelegter Spannung U(m,n) an die beiden Kontakte zwischen dem Kontakt Sₐ(m) und dem Kontakt O ein elektrisches Feld 6ₐ und zwischen dem Kontakt O und dem Kontakt S_{b}(n) ein elektrisches Feld 6_{b} ausbildet und ein Strom fließen kann.

Aufgrund der quer zueinander verlaufenden Metallisierungen Sₐ(m) und S_{b}(n), wobei m und n die Zählindizes des zweidimensionalen Arrays sein können, kann jeder der mehreren Widerstandsschalter einzeln angesteuert werden oder mehrere bzw. alle Widerstandsschalter können gemeinsam geschaltet werden.

Bei einer vorgegebenen Lesespannung Uₗₑₛₑ hängt der Lesestrom Iₗₑₛₑ im Kreuzungspunkt zweier Kontakte (als im Array bei m, n) von der Modifikation der bipolaren Widerstandsschalter a und b des komplementären Widerstandsschalters 3 im Bereich der Kreuzungspunkte der beiden Kontakte ab. Der Lesestrom steigt mit zunehmender lokalen Modifikation und es gilt |I_{LRS}"|>|I_{LRS}'|>|I_{LRS}| und |I_{HRS}"|>|I_{HRS}'|>|I_{HRS}|. Die Schwellwert-Spannung Uₖᵣᵢₜ der einzelnen lokal modifizierten Bereiche 11' (Fig. 2B) oder 11" (Fig. 2C) oder beider Bereiche 11' und 11" (Fig. 2D) kann mittels Modifizierung eingestellt werden. Das Array (Fig. 2A) kann als Hardware für programmierbare Logik (vgl. Fig. 3) verwendet werden, wobei jeder Kreuzungspunkt des Arrays mit komplementären Widerstandsschaltern zur Programmierung einer einzelnen Booleschen Funktion verwendet werden kann. Der Kontakt Sₐ(m) stellt das Terminal T1 und der Kontakt S_{b}(n) das Terminal T2 für die beiden Eingabeparameter p und q im zweiten Zyklus zur Programmierung der Booleschen Funktion dar. Der Lesestrom Iₗₑₛₑ(m,n) nach Anlegen einer Schreibspannung U_{schreib}(m,n) wird als Ausgabeparameter der programmierten Booleschen Funktion verwendet. Die parallele und/oder serielle Ausführung von Booleschen Funktionen wird durch entsprechende Verknüpfung jeweils benachbarter Kreuzungspunkte erreicht. Zeitlich veränderliche Eingabeparameter können als zeitlich veränderliche Schreibspannung U_{schreib} im Bereich zwischen Uₘᵢₙ und Uₘₐₓ zur zeitlich veränderlichen Programmierung des Ausgabeparameters verwendet werden.

Fig. 3 zeigt schematisch ein Zwei-Schritt-Verfahren (1. Zyklusschritt C.HV1 und 2. Zyklusschritt C.HV2) zur Programmierung des komplementären Widerstandsschalters 3 (vgl. Fig. 1A) zur Verwendung in integrierten, nichtflüchtigen Logikbauelementen am Beispiel der Booleschen Funktion XNOR. Der Kontakt Sₐ stellt das Terminal T1 und der Kontakt S_{b} das Terminal T2 dar. Im ersten Schritt des Zwei-Schritt-Verfahrens (C.HV1) wird an das Terminal T1 die Spannung 1 und an das Terminal T2 die Spannung 0 angelegt (wobei der Spannungswert jeweils die beiden Zustände für die Logik bereitstellt). Das entspricht einer positiven Schreibspannung U_{schreib}⁺, so dass sich der komplementäre Widerstandsschalter 3 im Zustand {LRSa, HRSb} befindet.

Anschaulich gesehen wird der komplementäre Widerstandsschalter im ersten Schritt des Zwei-Schritt-Verfahrens unabhängig von der zu verarbeitenden Kombination der Eingabeparameter (p,q) in einen Ausgangszustand geschaltet.

Im zweiten Schritt des Zwei-Schritt-Verfahrens (C.HV2) wird an das Terminal T1 die Spannung 0 und an das Terminal T2 die Spannung q' angelegt (z.B. die Spannung, die den Wert 0 oder 1 des Eingabeparameters q repräsentiert). Für q gleich 0 entspricht das keinem Spannungsabfall zwischen T1 und T2 und der komplementäre Widerstandsschalter 3 bleibt im Zustand {LRSa, HRSb}. Wird an einen komplementären Widerstandschalter 3 im Zustand {LRSa, HRSb} eine positive (negative) Lesespannung Uₗₑₛₑ⁺(Uₗₑₛₑ⁻) angelegt, beträgt der Lesestrom I_{LRSa} (I_{HRSb}). Ist im zweiten Schritt des Zwei-Schritt-Verfahrens (C.HV2) q gleich 1, wird an das Terminal T2 die Spannung 1 angelegt. Das entspricht einer negativen Schreibspannung U_{schreib}⁻, so dass sich nach dem zweiten Schritt des Zwei-Schritt-Verfahrens (C.HV2) der komplementäre Widerstandsschalter 3 im Zustand {HRSa, LRSb} befindet. Wird an einen komplementären Widerstandschalter 3 im Zustand {HRSa, LRSb} eine positive (negative) Lesespannung Uₗₑₛₑ⁺(Uₗₑₛₑ⁻) angelegt, beträgt der Lesestrom I_{HRSa}(I_{LRSb}). Das Vorzeichen der Lesespannung wird über den Eingabeparameter p definiert. Ist p gleich 0, dann wird eine positive Lesespannung zwischen dem Terminal T1 und T2 angelegt. Ist p gleich 1, dann wird eine negative Lesespannung zwischen dem Terminal T1 und T2 angelegt.

Es versteht sich, dass die Spannung und Zustände auch invertiert verwendet werden können, oder dass mehr als zwei Zustände mit verschiedenen Widerstandswerten und Schreibspannungen verarbeitet werden können.

In den folgenden Tabellen Tab.1 bis Tab.16 ist die Realisierung der Logikoperationen gezeigt, wobei einmal die Werte bei positiver Initialisierung und einmal bei negativer Initialisierung des komplementären Widerstandsschalters dargestellt sind.

**• Tab. 1**

| **p XNOR q** | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | 0 | q | not p | p | 0 | 1 | 1 | q | not p | p |
| 0 | 0 | 1 | { , } | | 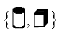 | | 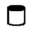 | | { , } | | 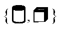 | | 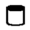 | |
| 1 | 0 | 0 | { , } | | 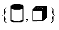 | | 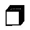 | | { , } | | 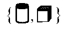 | | 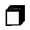 | |
| 0 | 1 | 0 | { , } | | 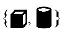 | | 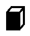 | | { , } | | 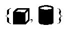 | | 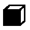 | |
| 1 | 1 | 1 | { , } | | 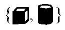 | | 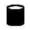 | | { , } | | 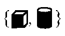 | | 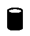 | |

**• Tab. 2**

| **p XOR q** | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | 0 | q | p | not p | 0 | 1 | 1 | q | p | not p |
| 0 | 0 | 0 | { , } | | 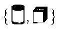 | | 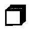 | | { , } | | 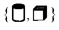 | | 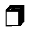 | |
| 1 | 0 | 1 | { , } | | 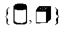 | | 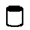 | | { , } | | 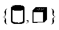 | | 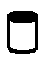 | |
| 0 | 1 | 1 | { , } | | 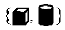 | | 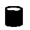 | | { , } | | 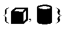 | | 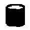 | |
| 1 | 1 | 0 | { , } | | 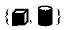 | | 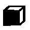 | | { , } | | 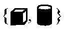 | | 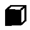 | |

**• Tab. 3**

| **TRUE** | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | 0 | p | not p | p | 0 | 1 | 1 | p | not p | p |
| 0 | 0 | 1 | { , } | | 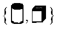 | | 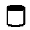 | | { , } | | 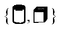 | | 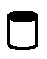 | |
| 1 | 0 | 1 | { , } | | 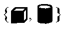 | | 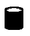 | | { , } | | 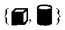 | | 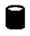 | |
| 0 | 1 | 1 | { , } | | 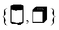 | | 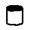 | | { , } | | 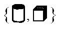 | | 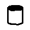 | |
| 1 | 1 | 1 | { , } | | 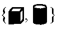 | | 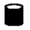 | | { , } | | 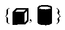 | | 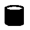 | |

**• Tab. 4**

| **FALSE** | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | 0 | p | p | not p | 0 | 1 | 1 | p | p | not p |
| 0 | 0 | 0 | { , } | | 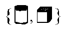 | | 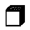 | | { , } | | 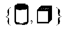 | | 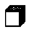 | |
| 1 | 0 | 0 | { , } | | 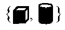 | | 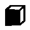 | | { , } | | 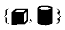 | | 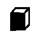 | |
| 0 | 1 | 0 | { , } | | 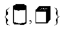 | | 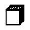 | | { , } | | 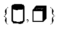 | | 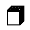 | |
| 1 | 1 | 0 | { , } | | 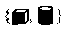 | | 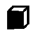 | | { , } | | 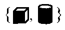 | | 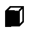 | |

**• Tab. 5**

| **p IMP q** | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | q | p | 1 | 0 | 0 | 1 | p | q | 0 | 1 |
| 0 | 0 | 1 | { , } | | 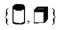 | | 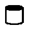 | | { , } | | 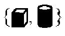 | | 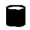 | |
| 1 | 0 | 0 | { , } | | 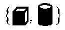 | | 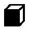 | | { , } | | 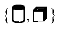 | | 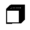 | |
| 0 | 1 | 1 | { , } | | 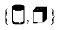 | | 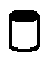 | | { , } | | 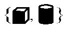 | | 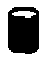 | |
| 1 | 1 | 1 | { , } | | 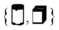 | | 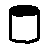 | | { , } | | 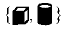 | | 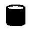 | |

**• Tab. 6**

| **p NIMP q** | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | q | p | 0 | 1 | 0 | 1 | p | q | 1 | 0 |
| 0 | 0 | 0 | { , } | | 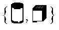 | | 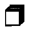 | | { , } | | 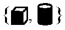 | | 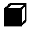 | |
| 1 | 0 | 1 | { , } | | 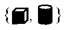 | | 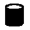 | | { , } | | 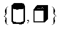 | | 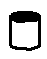 | |
| 0 | 1 | 0 | { , } | | 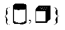 | | 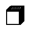 | | { , } | | 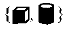 | | 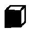 | |
| 1 | 1 | 0 | { , } | | 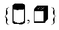 | | 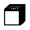 | | { , } | | 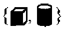 | | 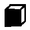 | |

**• Tab. 7**

| **p AND q** | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | q | p | p | not p | 0 | 1 | p | q | not p | p |
| 0 | 0 | 0 | { , } | | 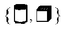 | | 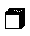 | | { , } | | 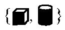 | | 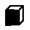 | |
| 1 | 0 | 0 | { , } | | 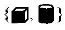 | | 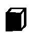 | | { , } | | 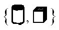 | | 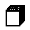 | |
| 0 | 1 | 0 | { , } | | 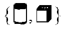 | | 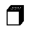 | | { , } | | 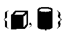 | | 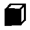 | |
| 1 | 1 | 1 | { , } | | 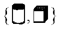 | | 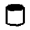 | | { , } | | 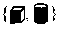 | | 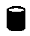 | |

**• Tab. 8**

| **p NAND q** | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | q | p | not p | p | 0 | 1 | p | q | p | not p |
| 0 | 0 | 1 | { , } | | 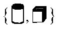 | | 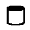 | | { , } | | 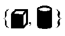 | | 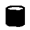 | |
| 1 | 0 | 1 | { , } | | 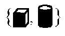 | | 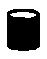 | | { , } | | 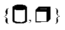 | | 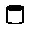 | |
| 0 | 1 | 1 | { , } | | 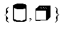 | | 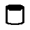 | | { , } | | 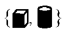 | | 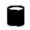 | |
| 1 | 1 | 0 | { , } | | 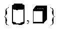 | | 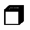 | | { , } | | 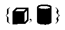 | | 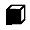 | |

**• Tab. 9**

| **p OR q** | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | p | q | p | not p | 0 | 1 | q | p | not p | p |
| 0 | 0 | 0 | { , } | | 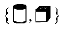 | | 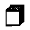 | | { , } | | 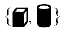 | | 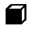 | |
| 1 | 0 | 1 | { , } | | 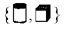 | | 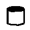 | | { , } | | 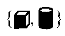 | | 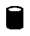 | |
| 0 | 1 | 1 | { , } | | 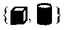 | | 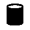 | | { , } | | 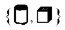 | | 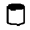 | |
| 1 | 1 | 1 | { , } | | 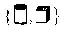 | | 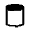 | | { , } | | 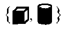 | | 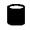 | |

**• Tab. 10**

| **p NOR q** | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | p | q | not p | p | 0 | 1 | q | p | p | not p |
| 0 | 0 | 1 | { , } | | 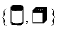 | | 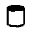 | | { , } | | 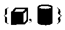 | | 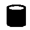 | |
| 1 | 0 | 0 | { , } | | 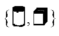 | | 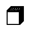 | | { , } | | 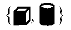 | | 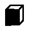 | |
| 0 | 1 | 0 | { , } | | 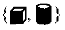 | | 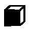 | | { , } | | 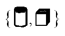 | | 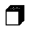 | |
| 1 | 1 | 0 | { , } | | 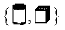 | | 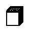 | | { , } | | 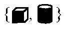 | | 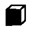 | |

**• Tab. 11**

| **p** | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | p | 1 | 1 | 0 | 0 | 1 | 1 | p | 0 | 1 |
| 0 | 0 | 0 | { , } | | 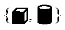 | | 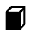 | | { , } | | 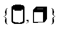 | | 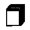 | |
| 1 | 0 | 1 | { , } | | 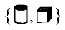 | | 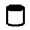 | | { , } | | 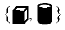 | | 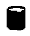 | |
| 0 | 1 | 0 | { , } | | 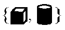 | | 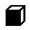 | | { , } | | 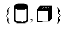 | | 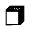 | |
| 1 | 1 | 1 | { , } | | 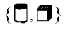 | | 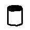 | | { , } | | 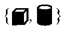 | | 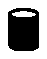 | |

**• Tab. 12**

| NOT p | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | p | 1 | 0 | 1 | 0 | 1 | 1 | p | 1 | 0 |
| 0 | 0 | 1 | { , } | | 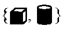 | | 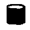 | | { , } | | 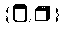 | | 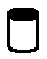 | |
| 1 | 0 | 0 | { , } | | 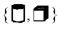 | | 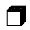 | | { , } | | 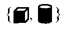 | | 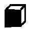 | |
| 0 | 1 | 1 | { , } | | 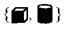 | | 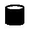 | | { , } | | 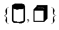 | | 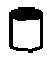 | |
| 1 | 1 | 0 | { , } | | 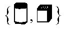 | | 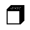 | | { , } | | 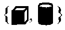 | | 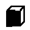 | |

**• Tab. 13**

| **q** | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | q | 1 | 1 | 0 | 0 | 1 | 1 | q | 0 | 1 |
| 0 | 0 | 0 | { , } | | 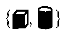 | | 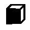 | | { , } | | 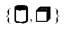 | | 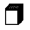 | |
| 1 | 0 | 0 | { , } | | 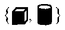 | | 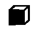 | | { , } | | 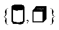 | | 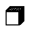 | |
| 0 | 1 | 1 | { , } | | 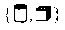 | | 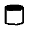 | | { , } | | 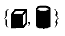 | | 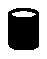 | |
| 1 | 1 | 1 | { , } | | 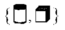 | | 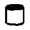 | | { , } | | 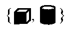 | | 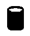 | |

**• Tab. 14**

| **NOT q** | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | q | 1 | 0 | 1 | 0 | 1 | 1 | q | 1 | 0 |
| 0 | 0 | 1 | { , } | | 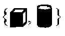 | | 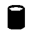 | | { , } | | 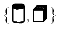 | | 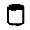 | |
| 1 | 0 | 1 | { , } | | 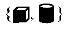 | | 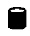 | | { , } | | 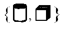 | | 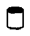 | |
| 0 | 1 | 0 | { , } | | 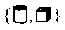 | | 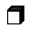 | | { , } | | 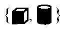 | | 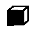 | |
| 1 | 1 | 0 | { , } | | 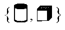 | | 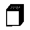 | | { , } | | 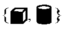 | | 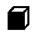 | |

**• Tab. 15**

| **p RIMP q** | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | p | q | 1 | 0 | 0 | 1 | q | p | 0 | 1 |
| 0 | 0 | 1 | { , } | | 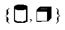 | | 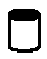 | | { , } | | 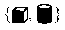 | | 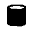 | |
| 1 | 0 | 1 | { , } | | 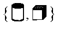 | | 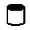 | | { , } | | 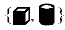 | | 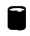 | |
| 0 | 1 | 0 | { , } | | 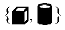 | | 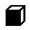 | | { , } | | 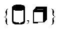 | | 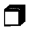 | |
| 1 | 1 | 1 | { , } | | 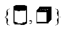 | | 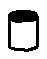 | | { , } | | 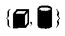 | | 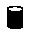 | |

**• Tab. 16**

| **p RNIMP q** | | | C.HV1 | | C.HV2 | | C.LV | | C.HV1 | | C.HV2 | | C.LV | |
|---|---|---|---|---|---|---|---|---|---|---|---|---|---|---|
| | | | T1 | T2 | T1 | T2 | T1 | T2 | T1 | T2 | T1 | T2 | T1 | T2 |
| p | q | s | 1 | 0 | p | q | 0 | 1 | 0 | 1 | q | p | 1 | 0 |
| 0 | 0 | 0 | { , } | | 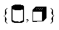 | | 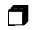 | | { , } | | 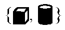 | | 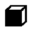 | |
| 1 | 0 | 0 | { , } | | 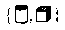 | | 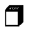 | | { , } | | 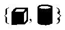 | | 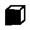 | |
| 0 | 1 | 1 | { , } | | 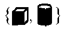 | | 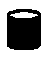 | | { , } | | 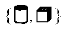 | | 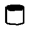 | |
| 1 | 1 | 0 | { , } | | 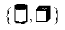 | | 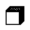 | | { , } | | 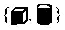 | | 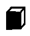 | |

Beispielsweise kann ein nichtflüchtiger komplementärer Widerstandsschalter mit "Level read" Auslesen in einem passiven Array verwendet werden. Der beschriebene komplementäre Widerstandsschalter 3 kann in einer passiven Gitter-Struktur (Array) parallel und/oder seriell angeordnet sein und zur sequentiellen Ausführung von einer oder mehreren programmierbaren Logikfunktionen verwendet werden. Jeder Kreuzungspunkt (m,n) der Array-Struktur mit m Zeilen und n Spalten bildet ein separat programmierbares und separat auslesbares Logiktor. Diese Anordnung stellt eine Verbesserung gegenüber einem Field Programmable Digital Array dar.

Die benötigte Spaltenzahl n des Arrays ist mindestens so groß wie die Zahl der sequentiell auszuführenden Logikfunktionen und die benötigte Zeilenzahl m des Arrays ist mindestens so groß wie die maximal gleichzeitig auszuführenden Logikfunktionen. Mindestens jeder Kreuzungspunkt im Array kann über eine Hoch- und Niedrigspannungsquelle angesteuert werden. Die Hochspannungsquellen am Kreuzungspunkt (m,n) generieren das Initialisierungssignal und die Eingangssignale p,q(m,n) am Logiktor (m,n) und die Niedrigspannungsquellen generieren die Ausgangssignale s(m,n) des Logiktors (m,n). Die Eingangssignale für Logikfunktionen in der Spalte n', welche zum Zeitpunkt t'(n') ausgeführt werden, können beliebige Ausgangssignale von Logikfunktionen, welche zum Zeitpunkt t(n) mit n<n' ausgeführt wurden, sein. Die Verknüpfung der Logiktore wird über eine passive Verstärkerschaltung, welche die entsprechenden Hochspannungsquellen m,n ansteuert, realisiert. Alle Ausgangssignale s(m,n) von Kreuzungspunkten m,n mit n<n', welche das Eingangssignal p,q(m',n') am Kreuzungspunkt (m',n') mit n'>n definieren, werden am Kreuzungspunkt (m',n') zum Eingangssignal p,q(m',n') zusammengelegt. Es ist vorteilhaft, die Eingangssignale pᵢ(m,n) und die Eingangssignale qᵢ(m,n) zu addieren. Gilt zum Beispiel pᵢ={0,1,1,0} und pᵢ={1,1,0,1}, dann wird an T1(m,n) p(m,n)=0 und an T2(m,n) q(m,n)=1 angelegt. Gilt zum Beispiel pᵢ={1,1,1} und pᵢ={1,0,0}, dann wird an T1(m,n) p(m,n)=1 und an T2(m,n) q(m,n)=0 angelegt.

Die Programmierung des Arrays erfolgt zu Anfang durch Initialisierung im Zyklusschritt C.HV1. Alle Kreuzungspunkte (m,n) werden entweder mit einer positiven oder einer negativen Schreibspannung der Hochspannungsquelle initialisiert. Im Weiteren können in einem Array beliebige Boolesche Grundfunktion parallel oder seriell miteinander verknüpft werden. Die entsprechende Schreibspannung zur nichtflüchtigen Programmierung einer Booleschen Grundfunktion wird mit der Hochspannungsquelle im zweiten Zyklusschritt C.HV2 direkt vor dem ersten Auslesen des jeweiligen Kreuzungspunktes (m,n) an den Kreuzungspunkt (m,n) angelegt. Die einzelnen Teiloperationen werden bei Reihenschaltung sequenziell nacheinander zum Zeitpunkt t(n) ausgeführt, wobei der Ausgangszustand s(m,n) mit n<n' einer der Logikfunktionen an Kreuzungspunkten (m,n) mit n<n' als Eingangsparameter für den Kreuzungspunkt (m,n') verwendet werden kann. Dafür ist die Verstärkung des Ausgangszustandes der zu benutzenden vorhergehenden Teiloperation notwendig. Die einzelnen Teiloperationen innerhalb einer Parallelschaltung können gleichzeitig geschrieben werden. Die in den Tabellen Tab. 1 bis Tab. 16 dargestellten Booleschen Funktionen lassen sich mit dieser Struktur im Zwei-Schrittverfahren (C.VH1, C.VH2) programmieren und dann auslesen (C.VL).

Von Vorteil ist, dass im ersten Schritt des Zyklus zur Programmierung der Booleschen Funktionen der Zustand in allen Logiktoren der passiven Array-Struktur entweder mit einem positiven oder mit einem negativen Schreibpuls gesetzt werden kann. Somit unterscheidet sich erst der zweite Schritt des Zyklus zur Programmierung der Booleschen Funktionen an jedem zur Ausführung der Logikfunktion verwendeten Kreuzungspunkt (m,n) der passiven Array-Struktur. Das Vorzeichen der Lesespannung, welche gering ist und den Zustand des Ausgabeparameters s der entsprechenden Logiktore nicht verändert, wird durch einen der beiden Eingangsparameter p oder q der Booleschen Funktionen oder durch einen konstanten Eingabeparameter 0 oder 1 definiert. Die sequentielle und parallele Verknüpfung und Hintereinanderausführung mehrerer Boolescher Operationen wird durch die sequentielle Programmierung von Kreuzungspunkten in unterschiedlichen Spalten n und durch die gleichzeitige Programmierung aller Kreuzungspunkte (m,n) in der Zeile m in derselben Spalte n' erreicht. Die Verstärkerschaltungen zwischen den Niedrigspannungs-Ausgangssignalen s(m,n) und den Hochspannungs-Eingangssignalen p,q(m,n') sind vorzugsweise hartverdrahtet. Die Vorteile bei der Verwendung komplementärer Widerstandsschalter in einem passiven Array sind geringe Entwicklungskosten, kurze Implementierungszeiten, hohe Logikdichte und geringer Leistungsbedarf. Die Funktionalität von komplementären Widerstandsschaltern steht direkt nach dem Einschalten zur Verfügung. Die Information über die untergebrachte Konfiguration des passiven Arrays ist über die Hochspannungs-Eingangssignale p,q(m,n) und die Niedrigspannungs-Ausgangssignale s(m,n) in den Kreuzungspunkten gespeichert. Es wird kein extern befindlicher Speicher benötigt, welcher unrechtmäßig ausgelesen werden kann. Vorteilhaft ist auch, die aktuelle Spaltenzahl n als Zählvariable mitzuführen und sequentiell nichtflüchtig zu speichern, so dass beim Hochfahren die Logikfunktion ohne Datenverlust an der Spalte n fortgeführt werden kann.

Beispielsweise kann der komplementäre Widerstandsschalter in nichtflüchtigen frei programmierbaren analogen Schaltkreisen in einem Array verwendet werden.

Der hierin beschriebene komplementäre Widerstandsschalter kann in einer passiven Array-Struktur parallel und/oder seriell angeordnet sein und zur sequentiellen Ausführung von einem oder mehreren programmierbaren analogen Blöcken verwendet werden. Jeder Kreuzungspunkt (m,n) der Array-Struktur mit m Zeilen und n Spalten bildet einen separat programmierbaren und separat auslesbaren Block am Kreuzungspunkt (m,n). Jeder Block am Kreuzungspunkt (m,n) ist gleichzeitig ein Logiktor am Kreuzungspunkt (m,n). Diese Anordnung stellt eine Verbesserung gegenüber einem Field Programmable Analog Array dar. Alle Kreuzungspunkte (m,n) werden entweder mit einer positiven oder einer negativen Schreibspannung der Hochspannungsquelle initialisiert. Im beschriebenen komplementären Widerstandsschalter wird der LRSi analog und der HRS digital geschrieben. So wird beim Anlegen eines positiven Schreibpulses das Zustandspaar {LRSai, HRSb} und beim Anlegen eines negativen Schreibpulses das Zustandspaar {HRSa, LRSbi} geschrieben. Der Schreibpuls am Kreuzungspunkt (m,n) ist größer als Uₘᵢₙ und kleiner als Uₘₐₓ und beeinflusst die Logikfunktion am Kreuzungspunkt (m,n) nicht, Uₘᵢₙ muss größer als die Spannung des Lesepulses sein und hängt beispielsweise von der Geometrie und der Herstellung des komplementären Widerstandsschalters 3 ab. Der Lesepuls zum Auslesen des Zustandes LRSai des analogen Blockes am Kreuzungspunkt (m,n) ist unabhängig vom Lesepuls zum Lesen des Ausgabeparameters der Logikfunktion am Kreuzungspunkt (m,n). Analoge Hochspannungseingänge und analoge Niedrigspannungsausgänge stellen die Verbindung zur Außenwelt her. Die Konfiguration des analogen Blocks und der Logikfunktion am Kreuzungspunkt (m,n) erfolgt im Schreibzyklus C.HV2 über analoge Hochspannungseingänge. Das Lesen des analogen Blocks erfolgt über einen analogen Niedrigspannungsausgang, wobei die Lesespannung das gleiche Vorzeichen wie die Schreibspannung im Schreibzyklus C.VH2 hat. Das Lesen der Logikfunktion am Kreuzungspunkt (m,n) erfolgt im Lesezyklus C.VL mit der Lesespannung über einen digitalen Niedrigspannungsausgang. Die Zustände der analogen Blöcke an den Kreuzungspunkten (m,n) definieren die Eingangsparameter p,q (m,n') für Logikfunktionen an Kreuzungspunkten (m,n') mit n'>n. Des Weiteren können die Zustände der analogen Blöcke an den Kreuzungspunkten (m,n) die analogen Hochspannungseingänge an Kreuzungspunkten (m,n') mit n'>n mit den Zuständen aus sequentiell davor liegenden analogen Niedrigspannungsausgängen an Kreuzungspunkten (m,n) wichten und/oder definiert zeitlich versetzt nutzen.

In Fig. 4A ist eine Widerstandsstruktur 3 gemäß einem Ausführungsbeispiel der Erfindung veranschaulicht. Die Widerstandsstruktur weist einen ersten elektrisch leitfähigen Kontakt T1 und einen zweiten elektrisch leitfähigen Kontakt T2 auf. Die beiden elektrisch leitfähigen Kontakte T1, T2 können Metallkontakte sein, z.B. aufweisend Aluminium, Platin, Titan, Kupfer, Silber und/oder Gold, oder ein anderes Metall oder eine Metalllegierung.

Analog zur vorangehenden Beschreibung sind zwischen dem ersten elektrischen Kontakt T1 und dem zweiten elektrischen Kontakt T2 eine erste ferroelektrische Schicht und eine zweite ferroelektrische Schicht 11b angeordnet, welche miteinander in einem Kontaktbereich 408 in körperlichem Kontakt stehen. Die zwei ferroelektrischen Schichten 11a, 11b können auch zwei verschiedene Bereiche (zwei unterschiedlich modifizierte Bereiche 11a, 11b) einer einzigen ferroelektrischen Schicht sein.

Es bildet der erste Kontakt T1 mit der ersten ferroelektrischen Schicht 11a einen Schottky-Kontakt und/oder der zweite Kontakt T2 bildet mit der zweiten ferroelektrischen Schicht 11b einen Schottky-Kontakt. Beispielsweise kann an den Kontakt T1 eine positivere Spannung als an den Kontakt T2 angelegt werden, d.h. eine Spannung einer ersten Polarität, oder umgekehrt (umgepolt), an den Kontakt T2 eine positivere Spannung als an den Kontakt T1. Dabei kann sich, bei einer Polarität der Spannung, in der Widerstandsstruktur 3 in einem Bereich 406a zwischen dem ersten Kontakt T1 und der ersten ferroelektrischen Schicht 11a ein Schottky-Kontakt ausbilden, und in einem Bereich 406b zwischen dem zweiten Kontakt T2 und der zweiten ferroelektrischen Schicht 11b ein ohmscher Kontakt. Ferner kann sich, bei einer entgegengesetzten Polarität der Spannung, in der Widerstandsstruktur 3 in dem Bereich 406a zwischen dem ersten Kontakt T1 und der ersten ferroelektrischen Schicht 11a ein ohmscher Kontakt ausbilden, und in einem Bereich 406b zwischen dem zweiten Kontakt T2 und der zweiten ferroelektrischen Schicht 11b ein Schottky-Kontakt.

Dies kann es beispielsweise ermöglichen, dass die Widerstandsstruktur 3 wie vorangehend beschrieben (für den komplementären Widerstandsschalter) genutzt werden kann.

Dabei können die erste ferroelektrische Schicht 11a und die zweite ferroelektrische Schicht 11b voneinander verschiedene Dotierungen und/oder räumliche Dotierungsverteilungen aufweisen. Die erste ferroelektrische Schicht 11a kann mindestens einen ersten Schichtbereich 11'a, 11"a aufweisen, wobei sich die Eigenschaften (Grunddotierung, jeweils die räumliche Verteilung und/oder der Betrag, (z.B. mit Sauerstoffvakanzen), zusätzliche Dotierung, jeweils die räumliche Verteilung und/oder der Betrag, (z.B. mit Metallatomen), oder strukturelle Eigenschaften bezogen auf die jeweilige Kristallstruktur oder Phase des ferroelektrischen Materials der ferroelektrischen Schicht) des mindestens einen ersten Schichtbereichs 11'a, 11"a von denen der ersten ferroelektrischen Schicht 11a unterscheiden können, wobei die zweite ferroelektrische Schicht 11b mindestens einen zweiten Schichtbereich 11'b, 11"b aufweisen kann, wobei sich die Eigenschaften des zweiten Schichtbereichs 11'a, 11"a von denen der zweiten ferroelektrischen Schicht 11a unterscheiden.

Die zweite ferroelektrische Schicht 11b ist mit mindestens einem Metall und/oder einem Halbmetall dotiert, beispielsweise mittels partieller Substitution von Fe³⁺-Ionen durch geeignete AII/BIV-Dotierungen (z.B. zweiwertige oder vierwertige Metallatome bei einem auf Eisen basierenden ferroelektrischen Material).

Gemäß verschiedenen Ausführungsformen kann die erste ferroelektrische Schicht 11a dicker sein, als die zweite ferroelektrische Schicht 11b, z.B. kann die erste ferroelektrische Schicht 11a mehr als doppelt so dick sein, wie die zweite ferroelektrische Schicht 11b. Somit kann beispielsweise verhindert werden, dass sich nicht zwei Schottky-Kontakte jeweils an dem ersten Kontakt T1 und an dem zweiten Kontakt T2 gleichzeitig ausbilden.

Ferner kann die erste ferroelektrische Schicht 11a Bismut-Ferrit (BiFeO₃) aufweisen und die zweite ferroelektrische Schicht 11b kann mit Titan dotiertes Bismut-Ferrit (Bi(Fe,Ti)O₃ aufweisen. Dabei kann das Titan auf den Gitterplätzen der Eisen-Atome (Ionen) in die Kristallstruktur eingebaut sein, wobei diese Dotierung beispielsweise nicht mittels einer elektrischen Spannung im Bereich der Schreibspannung (z.B. in einem Bereich von ungefähr 2 V bis ungefähr 20 V) verändert oder innerhalb der ferroelektrischen Schichten 11a, 11b verschoben werden kann. Gemäß verschiedenen Ausführungsformen kann diese Metalldotierung (z.B. Titandotierung) thermisch diffundieren oder diffundiert werden, so dass in dem Kontaktbereich 408 ein elektrisch leitfähiger Kontaktbereich oder Grenzbereich 408 ausgebildet sein kann oder werden kann.

Gemäß verschiedenen Ausführungsformen können beide ferroelektrische Schichten 11a, 11b oxidisch sein (z.B. aufweisend BiFeO₃) und eine Sauerstoff-Fehlstellen-n Dotierung aufweisen. Dabei können die Sauerstoff-Fehlstellen mobil sein, z.B. aufgrund der Materialeigenschaften des ferroelektrischen Materials (z.B. BiFeO₃), wobei diese Sauerstoff-Fehlstellen-Dotierung beispielsweise mittels einer elektrischen Spannung im Bereich der Schreibspannung (z.B. in einem Bereich von ungefähr 2 V bis ungefähr 20 V) verändert oder innerhalb der ferroelektrischen Schichten 11a, 11b verschoben werden kann. Die Mobilität der mobilen Dotanden kann beispielsweise mittels nicht mobiler Dotanden beeinflusst werden. Dies kann beispielsweise den Schaltvorgang in der Widerstandsstruktur verursachen.

Anschaulich kann es ferner notwendig sein, dass die erste ferroelektrische Schicht (11a) und die zweite ferroelektrische Schicht (11b) in einem elektrisch leitfähigen Kontaktbereich aneinander angrenzen. Dabei kann der Kontaktbereich jeweils das Schichtmaterial der ersten ferroelektrischen Schicht (11a) und/oder der zweiten ferroelektrischen Schicht (11b) mit einer Konzentration an freien Ladungsträgern von mehr als 10¹⁹ cm⁻³ aufweisen.

Gemäß verschiedenen Ausführungsformen kann die erste ferroelektrische Schicht (11a) eine erste piezoelektrische Schicht sein und/oder die zweite ferroelektrische Schicht (11b) kann eine zweite piezoelektrische Schicht sein.

Gemäß verschiedenen Ausführungsformen können die Kontakte T1, T2 jeweils mindestens ein Metall aufweisen und die ferroelektrischen Schichten 11a, 11b können eine (z.B. zeitlich und/oder räumlich) stabile Grunddotierung aufweisen, welche den ferroelektrischen Schichten halbleitenden Charakter verleihen kann, wodurch beispielsweise das Ausbilden eines Schottky- Kontakts zwischen dem ersten Kontakt T1 und der ersten ferroelektrischen Schicht 11a und/oder zwischen dem zweiten Kontakt T2 und der zweiten ferroelektrischen Schicht 11b verursacht sein kann oder werden kann. Ferner können die ferroelektrischen Schichten 11a, 11b eine beispielsweise zeitlich und/oder räumlich veränderbare (mobile) Dotierung aufweisen, welche beispielsweise mittels Anlegens der Schreibspannung (zwischen den Kontakten T1, T2) verändert werden kann. Somit kann mittels Verschiebens der mobilen Dotierung die elektrische Leitfähigkeit der ferroelektrischen Schichten 11a, 11b an den Kontakten T1, T2 derart erhöht werden, dass sich statt eines Schottky-Kontakts ein ohmscher Kontakt ausbildet. Dies kann jeweils wechselseitig erfolgen, so dass beispielsweise wenn die mobile Dotierung in Richtung des ersten Kontakts T1 verschoben ist (und in Abwesenheit einer Schreibspannung auch derart verschoben bleibt), in dem Bereich 406a zwischen dem ersten Kontakt T1 und der ersten ferroelektrischen Schicht 11a ein ohmscher Kontakt ausgebildet ist, und in dem Bereich 406b zwischen dem zweiten Kontakt T2 und der zweiten ferroelektrischen Schicht b ein Schottky-Kontakt, und umgekehrt, dass, wenn die mobile Dotierung in Richtung des zweiten Kontakts T2 verschoben ist (und in Abwesenheit einer Schreibspannung auch derart verschoben bleibt), in dem Bereich 406a zwischen dem ersten Kontakt T1 und der ersten ferroelektrischen Schicht 11a ein Schottky-Kontakt ausgebildet ist, und in dem Bereich 406b zwischen dem zweiten Kontakt T2 und der zweiten ferroelektrischen Schicht b ein ohmscher-Kontakt.

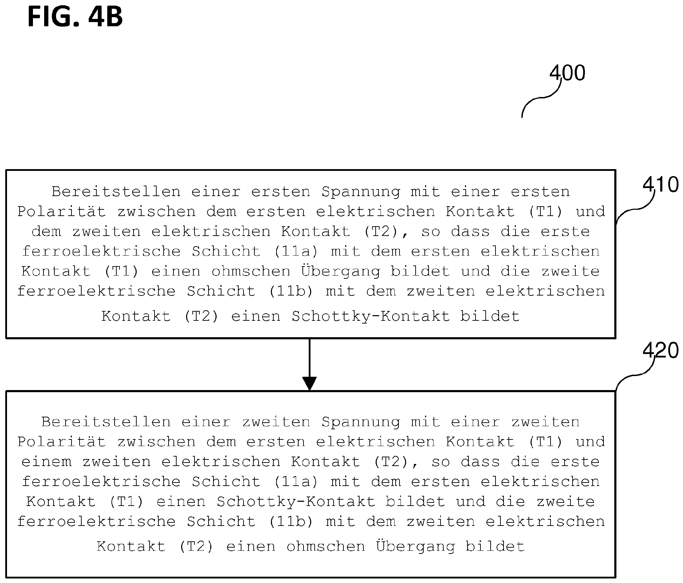

Somit weist, wie beispielsweise in Fig. 4B in einem schematischen Ablaufdiagramm dargestellt, ein Verfahren 400 zum Betreiben einer Widerstandsstruktur 3 gemäß einem Ausführungsbeispiel der Erfindung auf: in 410, das Bereitstellen einer ersten Spannung mit einer ersten Polarität zwischen dem ersten elektrischen Kontakt T1 und dem zweiten elektrischen Kontakt T2, so dass die erste ferroelektrische Schicht 11a mit dem ersten elektrischen Kontakt T1 einen ohmschen Übergang bildet und die zweite ferroelektrische Schicht 11b mit dem zweiten elektrischen Kontakt T2 einen Schottky-Kontakt bildet; und/oder, in 420, das Bereitstellen einer zweiten Spannung mit einer zweiten Polarität zwischen dem ersten elektrischen Kontakt T1 und einem zweiten elektrischen Kontakt T2, so dass die erste ferroelektrische Schicht 11a mit dem ersten elektrischen Kontakt T1 einen Schottky-Kontakt bildet und die zweite ferroelektrische Schicht 11b mit dem zweiten elektrischen Kontakt T2 einen ohmschen Übergang bildet.

Gemäß verschiedenen Ausführungsformen kann eine polykristalline, piezo- oder ferroelektrischer Dünnschicht (eine Schicht oder ein Dünnfilm) bereitgestellt sein oder werden, wobei die polykristalline piezo- oder ferroelektrische Dünnschicht mit mindestens zwei äußeren (bzw. elektrisch leitfähigen) Kontakten versehen sind. Dabei kann die polykristalline, piezo- oder ferroelektrische Dünnschicht zumindest teilweise zwischen den zwei elektrisch leitfähigen Kontakten angeordnet sein oder werden. Eine derart bereitgestellte und mittels zwei Kontakten kontaktierte Dünnschicht kann als kontaktierte Dünnschicht oder kontaktierter Dünnfilm bezeichnet werden.

Halbleitende, polykristalline oxidische Dünnschichten unterscheiden sich bezüglich ihrer großen Bandlücke und ihrer hohen Temperaturstabilität wesentlich von konventionellen Halbleitern, beispielsweise von Silizium, Germanium und Galliumarsenid [R. van de Krol und H.L. Tuller, Electroceramics-the role of interfaces, Solid State Ionics 150 (2002) 167-179]. Unkontaktierte polykristalline oxidische Dünnschichten haben Grenzflächen zwischen den Korngrenzen der einzelnen Kristallite. Kontaktierte polykristalline Dünnschichten haben Grenzflächen zwischen den metallisch leitenden Kontaktmaterialien und den an die metallisch leitenden Kontaktmaterialien angrenzenden Kristalliten und zwischen den Korngrenzen der einzelnen Kristallite.

Die Korngrenzen in polykristallinen Dünnschichten sind in ihren Eigenschaften schwer reproduzierbar einstellbar und fangen bevorzugt Störstellen und Defekte ein. Die Korngrenzen zwischen den Kristalliten können zur Degradation der Funktionalität von Bauelementen aus polykristallinen Dünnschichten führen.

Obwohl die halbleitenden Eigenschaften von konventionellen Halbleitern und halbleitenden oxidischen Dünnschichten in vielen Aspekten gleich sind, kann die Defektchemie sehr unterschiedlich sein. Selbst ohne das Einbringen von Dotanden sind oxidische Dünnschichten oft intrinsisch n-leitend oder intrinsisch p-leitend. Sauerstoffvakanzen V_{O} können zu einer intrinsischen n-Leitung führen und die meisten halbleitenden oxidischen Dünnschichten sind intrinsisch n-leitend, beispielsweise ZnO, TiO₂, BiFeO₃. Einige wenige oxidische Dünnschichten sind intrinsisch p-leitend, beispielsweise LaNiO₃, La₁₋ₓSrₓMnO₃ und CuAlO₂. Diese intrinsische Leitfähigkeit limitiert die Herstellung von p-n-Übergängen in oxidischen Homo-Dünnschichtverbindungen. Die Elektronen- und Lochbeweglichkeit in oxidischen Dünnschichten ist im Allgemeinen viel geringer als in konventionellen Halbleitern und beträgt zwischen 0,1 bis wenige 100 cm²/Vs. In Silizium beträgt die Elektronenbeweglichkeit 1500 cm²/Vs. Gleichrichtende und nichtgleichrichtende Metall-Halbleiterkontakte können durch das Aufbringen von metallisch leitenden Filmen auf oxidische Dünnschichten realisiert werden. Die Barrierenhöhe von gleichrichtenden Kontakten (Schottky-Kontakten) auf oxidischen Dünnschichten (welche in körperlichem Kontakt mit einem Metall oder einem elektrisch leitfähigen Material stehen) korreliert mit dem Wert der Austrittsarbeit des metallisch leitenden Materials und deutet auf eine geringe Konzentration oder auf eine Abwesenheit von intrinsischen Oberflächenzuständen in der großen Bandlücke oxidischer Dünnschichten hin.

Während der Herstellung von polykristallinen Dünnschichten können an den Korngrenzen Elektronen und Löcher eingefangen sein und zur Verarmung des angrenzenden Kristallitmaterials an freien Elektronen und Löchern führen und damit zur Bildung einer Raumladungszone, welche die Korngrenzen von den verarmten Bereichen der Kristallite in polykristallinen Dünnschichten elektrisch isoliert. Die Bandverbiegungen des Leitungs- und Valenzbandes liegen parallel zueinander und sind je größer desto größer die Ausdehnung der verarmten Bereiche in den Kristalliten ist.

Diese Bandverbiegung wird Doppel-Schottky-Barriere genannt. Die Bandverbiegung in einer n-leitenden oxidischen Dünnschicht mit negativ geladenen Korngrenzen zeigt nach oben und die Bandverbiegung in einer p-leitenden oxidischen Dünnschicht mit positiv geladenen Korngrenzen zeigt nach unten. Im n-leitenden ZnO sind die Werte für die Barrierenhöhe, die Ausdehnung der Raumladungszone, die Grenzflächendichte und die Dotierkonzentration 1 eV, 50 bis 100 nm, 10¹² cm⁻² und 10¹⁸ cm⁻³ [G. Blatter und F. Greuter, Carrier transport through grain boundaries in semiconductors, Phys. Rev. B 33 (1986) 3952-3966].

Die Leitfähigkeit von ZnO-Varistoren kann beispielsweise um bis zu sieben Größenordnungen erhöht werden, wenn die Sauerstoffbedeckung an den Korngrenzen von 1,2 Monolagen auf 0,9 Monolagen reduziert wird [F. Greuter, G. Blatter, M. Rosseinelli, F. Stucki, Conduction mechanism in ZnOvaristors: an overview, in: L.M. Levinsoon (Ed.), Ceramic Transactions, Advances in Varistor technology, vol 3, American Ceramic Society, Westerville, OH, 1998, pp. 31-35]. Diese Leitfähigkeitserhöhung beruht auf einer Erniedrigung der Höhe der Doppel-Schottky-Barriere. In Schottky-Dioden oder Photo-Dioden auf der Basis von polykristallinen Dünnschichten führen Korngrenzen mit geringer Höhe der Doppel-Schottky-Barriere zur Degradation der Dioden-Funktionalität. Solche Doppel-Schottky-Barrieren können durch Segregation von inadäquaten Störstellen aus den Kristalliten in die Korngrenzen der polykristallinen Dünnschichten gebildet werden.

Im Vergleich zu mikrokristallinen Dünnschichten ist für nanokristalline Dünnschichten mit der gleichen Ausgangskonzentration an beweglichen Störstellen die effektive Dichte der an die Außenfläche der Kristallite, d.h. an die Korngrenzen, segregierten Störstellen geringer. Des Weiteren hängt die störstellenspezifische Segregation in nanokristallinen Dünnschichten von der Kristallitgröße, der Gesamtkonzentration aller Störstellen und der Teilkonzentration der Störstellen einer Spezies ab. So wurde gezeigt, dass Kalzium in CaO-stabilisiertem ZrO₂ sehr effektiv zusammen mit Silizium segregiert [Makoto Aoki, Yet-Ming Chiang, Igor Kosacki, Jong-Ren Lee, Harry Tuller und Yaping Liu, Solute Segregatio and Grain-Boundary Impdeance in High-Purity Stabilized Zirconia, J. Am. Ceram. Soc. 79 (1996) 1169-1180].

Korngrenzen sind schlecht für den Wirkungsgrad in Dünnschichtsolarzellen aus kristallinem Silizium, da an den Korngrenzen eine hohe Oberflächenrekombinationsgeschwindigkeit zu beobachten ist. Beispielsweise wächst die Effizienz von 8% für nanokristallines Silizium mit 10 nm Kristallitgröße auf 11,7% für mikrokristallines Silizium mit 1 µm Kristallitgröße [M. Green, K. Emery, D.L. King, S. Igari, W. Warta, Progress in Photovoltaics, Research and Applications (2005) 1349-1354]. Polykristallline CuIn₁₋ₓGaₓSe₂ (CIGS) Solarzellen haben einen Wirkungsgrad von 11%.

Gemäß verschiedenen Ausführungsformen können eine oder mehrere kontaktierte polykristalline piezo- oder ferroelektrische Dünnschichten bereitgestellt sein oder werden, in welchen die Kristallite elektrisch voneinander isoliert sind. Weiterhin soll das Herunterskalieren der Kontakte und die Prozessierung von Crossbar-Arraystrukturen mit polykristallinen Dünnschichten sowie die Verwendung solcher Dünnschichten zur effektiven Trennung photogenerierter Ladungsträger angegeben werden.

Eine Modifikation einer polykristallinen, piezo- oder ferroelektrischen Dünnschicht auf einem Kontakt erfolgt über Strahlen 2, welche auf die Oberfläche der Dünnschicht auftreffen bzw. auf deren Oberfläche gelenkt werden. Die Eigenschaften der Strahlen 2, beispielsweise der Fluss, die Stromdichte und die Energie (z.B. von Ionenstrahlen), sind so gewählt, dass die atomaren Spezies der piezo- oder ferroelektrischen Dünnschicht unterschiedlich gesputtert werden und dass dadurch vor allem im oberflächennahen Bereich der Kristallite sowie entlang der zu modifizierenden Korngrenzen GB hauptsächlich Anionen- oder Kationenvakanzen gebildet werden und dadurch modifizierte Korngrenzen GB' vorliegen. Der Majoritätsvakanztyp bestimmt sich dadurch, ob die Anionen oder die Kationen die leichtere atomare Spezies des polykristallinen Materials sind. Die Anionen- oder Kationenvakanzen, im Weiteren als Vakanzen bezeichnet, können einfach oder mehrfach geladen oder neutral sein. Während und nach der Modifikation driften die geladenen Vakanzen in dem intrinsischen elektrischen Feld jedes Kristallits einer polykristallinen ferroelektrischen Dünnschicht oder in dem elektrischen Feld jedes Kristallits einer polykristallinen piezoelektrischen Dünnschicht mit angelegter elektrischer Spannung an die Außenfläche des jeweiligen Kristallits. Aufgrund der Drift und Diffusion der Vakanzen und anderer im Kristallit vorhandener mobiler Störstellen können Korngrenzen GB" mit geänderten Eigenschaften im Vergleich zu den Korngrenzen GB vor der Modifikation oder im Vergleich zu den Korngrenzen GB' während der Modifikation erzeugt werden. Aufgrund des Ausbildens einer Raumladungszone in den Kristalliten zu beiden Seiten der modifizierten Korngrenzen GB", fließt beim Anlegen einer Spannung an die Kontakte der polykristallinen Dünnschicht der Strom in elektrisch separierten Leitungspfaden, d.h. entlang der Korngrenzen GB" und innerhalb der Kristallite, jedoch nicht in den Bereichen 11', welche an den Korngrenzen GB" liegen, bzw. nicht durch die Korngrenzen GB" hindurch. Durch entsprechende Einstellung des Modifikationsgrades der Korngrenzen GB", beispielsweise Ausdehnung oder chemische Komposition der Korngrenzen GB", kann der Anteil des Stroms, welcher beim Anlegen einer äußeren Spannung durch die Korngrenzen GB" fließt, (z.B. exakt) eingestellt werden. Das ist für die Herunterskalierung der Größe der Kontakte und die Größenordnung des Stromsignales von Bedeutung. Typischerweise muss der auswertbare Strom in Bauelementen mit herunterskalierten Kontakten ungefähr 10⁻⁹ A überschreiten.

Gemäß verschiedenen Ausführungsformen kann die kontaktierte, polykristalline piezo- oder ferroelektrische Dünnschicht Folgendes aufweisen: mindestens einen piezo- oder ferroelektrischen Kristallit mit Bereichen 11", 11' und 11, wobei an den Kristallit bzw. an die Kristallite mindestens zwei äußere Kontakte angebracht sind und die Kristallite einer modifizierten polykristallinen piezo- oder ferroelektrischen Dünnschicht im Bereich der Korngrenzen GB" elektrisch voneinander isoliert sind und wobei die physikalischen und/oder chemischen Eigenschaften der Bereiche 11" sich von den physikalischen und/oder chemischen Eigenschaften der Bereiche 11 unterscheiden und sich isolierende (z.B. verspannte) Bereiche 11' zwischen den Bereichen 11" und dem verbleibenden (z.B. unverspannten) Bereich 11 der Kristallite ausbilden.

Gemäß verschiedenen Ausführungsformen kann bei einer kontaktierten polykristallinen piezo- oder ferroelektrischen Dünnschicht die Grenze zwischen einer verspannten Phase 11' und einer unverspannten Phase 11 in jedem Kristallit durch das Anlegen einer Spannung zwischen den äußeren Kontakten innerhalb des Kristallits verschoben werden. Ferner können bei einer kontaktierten polykristallinen piezo- oder ferroelektrischen Dünnschicht die Vakanzen durch das Anlegen einer Spannung zwischen den äußeren Kontakten innerhalb des Kristallits verschoben werden.

Die äußeren Kontakte können in den Ausführungsvarianten gleichrichtend (z.B. Schottky-Kontakte) oder nichtgleichrichtend (z.B. ohmsche Kontakte) sein. Weiterhin ist es möglich, einzelne Kristallite mit separaten äußeren Kontakten zu versehen.

Gemäß verschiedenen Ausführungsformen kann die Dünnschicht hergestellt werden, indem eine erste Metallschicht (ein Metallfilm) auf ein Trägermaterial (Substrat) aufgebracht wird; anschließend ein polykristallines, piezo- oder ferroelektrisches Material auf die erste Metallschicht aufgebracht wird; anschließend die Bereiche 11" und die Korngrenzen GB" an der Außenfläche der Kristallite durch Modifikation der polykristallinen Dünnschicht gebildet werden, und anschließend eine weitere Metallschicht auf die polykristalline Dünnschicht als weiterer Kontakt aufgebracht wird.

Die Modifikation der polykristallinen Dünnschicht führt dabei zur Bildung und anschließenden Drift und/oder Diffusion von Vakanzen an die Außenfläche der einzelnen Kristallite und zur Änderung der Valenz der Vakanzen in der Außenfläche der Kristallite und damit zur Bildung der Bereiche 11" und der Korngrenzen GB". Diese Modifikation kann dann erhalten bleiben, beispielsweise nicht von einer angelegten Spannung an den Kontakten gestört werden.

Die Modifikation kann mittels Ionenimplantation, mittels Plasma basierter Ionenimplantation PIII, mittels Laserbestrahlung oder mittels Elektronenstrahlen erfolgen, wobei bei der Ionenimplantation vorzugsweise Edelgasionen, beispielsweise Ar⁺-Ionen mit einer Fluenz im Bereich von 5x10¹⁵ cm⁻² bis 5x10¹⁸ cm⁻², vorzugsweise im Bereich von 1x10¹⁶ cm⁻² bis 1x10¹⁸ cm⁻², besonders bevorzugt im Bereich von 5x10¹⁶ cm⁻² bis 5x10¹⁷ cm⁻², und einer Ionenenergie von weniger als 1 keV, eingesetzt werden.

Die polykristalline piezo- oder ferroelektrische Dünnschicht kann zum Transport von Ladungsträgern zwischen zwei äußeren Kontakten verwendet werden, wobei der Transport von Ladungsträgern durch die elektrisch voneinander isolierten Kristallite der polykristallinen Dünnschicht und in den Korngrenzen GB" erfolgt. Dabei wird die Größenordnung des Stromsignales in kontaktierten polykristallinen, piezo- oder ferroelektrischen Dünnschichten durch den Anteil des Stroms, welcher durch die Korngrenzen GB" fließt, bestimmt.

Weiterhin ist es möglich, die hierin beschriebene kontaktierte polykristalline piezo- oder ferroelektrische Dünnschicht als Widerstandsschalter mit hoher Retention und Endurance und hohem Stromsignal zu verwenden. Vorzugsweise ist der äußere Kontakt S gleichrichtend und der äußere Kontakt O nichtgleichrichtend. Dies kann beispielsweise, wie vorangehend beschrieben, mittels Anlegens einer elektrischen Spannung und einer spannungsgetriebenen Diffusion der Vakanzen V, V_{O} erfolgen.

Eine weitere Verwendungsmöglichkeit der kontaktierten polykristallinen piezo- oder ferroelektrischen Dünnschicht ist in einer Solarzelle zur Trennung von photogenerierten Ladungsträgern in der polykristallinen Dünnschicht mit elektrisch voneinander isolierten Kristalliten. Dabei erfolgt die Trennung jeweils in dem Kristallit, in dem die Ladungsträger durch Absorption von Licht generiert wurden. Vorzugsweise sind in diesem Fall die beiden äußeren Kontakte S und O als zwei nichtgleichrichtende Kontakte ausgebildet. Als Metalle für die Kontakte können beispielsweise Pt, Ag, Au, Ti, Ni und Al verwendet werden.

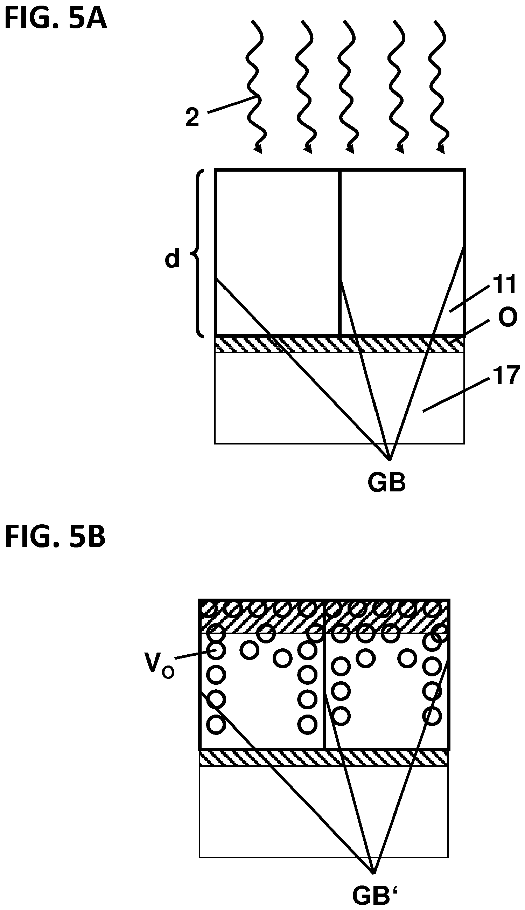

In den Figuren 5A bis 5C sind jeweils schematisch Herstellungsschritte zur Kontaktierung einer polykristallinen, piezo- oder ferroelektrischen Dünnschicht veranschaulicht.

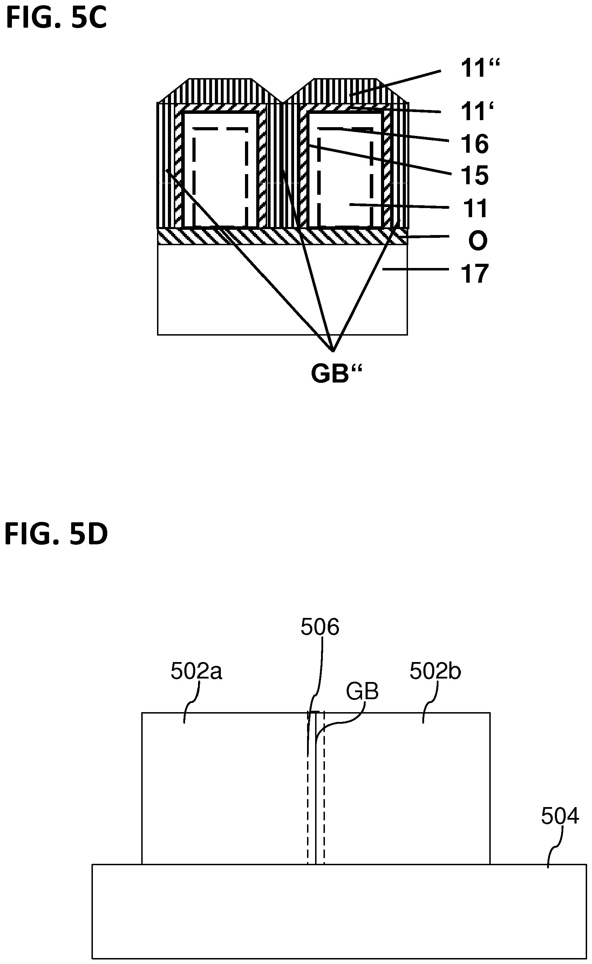

Figuren 5D veranschaulicht eine modifizierte polykristalline, piezo- oder ferroelektrische Dünnschicht, gemäß verschiedenen Ausführungsformen.

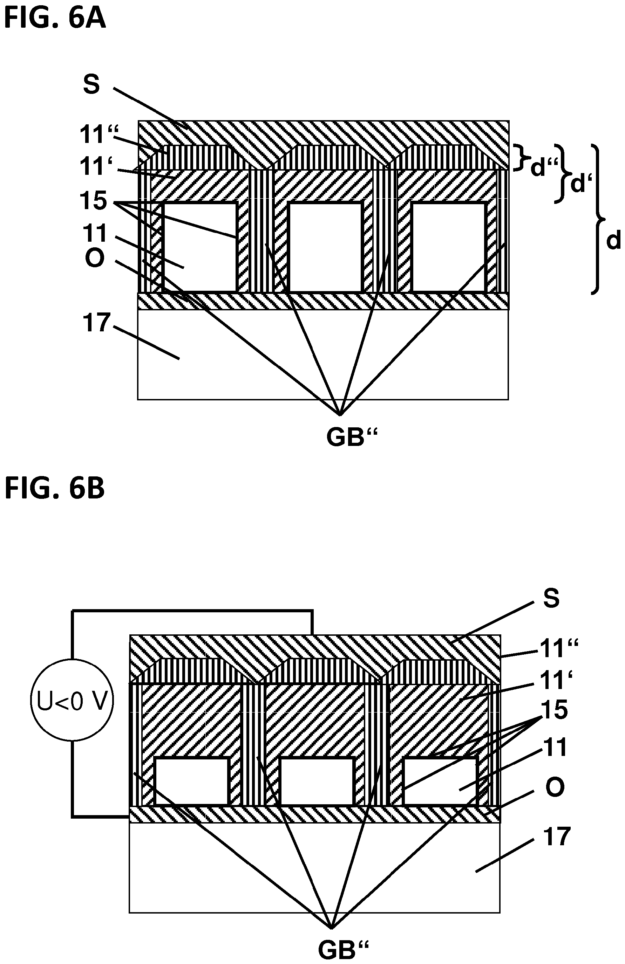

In den Figuren 6A bis 6C ist jeweils schematisch eine kontaktierte polykristalline, piezo- oder ferroelektrische Dünnschicht beim Anlegen einer äußeren Spannung veranschaulicht.

Fig. 5A zeigt den schematischen Aufbau einer polykristallinen, piezo- oder ferroelektrischen Dünnschicht auf einem nichtgleichrichtenden Kontakt O im Querschnitt vor (Fig. 5A), während (Fig. 5B) und nach (Fig. 5C) der Modifikation mittels Strahlen 2, z.B. mittels Laser-, Wärme-, Plasma-, Ionen- oder Elektronenstrahlen. Der nichtgleichrichtende Kontakt O wird beispielsweise großflächig auf ein Trägermaterial 17 aufgebracht. Danach wird mittels eines Dünnschichtverfahrens, z.B. mittels gepulster Laserplasmaabscheidung (PLD), Magnetronsputtern, metallorganischer Gasphasenepitaxie, Molekularstrahlepitaxie, die polykristalline, piezo- oder ferroelektrische Dünnschicht der Dicke d auf den (nichtgleichrichtenden) (z.B. metallischen) Kontakt O aufgebracht. Die Kristallitgröße der Kristallite in der polykristallinen, piezo- oder ferroelektrischen Dünnschicht liegt zwischen mehreren Mikrometern und wenigen Nanometern und beträgt beispielsweise 10 nm bis 1000 nm. Einzelne Kristallite sind durch Korngrenzen (grain boundaries) GB voneinander getrennt.

Die Modifikation der polykristallinen, piezo- oder ferroelektrischen Dünnschicht erfolgt über Strahlen 2 (z.B. Teilchenstrahlen), welche auf die Oberfläche der Dünnschicht auftreffen (vgl. Fig. 5A). Die Eigenschaften der Strahlen 2, beispielsweise der Fluss, die Stromdichte und die Energie von Ionenstrahlen, sind so gewählt, dass die atomaren Spezies der piezo- oder ferroelektrischen Dünnschicht unterschiedlich gesputtert werden und dass dadurch vor allem im oberflächennahen Bereich der Kristallite sowie entlang der zu modifizierenden Korngrenzen GB hauptsächlich Anionen- oder Kationenvakanzen gebildet werden und dadurch modifizierte Korngrenzen GB' vorliegen. Der Majoritätsvakanztyp bestimmt sich dadurch, ob die Anionen oder die Kationen die leichtere atomare Spezies des polykristallinen Materials sind (vgl. Fig. 5B). Die Anionen- oder Kationenvakanzen, im Weiteren als Vakanzen bezeichnet, können einfach oder mehrfach geladen oder neutral sein. Während und nach der Modifikation driften die geladenen Vakanzen in dem intrinsischen elektrischen Feld jedes Kristallits einer polykristallinen ferroelektrischen Dünnschicht oder in dem elektrischen Feld jedes Kristallits einer polykristallinen piezoelektrischen Dünnschicht mit angelegter elektrischer Spannung an die Außenfläche des jeweiligen Kristallits. Durch die Drift und Diffusion der Vakanzen und anderer im Kristallit vorhandener mobiler Störstellen (eine mobile Dotierung) resultieren Korngrenzen GB" mit geänderten Eigenschaften (vgl. Fig. 5C) im Vergleich zu den Korngrenzen GB vor der Modifikation (vgl. Fig. 5A) oder im Vergleich zu den Korngrenzen GB' während der Modifikation (vgl. Fig. 5B). Durch die Ausbildung einer Raumladungszone zu beiden Seiten der modifizierten Korngrenzen GB", fließt beim Anlegen einer Spannung an die Kontakte der polykristallinen Dünnschicht der Strom in elektrisch separierten Leitungspfaden, d.h. entlang der Korngrenzen GB" und innerhalb der Kristallite, jedoch nicht in den Bereichen 11', welche an den Korngrenzen GB" liegen. Durch entsprechendes Einstellen des Modifikationsgrades der Korngrenzen GB", beispielsweise der Ausdehnung oder der chemische Komposition der Korngrenzen GB", kann der Anteil des Stroms, welcher beim Anlegen einer äußeren Spannung durch die Korngrenzen GB" fließt, exakt eingestellt werden. Das ist für die Herunterskalierung der Größe der Kontakte und die Größenordnung des Stromsignales von Bedeutung. Typischerweise muss der auswertbare Strom in Bauelementen mit herunterskalierten Kontakten ungefähr 10⁻⁹ A überschreiten.

Der oberflächennahe Bereich 11" ist an den Außenflächen durch die Modifikation teilweise amorphisiert und kann teilweise rekristallisiert sein. In dem Kristallit bildet sich unterhalb des modifizierten Bereichs 11" und unterhalb der Korngrenzen GB" eine Raumladungszone mit einem elektrischen Feld aus, deren Ende mit 16 gekennzeichnet ist, d.h. die Raumladungszone überdeckt den modifizierten Bereich 11' und äußere Bereiche des verbleibenden Kristallits 11, d.h. das Ende der Raumladungszone 16 liegt weiter innerhalb eines Kristallits als die Strukturgrenze 15. Gemäß verschiedenen Ausführungsformen kann die Strukturgrenze 15 optional sein.

In der Raumladungszone befinden sich keine frei beweglichen Ladungsträger sondern nur nicht bewegliche, ionisierte Störstellen. Beim Überschreiten einer kritischen elektrischen Feldstärke bzw. der Schwellwert-Spannung Uₖᵣᵢₜ in der Raumladungszone, kann im piezo- oder ferroelektrischen Material ein struktureller Phasenübergang verursacht werden. Die Strukturgrenze 16 trennt die Bereiche hoher Leitfähigkeit in einer ohne Verspannung stabilen piezo- oder ferroelektrischen Phase von den Bereichen geringer Leitfähigkeit in einer unter Verspannung stabilen piezo- oder ferroelektrischen Phase. Die Unterschiede in der elektronischen Bandstruktur und in der spontanen Polarisationsladung beider Phasen an der Strukturgrenze 16 verursachen eine stufenförmige Änderung des Leitungsbandes und des Valenzbandes des piezo- oder ferroelektrischen Materials. Die stufenförmige Änderung des Leitungsbandes und des Valenzbandes verursacht die Lokalisation spontaner Polarisationsladung an der Strukturgrenze 16 (vgl. Fig. 5C).

Beispielsweise kann eine Schichtenstruktur, wie in Fig. 5D veranschaulicht, Folgendes aufweisen: eine Schicht mit mehreren ferroelektrischen Kristalliten 502a, 502b, die an den Grenzen 506 zwischen den ferroelektrischen Kristalliten 502a, 502b zumindest teilweise elektrisch isolierend ausgebildet sind, so dass ein Stromfluss zwischen den ferroelektrischen Kristalliten 502a, 502b durch die Grenze 506 hindurch gehemmt ist. Ferner kann die Schicht zwischen zwei elektrisch leitfähigen Kontaktelementen angeordnet sein. Die Schichtenstruktur kann beispielsweise auf einem Substrat 504 angeordnet sein. Dabei kann das Substrat eine Metallisierung aufweisen (als elektrische Kontaktierung der ferroelektrischen Kristallite) oder das Substrat selbst kann elektrisch leitfähig sein.

Die Korngrenze GB kann elektrisch leitfähig sein, z.B. verursacht durch ein Erzeugen von Vakanzen in den ferroelektrischen Kristalliten 502a, 502b mittels Bestrahlens. Ferner kann in dem Korngrenzen-Bereich 506 mittels der Modifikation (z.B. selektiven Sputterns) ein metallischer bzw. elektrisch leitfähiger Bereich gebildet werden, so dass der Korngrenzen-Bereich 506 einen oder mehrere Schottky-Übergänge aufweist, welche einen lateralen Stromfluss zwischen den ferroelektrischen Kristalliten 502a, 502b unterdrücken bzw. verhindern oder hemmen.

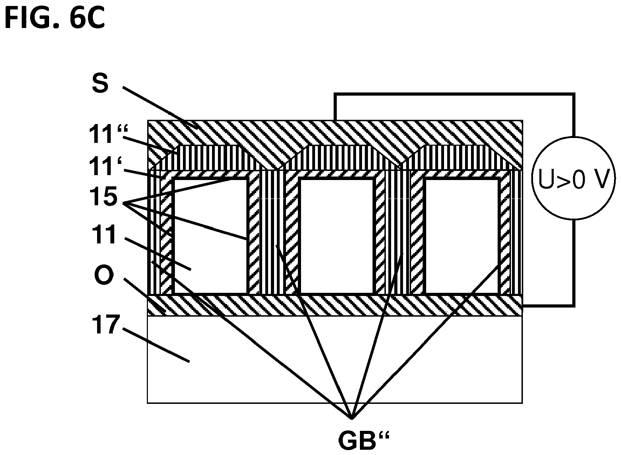

Die Figuren 6A bis 6C zeigen eine kontaktierte modifizierte polykristalline, piezo- oder ferroelektrische Dünnschicht mit einem gleichrichtenden Kontakt S und einem nichtgleichrichtenden Kontakt O im Querschnitt ohne eine von außen angelegte Spannung U (in Fig. 6A), beim Anlegen einer äußeren Spannung U<0 V (in Fig. 6B) und beim Anlegen einer äußeren Spannung U > 0 V (in Fig. 6C). Die Dicke des modifizierten oberflächennahen Bereichs beträgt d", die Dicke des Bereichs der verspannten Phase des Kristallits 11' ergibt sich aus der Differenz von d' und d".

Ist der nichtgleichrichtende Kontakt O geerdet und wird an den gleichrichtenden Kontakt S eine negative Spannung U < 0 V angelegt, dann verschiebt sich die Grenze 15 zwischen der verspannten und der unverspannten Phase in die entsprechenden Kristallite hinein (Fig. 6B). Ferner können sich auch die Vakanzen entsprechend dem angelegten elektrischen Feld verschieben.

Ist der nichtgleichrichtende Kontakt O geerdet und wird an den gleichrichtenden Kontakt S eine positive Spannung U > 0 V angelegt, dann verschiebt sich die Grenze 15 zwischen der verspannten und der unverspannten Phase in Richtung Außenbereiche der Kristallite (Fig. 6C). Ferner können sich auch die Vakanzen entsprechend dem angelegten elektrischen Feld verschieben.

Aufgrund der Ausbildung einer Raumladungszone zu beiden Seiten der modifizierten Korngrenzen GB", fließt beim Anlegen einer Spannung zwischen dem gleichrichtenden Kontakt S und dem nichtgleichrichtenden Kontakt O der Strom in elektrisch separierten Leitungspfaden, d.h. entlang der Korngrenzen GB" und innerhalb der Kristallite, jedoch nicht in den Außenbereichen der Kristallite. Durch entsprechende Einstellung des Modifikationsgrades der Korngrenzen GB", beispielsweise Ausdehnung oder chemische Komposition der Korngrenzen GB", kann der Anteil des Stroms, welcher beim Anlegen einer äußeren Spannung durch die Korngrenzen GB" fließt, exakt eingestellt werden. Das ist für die Herunterskalierung der Größe der Kontakte und die Größenordnung des Stromsignales von Bedeutung. Typischerweise muss der auswertbare Strom in Bauelementen ungefähr 10⁻⁹ A überschreiten.

Der Stromfluss in den einzelnen Kristalliten ist aufgrund der elektrischen Isolation der Korngrenzen GB" von den Kristalliten vom Stromfluss durch die Korngrenzen GB" getrennt. Das ist beispielsweise für die Realisierung von polykristallinen Widerstands- oder Photovoltaikbauelementen von Bedeutung.

Beispielsweise können passive Arrays mit polykristallinen piezo- oder ferroelektrischen Dünnschichten prozessiert werden. Die kontaktierte polykristalline piezo- oder ferroelektrische Dünnschicht kann in einer passiven Gitter-Struktur (Array) prozessiert werden. Dabei sind die Kristallite an jedem Kreuzungspunkt (m,n) der Array-Struktur mit m Zeilen und n Spalten separat steuerbar und elektrisch von den Kristalliten an jedem anderen Kreuzungspunkt der Array-Struktur isoliert. Zur Herstellung des passiven Arrays wird zuerst eine Metallschicht auf ein Trägermaterial aufgebracht und in m Zeilen strukturiert. Besonderes Augenmerk ist hierbei auf die Anordnung der einzelnen Kontaktpads der m Zeilen zu legen. Danach wird das polykristalline piezo- oder ferroelektrische Material auf die Metallschicht in Dünnschichtform aufgebracht. Danach wird die Dünnschicht im Bereich der Kreuzungspunkte der Array-Struktur so modifiziert, dass Bereiche 11" und Korngrenzen GB" an den Außenflächen der Kristallite der piezo- oder ferroelektrischen Dünnschicht gebildet werden, wobei die Modifikation der polykristallinen Dünnschicht zur Bildung von Vakanzen, anschließenden Drift und/oder Diffusion an die Außenflächen der einzelnen Kristallite und zur Änderung der Valenz der Vakanzen in den Außenbereichen der Kristallite und damit zur Bildung der Bereiche 11" und der Korngrenzen GB" führt. Danach wird die Dünnschicht im Bereich der Kontaktpads der m Zeilen lithographisch geöffnet, wobei die geöffnete Fläche kleiner als die Kontaktpadfläche ist. Es können auch zuerst die Bereiche des Kontaktpads geöffnet und danach die Dünnschicht an den Kreuzungspunkten des passiven Arrays modifiziert werden. Abschließend wird die Metallschicht in Dünnschichtform auf die polykristalline Dünnschicht aufgebracht und in n Spalten strukturiert.

Diese Prozessierung stellt eine Verbesserung gegenüber der standardmäßigen Prozessierung passiver Arrays dar, da die polykristalline piezo- oder ferroelektrische Dünnschicht im Bereich der Kreuzungspunkte nicht strukturiert werden muss. Des Weiteren bleibt die Oberfläche der Dünnschicht - abgesehen von der Dickenreduktion aufgrund der Modifikation mit Strahlen 2 - weitestgehend planar und das Aufbringen einer Metallschicht auf die polykristalline Dünnschicht setzt nicht die Bedeckung von hohen Kanten einer komplett zwischen Oberseite und Unterseite strukturierten polykristallinen Dünnschicht voraus. Bei einer komplett strukturierten polykristallinen Dünnschicht sind die Höhe der Kanten und damit die Dicke der kontaktierbaren polykristallinen Dünnschicht auf ca. 100 nm limitiert. Die erreichbare minimale Strukturgröße von passiven Arrays mit polykristallinen piezo- oder ferroelektrischen Dünnschichten ist durch die Kristallitgröße bestimmt und liegt im Bereich von wenigen Nanometern.

Beispielsweise kann bei einer asymmetrischen Form der Kristallite die Kristallitgröße eine gemittelte Größe sein, welche beispielsweise den durchschnittlichen Abstand der Kristallitoberfläche vom Schwerpunkt der Kristallite repräsentiert.

Die Modifikation kann mittels Ionenimplantation, mittels Plasma basierter Ionenimplantation PIII, mittels Laserbestrahlung oder mittels Elektronenstrahlen erfolgen, wobei bei der Ionenimplantation vorzugsweise Edelgasionen, beispielsweise Ar⁺-Ionen mit einer Fluenz im Bereich von 5x10¹⁵ cm⁻² bis 5x10¹⁸ cm⁻², vorzugsweise im Bereich von 1x10¹⁶ cm⁻² bis 1x10¹⁸ cm⁻², besonders bevorzugt im Bereich von 5x10¹⁶ cm⁻² bis 5x10¹⁷ cm⁻², und einer Ionenenergie von weniger als 1 keV, eingesetzt werden. Bei einer Fluenz 10¹⁷ cm⁻² der Ar⁺-Ionen, welche zur Modifikation einer ca. 600 nm dicken polykristallinen BiFeO₃-Dünnschicht verwendet werden, beträgt die Dicke d" des modifizierten Bereichs ca. 3-20 nm und die Differenz zwischen der Dicke des unmodifizierten und der modifizierten BiFeO₃-Dünnschicht ca. 100 nm.

Gemäß verschiedenen Ausführungsformen kann eine polykristalline piezo- und ferroelektrische Dünnschicht zur Verwendung als Absorbermaterial in der Photovoltaik verwendet werden. Kontaktierte modifizierte polykristalline piezo- oder ferroelektrische Dünnschichten können als Absorbermaterial mit reduzierter Oberflächenrekombination in einer pn-Heterostruktur mit zwei nichtgleichrichtenden Kontakten in der Photovoltaik verwendet werden. Freie Elektronen und Löcher werden in den Kristalliten durch Absorption von Licht erzeugt. Aufgrund der elektrischen Isolation zwischen den Kristalliten und den Korngrenzen GB" in modifizierten polykristallinen piezo- oder ferroelektrischen Dünnschichten, werden die in einem intrinsischen elektrischen Feld am pn-Übergang der pn-Heterostruktur separierten photogenerierten Ladungsträger weitestgehend ohne Oberflächenrekombination an die entsprechenden nichtgleichrichtenden Kontakte transportiert. Beispielsweise sind die Kristallite in den beiden Dünnschichten der pn-Heterostruktur säulenartig angeordnet. Beispielsweise sind CuInSe₂(CIGS)-Dünnschichten p-leitend, wachsen säulenartig, haben eine Bandlücke von 1,05 eV und können mit polykristallinem, n-leitenden BiFeO₃:Ti (BFTO) in p⁺n-Heterostrukturen Glas/Mo/CIGS/BFTO/Pt verwendet werden. Das BFTO kann vor dem Aufbringen der Oberflächenkontakte mittels Strahlen modifiziert werden, um die elektrische Isolation zwischen den Korngrenzen GB" und den Kristalliten des BFTO zu erhöhen.

Gemäß verschiedenen Ausführungsformen kann ein ferroelektrisches Material oder eine ferroelektrische Schicht beispielsweise ein ternäres, ferroelektrisches Oxid aufweisen. Dabei kann eine fixierte Grunddotierung (oder eine erste unbewegliche Dotierungsverteilung) und eine mobile Dotierung z.B. aufgrund von Sauerstoffvakanzen bereitgestellt sein oder werden. Die Dotierungen können beispielsweise mittels Diffusion, während des Wachstums oder mittels Implantation erfolgen bzw. erzeugt werden.

Bei ternären, ferroelektrischen Oxiden (z.B. in der Perowskit-Struktur) kann die lokale Leitfähigkeit mittels substitutionellem Einbringen von Fremdatomen mit anderer Valenz als die der Wirtsatome bei gleichzeitiger Erniedrigung der lokalen Bildung von Sauerstoffvakanzen erhöht werden, z.B. basierend auf dem Ersetzen (Substitution) des Fe³⁺ auf einem B-Gitterplatz in einem BiFeO₃-Perowskit mittels Ti⁴⁺ auf dem B-Gitterplatz in dem BiFeO₃-Perowskit.

Ferner kann auch beispielsweise das Ba²⁺ auf einem Ba-Gitterplatz in einem BaTiO₃-Perowskit mittels Gd³⁺ auf dem Ba-Gitterplatz in dem BaTiO₃ ersetzt werden.

Ferner kann auch beispielsweise das Sr²⁺ auf einem Sr-Gitterplatz in einem SrTiO₃-Perowskit wird durch Gd³⁺ auf Sr-Gitterplatz in SrTiO₃ ersetzt werden.

Gemäß verschiedenen Ausführungsformen können die Fremdatome ähnliche Ionenradien wie die substitutionell ersetzten Wirtsatome aufweisen. Außerdem können die Fremdatome eine höhere Zahl an Valenzelektronen aufweisen, als das ersetzte Wirtsatom.

Aufgrund der Zunahme der Komplexität bei der Datenverarbeitung und/oder der Datenübermittlung können neue Lösungen erforderlich sein, um mittels kryptographischer Algorithmen die Aufrechterhaltung der Datensicherheit zu ermöglichen. Dabei kann zur Entwicklung eines verbesserten (sichereren) kryptographischen Algorithmus die nichtflüchtige und/oder nichtlineare Widerstandsänderung in Widerstandsschaltern (Memristoren) mittels Anlegens einer Spannung (und dem daraus resultierenden Strom) für die effiziente Erzeugung einer zweiten (oder höheren) Harmonischen (Oberwelle oder Oberschwingung einer Grundfrequenz) ausgenutzt werden (z.B. mit einem günstigen Verhältnis der Leistung der höheren Harmonischen zur ersten Harmonischen, z.B. mit einem Leistungsverhältnis von größer als ungefähr 0,1 %). Anschaulich können mittels eines memristiven Systems (auch bezeichnet als Memristor-Anordnung, Memristor-Schaltung, Memristor-Schaltkreis, Schaltkreis-Anordnung, oder Memristor-Schaltkreis-Anordnung) Daten, die gespeichert, verarbeitet und/oder übertragen werden sollen, vor dem unberechtigten Zugriff Dritter geschützt werden.

Beispielsweise lassen sich mittels der Nutzung von Cloud-Speichern in der Datenbearbeitung Vorteile im Vergleich zu herkömmlichen Speichermethoden realisieren. Zum Beispiel können Cloud-Speicher keine Installation von zusätzlicher Software erfordern oder ohne Wartung oder zusätzliche Investitionen auskommen und die Möglichkeit bieten durch Skalierungseffekte (z.B. die gemeinsame Nutzung von Speicherplatz) die Gesamtspeicherkosten zu reduzieren. Allerdings kann das Nutzen von Cloud-Speichern immer noch mit einigen Herausforderungen beim Übertragen großer Datenmengen verbunden sein, z.B. mit langen Übertragungszeiten, Sicherheitsrisiken und Schwierigkeiten bei der Synchronisierung von Daten. Um die Sicherheit beim Bearbeiten oder Übertragen von Daten zu gewährleisten oder zu verbessern, kann beispielsweise eine sogenannte "on-the-wire"-Verschlüsselung genutzt werden. Dazu gehören beispielsweise Technologien wie SFTP und FTPS. Auf Memristoren basierende kognitive Systeme lassen sich zur Bearbeitung von Daten verwenden.

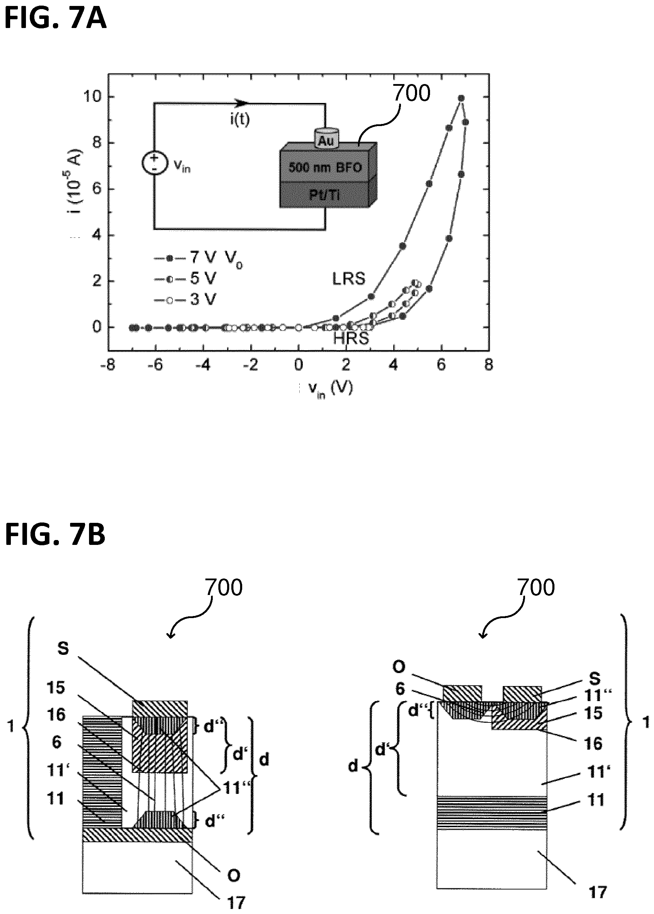

Wie in den Figuren 7A bis 7C in schematischen Darstellungen veranschaulicht ist, können der hochohmige Zustand (in Figur 7A auch bezeichnet mit HRS) und der niederohmige Zustand (in Figur 7A auch bezeichnet mit LRS) eines Einzelschicht-Memristors, wie in Fig. 7A und Fig. 7B dargestellt, verwendet werden, um zwei voneinander unterscheidbare Sätze von ersten, zweiten (und/oder höheren) Harmonischen zu erzeugen. Beispielsweise kann das Leistungsverhältnis der jeweils zweiten oder dritten Harmonischen bezogen auf die erste Harmonische in einer Memristor-Schaltkreisanordnung (in einem memristiven System oder in einer Schaltkreisanordnung mit mindestens einem Memristor) mit asymmetrischer Strom-Spannungs-Hysterese (vgl. Fig. 7A) größer sein als das entsprechende Leistungsverhältnis einer Memristor-Schaltkreisanordnung mit einer symmetrischen Strom-Spannungs-Hysterese (Hysterese der U-I-Kennlinien). Eine Strom-Spannungs-Hysterese kann beispielsweise auftreten, wenn ein periodisches Eingangssignal oder ein Signal mit einer periodischen Amplitude (z.B. mit einer periodische Stromstärke und/oder mit einer periodischen Spannung) in einem Bauteil zu unterschiedlichen Widerständen führt, je nachdem, ob die Stromstärke zunimmt oder abnimmt. Mit anderen Worten können sich entlang des Astes der U-I-Kennlinie mit ansteigender Stromstärke und entlang des Astes der U-I-Kennlinie mit sinkender Stromstärke verschiedene U-I Paare einstellen, so dass bei identischer Stromstärke über dem Bauteil eine unterschiedliche Spannung abfallen kann (vgl. Fig. 7A).

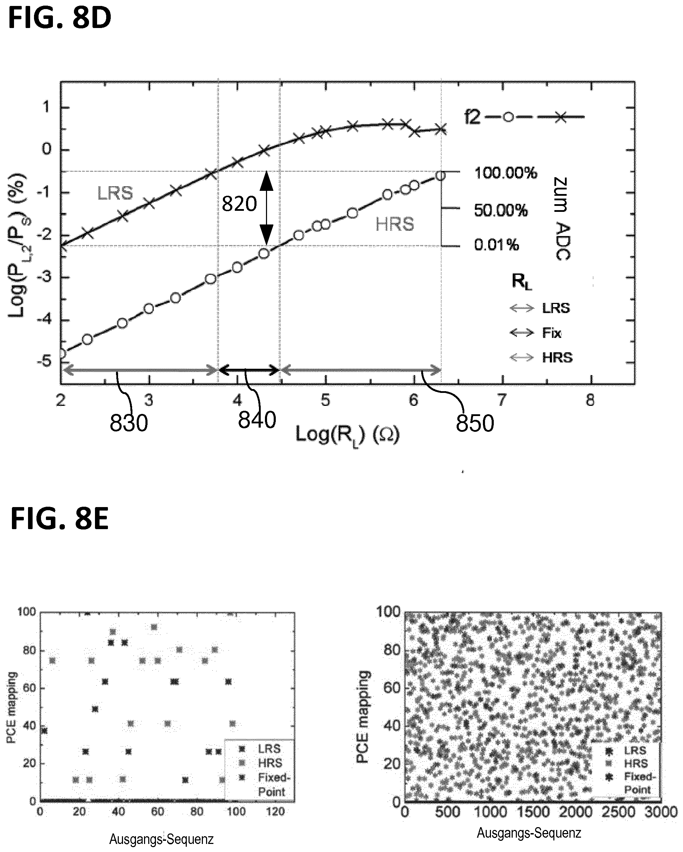

Gemäß verschiedenen Ausführungsformen, welche zur weiteren Erläuterung der Erfindung dienen und nicht Teil dieser sind, lassen sich beispielsweise Eingabedaten mittels einer Memristor-Schaltkreisanordnung kodieren (verschlüsseln), wobei der Memristor (zumindest in einem seiner Zustände) eine asymmetrische Strom-Spannungs-Hysterese aufweisen kann, so dass die verschlüsselten oder kodierten Daten beispielsweise eine geringe Korrelation oder einen Autokorrelationsfaktor (Korrelation zueinander) von ungefähr 0 (oder mit einem Autokorrelationsfaktor in einem Bereich von ungefähr -0,3 bis ungefähr 0,3, z.B. in einem Bereich von ungefähr -0,2 bis ungefähr 0,2, z.B. in einem Bereich von ungefähr -0,1 bis ungefähr 0,1 oder von 0 bis 0,1) aufweisen. Anschaulich sind Daten mit geringer Korrelation oder einem Autokorrelationsfaktor nahe null nur schwer von korrelierten Zufallsdaten zu unterscheiden, wodurch sich nur schwierig Rückschlüsse auf die ursprünglichen Daten ziehen lassen oder nur schwierig die Eigenschaften der kodierten Daten analysiert werden können, was die Sicherheit der übermittelten Daten erhöhen kann, vgl. beispielsweise Fig. 8E.

Beispielsweise kann mittels der Funktionalität von Memristoren die Arbeitsweise eines biologischen Gehirns emuliert werden. Beispielsweise können Memristoren als nichtflüchtige Widerstandsspeicher, künstliche neuronale Netze, chaotische Schaltungen und/oder nicht-flüchtige mehrmals konfigurierbare (bzw. in der Konfiguration veränderbare) Logikblöcke verwendet werden.

Eine auf einem Memristor basierende Kryptographie kann dabei Vorteile bei der Verwendung auf Memristoren basierender kognitiver Systeme aufweisen. Die auf einer Hardware basierende Verschlüsselung, bei der die Authentifizierung beispielsweise innerhalb der Hardware erfolgen kann und/oder ein Teil der Hardware sein kann, kann im Gegensatz zu einer Software-basierten Verschlüsselung nur in geringem Maße anfällig für Brute-Force-Attacken, Schadcode und/oder sogenanntes Hacking sein. Eine auf Software basierende Verschlüsselung (oder Software-basierte Verschlüsselungsmethode) kann Engpässe verursachen und/oder kann weniger in der Lage sein, Daten schnell und effizient zu verschlüsseln, da sie an eine bereitgestellte Hardware gebunden sein kann. Eine Alternative für die Datenverarbeitung oder Datensicherung kann das Verwenden von Memristoren sein, mittels derer Daten schneller und mit geringerem Stromverbrauch als mittels herkömmlicher Systeme verarbeiten werden können.

Eine memristive BiFeO₃ (BFO) Dünnschicht kann beispielsweise auf einem SiO₂/Si Substrat und Verwendung von Pt/Ti Elektroden zum elektrischen Kontaktieren der Dünnschicht großtechnisch hergestellt werden, z.B. mittels gepulster Laserdeposition (PLD) oder mit einer anderen Gasphasenabscheidung. Ferner können mittels eines (z.B. kreisförmigen) Magnetrons Gold-Kontakte auf die BiFeO₃ (BFO) Dünnschicht gesputtert werden. Gemäß verschiedenen Ausführungsformen kann eine BiFeO₃ (BFO) Schicht auf einem Substrat, aufweisend Silizium und/oder Siliziumoxid, abgeschieden werden, wobei zuvor auf das Substrat eine elektrisch leitfähige Schicht oder zumindest elektrisch leitfähige Strukturen abgeschieden wurden, z.B. eine Metallelektrode oder mehrere Metallelektroden, aufweisend beispielsweise Titan und/oder Platin.

Die Strom-Spannung-Hysterese (die I-U-Kennlinien) einer memristiven BiFeO₃ -Dünnschicht lässt (lassen) sich beispielsweise mittels einer geeigneten Schaltung messen, wobei die Au/BFO/Pt/Ti-Struktur beispielsweise direkt mit der Stromquelle verbunden sein kann oder werden kann. In Fig. 7A ist exemplarisch eine I-U-Kennlinie eines BFO-Memristors gezeigt, wobei das hysteretische bipolare Schalten der Widerstandszustände zwischen einem hochohmigen Zustand (HRS) und einem niederohmigen Zustand (LRS) mittels einer beispielsweise sinusförmigen Eingangsspannung mit einer Spannungsamplitude von beispielsweise 7 V wiederholbar bzw. reproduzierbar erfolgen kann, wobei eine Spannungsamplitude von 5 V beispielsweise nicht ausreichen kann, um den Memristor vollständig zwischen einem HRS und einem LRS zu schalten, und der Memristor für eine geringe Spannungsamplitude (beispielsweise von 3 V oder in einem Bereich von ungefähr 1 V bis 3 V ungefähr) die Eigenschaften eines hochohmigen Widerstand aufweisen kann, mit einem Widerstandswert im Giga-Ohm-Bereich, z.B. in einem Bereich von ungefähr 10⁸ Ω bis ungefähr 10¹⁰ Ω.

Beispielsweise kann ein Widerstandszustand für einen Memristor mittels eines Spannungspulses geschrieben werden, also mittels eines positiven oder negativen Spannungspulses (z.B. mit einer Pulshöhe von 7 V). Der Spannungspuls kann dabei eine Pulslänge im Nanosekunden-Bereich, im Mikrosekunden-Bereich, im Millisekunden-Bereich, oder im Sekunden-Bereich aufweisen, oder länger als ungefähr eine Sekunde sein oder kürzer als eine Nanosekunde sein.

Der hochohmige Zustand (HRS) und der niederohmige Zustand (LRS) eines Memristors 700 (vgl. beispielsweise Figuren 7A bis 7C) lassen sich beispielsweise als Widerstandswerte im Verlauf der U-I-Kennlinie, wie sie mit einer sinusförmigen Eingangsspannung mit einer Spannungsamplitude von 7 V erzeugt werden kann, bei einem Spannungswert von 2 V definieren. Anschaulich können der HRS und der LRS eines Memristors als Widerstandswert bei einer konstanten Spannung definiert werden, wobei eine Spannungsamplitude von 7 V notwendig sein kann, um den Memristor in einen HRS und einen LRS zu schalten. Mit anderen Worten wird für das Ermitteln des Widerstands, der sich aus dem Quotient von Spannung und Strom ergibt, das U-I-Paar bei 2 V herangezogen, so dass der Widerstandswert eines HRS oder LRS (z.B. eindeutig) definiert sein kann oder werden kann.

Beispielsweise können die Widerstandswerte eines BFO-Memristors 700 mit einer 0,217 mm² großen Kontaktoberfläche 1188*10⁶ Ω im HRS und 13*10⁶ Ω im LRS betragen, wobei das Verhältnis des Widerstandswerts im HRS (R_{HRS}) und des Widerstandswerts im LRS (R_{LRS}) 91,4 betragen kann. Es versteht sich, dass die elektrischen Eigenschaften und Kenngrößen des Memristors entsprechend angepasst werden können. Ferner können die verschiedenen Widerstandszustände auch mittels mehrerer Memristoren oder mittels einer Widerstandsschaltung mit mehreren Widerständen erzeugt werden, wobei beispielsweise mindesten ein nichtlinearer Widerstand verwendet werden kann. Anschaulich kann ein Widerstandselement verwendet werden, welches mindestens zwei verschiedene Widerstandszustände bereitstellen kann, wobei mindestens ein Widerstandszustand des Widerstandselements entsprechende Eigenschaften aufweisen kann, um effizient höhere Harmonische zu erzeugen.

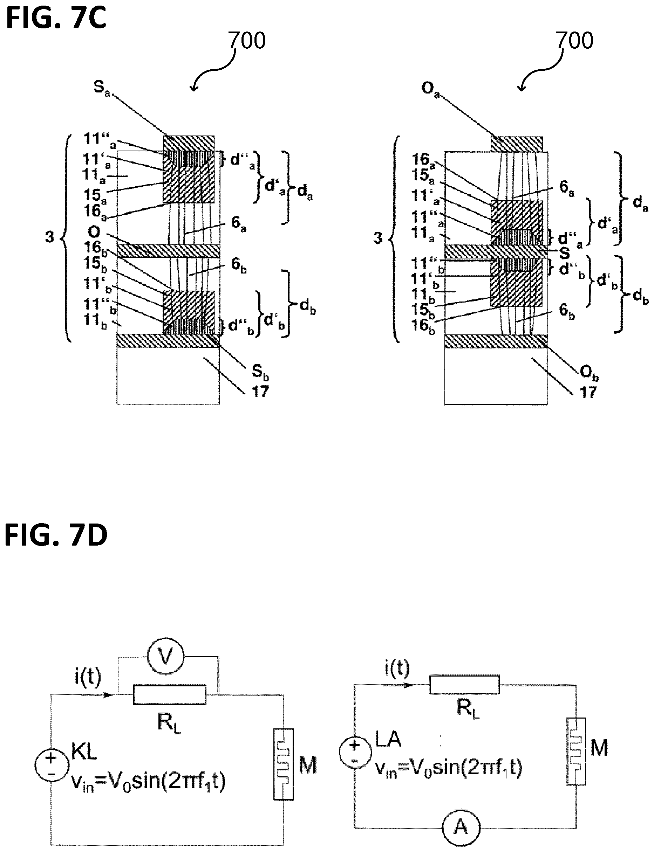

Fig. 7C veranschaulicht einen komplementären Widerstandsschalter (einen Memristor), welcher zwei Memristorelemente a, b bzw. zwei ferroelektrische Schichten a, b aufweisen kann, wobei dieser Memristor in einer Memristor-Schaltungsanordnung verwendet werden kann, wie beispielsweise in Fig. 7D veranschaulicht ist.

In Fig. 7D ist ein Schaltkreis (bzw. eine Memristor-Schaltungsanordnung) dargestellt, welcher beispielsweise zum Erzeugen und/oder Charakterisieren der ersten, zweiten (oder von höheren) Harmonischen verwendet werden kann. Dieser kann beispielsweise eine Stromquelle (z.B. eine Keithley-Stromquelle) oder beispielsweise einen Lock-In-Verstärker als Eingangsspannungsquelle aufweisen, sowie einen Lastwiderstand (R_{L}). Der entsprechende Keithley-Aufbau (KL) und der Lock-In-Verstärker-Aufbau (LA) kann verwendet werden, um die Amplitudenabhängigkeit und Frequenzabhängigkeit der Leistungsumwandlungseffizienz (PCE) zu ermitteln oder zu analysieren. Anschaulich kann die Leistungsumwandlungseffizienz einen Anteil der Gesamtleistung repräsentieren, welche am Lastwiderstand R_{L} umgesetzt wird. Die am Lastwiderstand umgesetzte Leistung kann sich aus dem Produkt der Stromstärke und der am Memristor abfallenden Spannung ergeben, und kann bei gegebenem Lastwiderstand eine Funktion des Widerstandswerts des Memristors sein. Mit anderen Worten lassen sich anhand des PCE Rückschlüsse auf den Schaltungszustand des Memristors (HRS oder LRS) ziehen.

Beispielsweise kann der Memristor 700 ein einfacher Widerstandsschalter (ein einlagiger Memristor) sein, wie in Fig. 7B dargestellt, oder ein komplementärer Widerstandsschalter (ein zweilagiger Memristor), wie in Fig. 7C dargestellt ist und vorangehend beschrieben ist.

Wie in Fig. 7D dargestellt ist, kann eine serielle Verschaltung eines Memristors (oder eines Widerstandselements aufweisend einen Memristor) mit dem Lastwiderstand R_{L} verwendet werden, wobei beispielsweise eine Strom/Spannungsquelle (z.B. Keithley 2400) verwendet werden kann, um eine sinusförmige Eingangsspannung zu erzeugen, und die über dem Lastwiderstand abfallende Spannung zu messen oder wobei beispielsweise ein Lock-In-Verstärker (z.B. Stanford Research Systems - SR 830) verwendet werden kann, um eine sinusförmige Eingangsspannung zu erzeugen, und den Stromfluss durch den Lastwiderstand hindurch in Abhängigkeit verschiedener Harmonischer zu messen oder zu analysieren.

Fig. 7D zeigt einen Schaltkreis mit einem Memristor M, welchem eine sinusförmige Eingangsspannung Vᵢₙ zugeführt wird oder werden kann. Dabei kann der Memristor M ein nichtlinearer Widerstand mit Gedächtnis sein, und höhere Harmonische in Abhängigkeit von dessen Widerstandszustand (HRS oder LRS) und dem Lastwiderstand R_{L} erzeugen. Wie beschrieben können beispielsweise zwei verschiedene Aufbauweisen benutzt werden, der KL-Aufbau, bei dem die Spannung über dem Lastwiderstand R_{L} abgegriffen wird, und der LA-Aufbau, unter Verwendung einer Strommessung.

Aufgrund der beschränkten Impulslänge, die beispielsweise ein Keithley 2400, bereitstellen kann, kann ein LA-Aufbau für die Analyse der Frequenzabhängigkeit der PCE für höhere Grundfrequenzen f1 nützlich sein. Gemäß verschiedenen Ausführungsformen kann der Lastwiderstand als Spannungsteiler fungieren, wobei und die Leistungsumwandlungseffizienz vom Lastwiderstand abhängig sein kann.

Beispielsweise lässt sich die Leistungsumwandlungseffizienz (PCE) eines Memristor-Schaltkreises in Abhängigkeit des Lastwiderstands für verschiedene Ordnungen der Harmonischen charakterisieren (z.B. der zweiten Harmonischen in Relation zur ersten Harmonischen, z.B. der dritten Harmonischen in Relation zur ersten Harmonischen, usw.; oder der höheren Harmonischen zueinander).

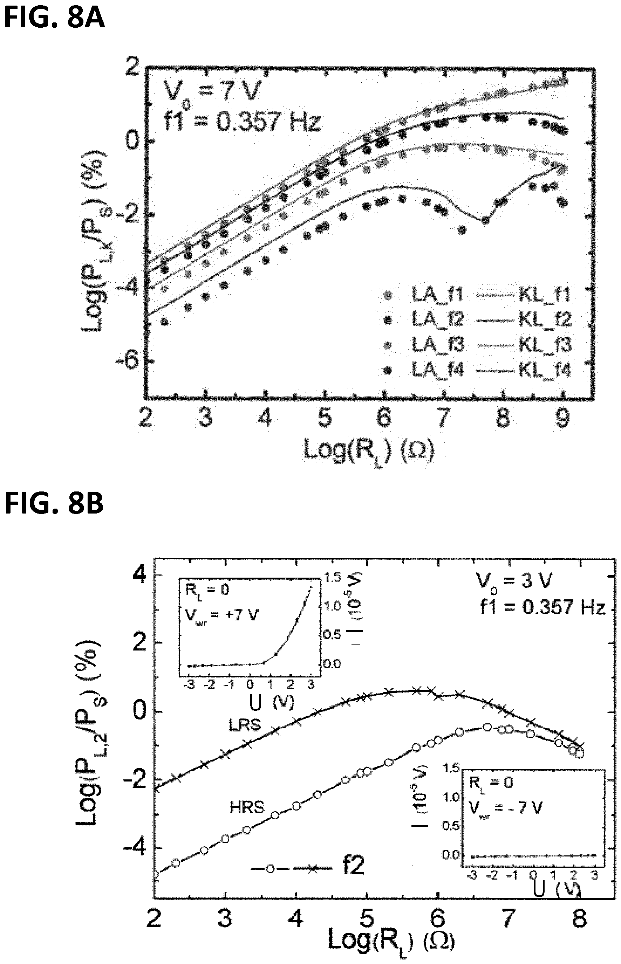

Beispielsweise kann anschaulich das logarithmische Leistungsverhältnis (log(P_{L}(k)/P_{S})) in Abhängigkeit des Lastwiderstand R_{L} für verschiedene Amplituden der Eingangsspannung V0 bei einer Frequenz von 0,375 Hz charakterisiert werden, wie in Fig. 8A beispielhaft veranschaulicht ist, mit der Gesamtleistung (der eingebrachten Leistung oder Leistung der ersten Harmonischen) P_{S} und die am Lastwiderstand umgesetzten Leistung P_{L}. Dabei entspricht f1 der ersten Ordnung der Harmonischen (Grundfrequenz), f2 der zweiten Ordnung der Harmonischen, f3 der dritten Ordnung der Harmonischen und f4 der vierten Ordnung der Harmonischen.

Beispielsweise kann die Leistungsumwandlungseffizienz (PCE) das Leistungsverhältnis der Harmonischen und/oder das logarithmische Leistungsverhältnis (log(P_{L}(k)/P_{S})) repräsentieren, wobei P_{S} die Gesamtleistung der Strom-Spannungsquelle sein kann.

Beispielsweise kann das logarithmische Leistungsverhältnis log(P_{L}(k)/P_{S}) (wobei k = 1, 2, 3, 4 die Ordnung (Frequenz) der Harmonischen f1, f2, f3, f4 bezeichnet) eine lineare Abhängigkeit für verschiedene Amplituden des sinusförmigen Eingangssignals (beispielsweise 7 V, 5 V oder 3 V) vom logarithmischen Lastwiderstand log(R_{L}) in einem unteren Wertebereich des R_{L} (z.B. 100 Ω bis 10⁵ Ω) aufweisen.

Beispielsweise kann der spannungsgesteuerte Widerstandszustand (beispielsweise HRS oder LRS) des Memristors das Leistungsverhältnis (P_{L}(k)/P_{S}) bei gegebenen Lastwiderstand R_{L} und gegebener Amplitude in dem unteren Wertebereich des R_{L} beeinflussen. Ferner kann das maximale Leistungsverhältnis für eine Amplitude von V₀ =7 V größer sein als bei einer Amplitude von V₀ =5 V.

Beispielsweise kann für eine Kryptographie und/oder Kryptoanalyse die Verwendung einer Amplitude im Bereich von 1 V bis 3 V, die vergleichbar zu der Vorspannung zum Auslesen von BiFeO₃ Widerstandsspeichern ist, ausreichen, um zwischen den beiden Sätzen der durch einen Memristor erzeugten zweiten (oder höheren) Harmonischen im HRS und LRS zu unterscheiden.

Das logarithmische Leistungsverhältnis log(P_{L}(k)/P_{S}) kann eine lineare Funktion von log(R_{L}) in einem unteren Wertebereich des R_{L} (z.B. 100 Ω bis 10⁵ Ω) sein und in einem oberen Wertebereich (z.B. größer als 10⁵ Ω) sättigen. Anschaulich nimmt der Anstieg des logarithmischen Leistungsverhältnisses mit steigendem Lastwiderstand ab, wie beispielsweise in Fig. 8A und Fig. 8B veranschaulicht.

Diese Sättigung des logarithmischen Leistungsverhältnisses in einem oberen Wertebereich des Lastwiderstandswerts des Lastwiderstands kann sich aufgrund des Abfallens eines Großteils der Eingangsspannung über dem Lastwiderstand ergeben, wobei dann der BFO-Memristor nicht vollständig schalten kann.

Der Übergangspunkt (TRP) von PCE-Kurven von HRS zu LRS kann als der Durchschnitt der logarithmischen Widerstandswerte R_{HRS} und R_{LRS} definiert sein oder werden, wobei: ${Log}_{10} \left({R}_{L}\right) = \left({Log}_{10} \left({R}_{HRS}\right) + {Log}_{10} \left({R}_{LRS}\right)\right) / 2.$

Ein Beispiel von entsprechenden Widerstandswerten der Harmonischen zweiter, dritter und vierter Ordnung und der Grundfrequenz ist in folgender Tabelle 17 zusammengefasst.

| V0 (V) | Log(RLTRP(Ω)) | PL, 1 (%) | PL, 2 (%) | PL, 3 (%) | PL, 4 (%) | ∑ |
|---|---|---|---|---|---|---|
| 7 | 8,100 | 17,990 | 6,330 | 0,725 | 0,001 | 25,046 |
| 5 | 8,360 | 20,130 | 4,320 | 0,470 | 0, 002 | 24,922 |
| 3 | 8, 699 | 21,110 | 2,810 | 0,330 | 0, 002 | 24,252 |

Beispielsweise kann in einer Schaltung, aufweisend einen BFO-Memristor mit einer asymmetrischen U-I-Kennlinie (wie beispielsweise in Fig. 7D gezeigt), innerhalb eines Halbzyklus (der sinusförmigen Eingangsspannung) der Mittelwert der Leistung durch den Lastwiderstand umgesetzt (z.B. in Wärme umgewandelt) werden. Daher kann die Summe ∑ der P_{L}(k) am TRP ca. 25% betragen. Beispielsweise kann bei einer Amplitude der Eingangsspannung von 7 V der TRP 8,1 betragen, wobei die Summe aller vier PCEs 25,046% betragen kann (siehe Tab.17).

Der Maximalwert der PCE der zweiten Harmonischen kann bei einem Lastwiderstand von etwa 300 MΩ 6,67% betragen (Verhältnis R_{L} /R_{HRS} = 0,253). Der Maximalwert der PCE der zweiten Harmonischen kann dabei größer als der eines Dioden-Brücken-Frequenzverdopplers sein.

Fig. 8A veranschaulicht eine Leistungsumwandlungseffizienz (PCE) eines Einzel-Lagen-Memristors in Abhängigkeit vom Lastwiderstand R_{L} vergleichsweise gemessen mit dem LA-Aufbau und dem KL-Aufbau. Dabei kann die Grundfrequenz f1 der Eingangsspannung Vᵢₙ die Amplitude V₀ aufweisen. Die Amplitude der Eingangsspannung Vᵢₙ kann dabei groß sein, z.B. 7 V betragen und der Memristor kann dabei kontinuierlich zwischen HRS und LRS geschaltet werden.

Beispielsweise können die PCE Werte für P_{L}, P_{L2} und P_{L3} am TRP mit zunehmender Amplitude der Eingangsspannung und abnehmender Grundfrequenz zunehmen (Tab. 17). Bei größeren Amplituden kann bei gegebener Grundfrequenz weniger Leistung am Lastwiderstand umgesetzt werden, da mehr harmonische Schwingungsleistung erzeugt wird.

Beispielsweise kann ein vollständig schaltender Memristor, der beispielsweise mit einer Eingangsspannung mit einer Amplitude von 7 V betrieben wird, mehr harmonische Schwingungsleistung erzeugen, als ein unvollständig schaltender Memristor, der beispielsweise mit einer Eingangsspannung einer Amplitude von 5 V oder 3 V betrieben wird. Ferner kann die Hysterese der U-I-Kennlinien Memristoren asymmetrisch, wie in Fig. 7A veranschaulicht, oder symmetrisch (z.B. acht-förmig oder mandel-förmig) sein. Überschneiden sich die U-I-Kennlinien beispielsweise im Koordinatenursprung kann dies als symmetrisch acht-förmig bezeichnet werden. Anschaulich kennzeichnet sich der symmetrisch acht-förmige Verlauf dadurch, dass gleichartige U-I-Paare (worin negative Wertepaare mit einbezogen sind, beispielsweise sind 1V/1A gleichartig zu -1A/-1V) jeweils auf den Ästen der U-I-Kennlinie mit steigender Spannung auftreten.

**Tab.18**

| Typ | Log (RLTRP(Ω)) | PL,1 (%) | PL,2 (%) | PL,3 (%) | PL,4 (%) | ∑ |
|---|---|---|---|---|---|---|
| Asymmetrisch | 8,100 | 17,990 | 6,330 | 0,725 | 0,001 | 25,046 |
| acht-förmig | 8,100 | 43,700 | 0,360 | 2,350 | 0,030 | 46, 440 |
| mandel-förmig | 8,100 | 43,700 | 0,360 | 2,470 | 0,003 | 46,533 |

Die Widerstandswerte R_{HRS} und R_{LRS} einer acht-förmigen U-I-Kennlinie oder mandel-förmigen U-I-Kennlinien können als Widerstandswerte bei +2 V der U-I-Kennlinie definiert werden. Ist dann beispielsweise der Verlauf einer asymmetrischen und symmetrischen (z.B. acht-förmig oder mandel-förmig) U-I-Kennlinie der ersten halben Periode der sinusförmigen Eingangsspannung identisch, ist ebenfalls der Übergangspunkt identisch und kann beispielsweise 8,1 betragen (siehe Tab.18).

Die PCE der Grundfrequenz (Harmonische erster Ordnung), der Harmonischen zweiter, dritter und vierter Ordnung sind exemplarisch in Tab.18 gezeigt. In memristiven Systemen mit symmetrischen Strom-Spannungs-Hysteresen (symmetrisch verlaufenden U-I-Kennlinien) kann ein Großteil der Leistung eines Zyklus oder Periode der sinusförmigen Eingangsspannung am Lastwiderstand umgesetzt werden, wobei die Summe der einzelnen PCE am Übergangspunkt beispielsweise 50 % betragen kann.

Beispielsweise kann die PCE der zweiten Harmonischen eines Memristors, aufweisend eine symmetrische acht-förmige oder symmetrische mandel-förmige Hysterese, etwa 1/18 der PCE der zweiten Harmonischen eines Memristors, aufweisend eine asymmetrische Hysterese, betragen. Ferner kann die PCE der dritten Harmonischen eines Memristors, aufweisend eine symmetrische acht-förmige oder symmetrische mandel-förmige Hysterese, etwa das Dreifache der dritten Harmonischen PCE eines Memristors, aufweisend eine asymmetrische Hysterese, betragen. Dieser Unterschied kann ein aus der Unterdrückung der Harmonischen mit gerader Ordnung durch die Symmetrien der ungeraden Viertelwellen und Symmetrien der Halbwellen resultieren, wobei mehr Leistung in Harmonischen mit ungerader Ordnung verteilt werden kann.

Beispielsweise kann das Leistungsverhältnis von Harmonischen mit unterschiedlicher Ordnung eines Memristors mit symmetrischer acht-förmiger Hysterese beispielsweise nur unwesentlich von dem Leistungsverhältnis der Harmonischen mit unterschiedlicher Ordnung eines Memristors mit mandelförmiger Hysterese abweichen (z.B. nur eine relative Abweichung von weniger als 10 % aufweisen).

Für die Anwendung von BFO-Memristoren in der Kryptographie und der Kryptoanalyse, kann es von Bedeutung sein, ob die mittels eines Memristors erzeugten Harmonischen mit höherer Ordnung im HRS sich von denen im LRS unterscheiden. Beispielsweise kann ein BFO-Memristor oder eine Memristoren-Schaltung zwischen einem LRS und einem HRS durch das Anlegen einer Schreibspannung (beispielsweise 7 V oder -7 V) geschaltet werden. Die Leistungsverhältnisse können mittels einer sinusförmigen Eingangsspannung (Auslesespannung) mit geringerer Amplitude (beispielsweise von 3 V), gemessen bzw. ausgelesen werden, während der Memristor in einem LRS oder einem HRS verbleibt.

Beispielsweise können für einen gegebenen Wert des Lastwiderstands R_{L} die Leistungsverhältnisse (der Harmonischen) einer memristiven Struktur, die sich in einem LRS befindet größer sein als die Leistungsverhältnisse einer memristiven Struktur, die sich im HRS befindet.

Beispielsweise kann der größte PCE-Wert (das maximale Leistungsverhältnis) einer Harmonischen zweiter Ordnung einer memristiven Struktur, die sich in einem LRS befindet beispielsweise 4,072 % betragen und kann bei einem Lastwiderstand von beispielsweise 800 kΩ liegen, wobei das maximale Leistungsverhältnis einer Harmonischen zweiter Ordnung einer memristiven Struktur, die sich in einem HRS befindet, beispielsweise 0,353 % betragen kann, und bei einem Lastwiderstand von beispielsweise 5 MΩ liegen kann. Anschaulich kann das Maximum des Leistungsverhältnisses der durch einen Memristor erzeugten Harmonischen zweiter Ordnung für einen LRS größer sein als für einen HRS und darüber hinaus bei verschiedenen Lastwiderständen auftreten, wie beispielsweise in Fig. 8B veranschaulicht ist.

Fig. 8B veranschaulicht schematisch die PCE höherer Harmonischer eines Einzel-Lagen-Memristors (wobei nur die zweite Harmonische dargestellt ist) in Abhängigkeit des Lastwiderstands (bzw. des Widerstandswerts des Lastwiderstands) (z.B. gemessen im LA-Aufbau), wobei vor der Messung der Memristor in den HRS Zustand geschaltet wurde, z.B. mit einer Schreibspannung von -7 V, oder in einen LRS geschaltet wurde, z.B. mit einer Schreibspannung von +7 V. Dabei kann die Schreibspannung aus einem Einzelpuls mit einer Amplitude von z.B. ±7 V bestehen oder gepulst sein. Die Grundfrequenz f1 der Eingangsspannung Vᵢₙ kann beispielsweise 0,357 Hz aufweisen, mit einer Amplitude V0 der Eingangsspannung von beispielsweise 3 V. Dabei ist die Eingangsspannung klein, wobei der Memristor in dem zuvor geschalteten (geschriebenen) Widerstandszustand HRS oder LRS verbleibt. Eine Folge von Daten (Bitfolge) kann beispielsweise kodiert werden, indem eine positive oder negative Schreibspannung an den Memristor angelegt wird und indem die höheren Harmonischen transferiert werden. Für einen vordefinierten Lastwiderstand kann die PCE größer sein, wenn der Memristor im LRS ist.

Beispielsweise kann ein Memristor, der sich im LRS befindet, die Eigenschaften einer Diode und eines Widerstands aufweisen, und wenn er sich im HRS befindet, die Eigenschaften eines Widerstands aufweisen. Um die voneinander unterscheidbaren Sätze von PCE für einen gegebenen Lastwiderstand R_{L} auszulesen, kann der Memristor mittels einer Schreibspannung VW (beispielsweise von +7 V oder -7 V) in einen LRS oder einen HRS geschaltet werden, und anschließend mittels einer sinusförmigen Eingangsspannung (beispielsweise mit einer Amplitude von 3 V) ausgelesen werden. Ferner kann die Amplitude der sinusförmigen Auslesespannung derart gewählt werden, dass sie den Schaltungszustand des Memristors (LRS oder HRS) nicht beeinflusst oder ändert.

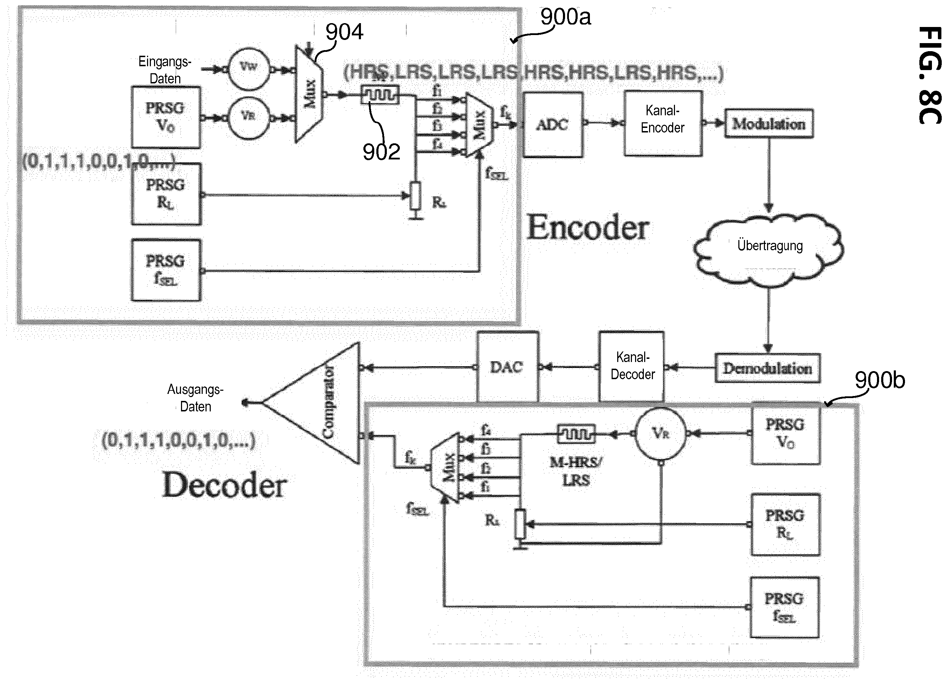

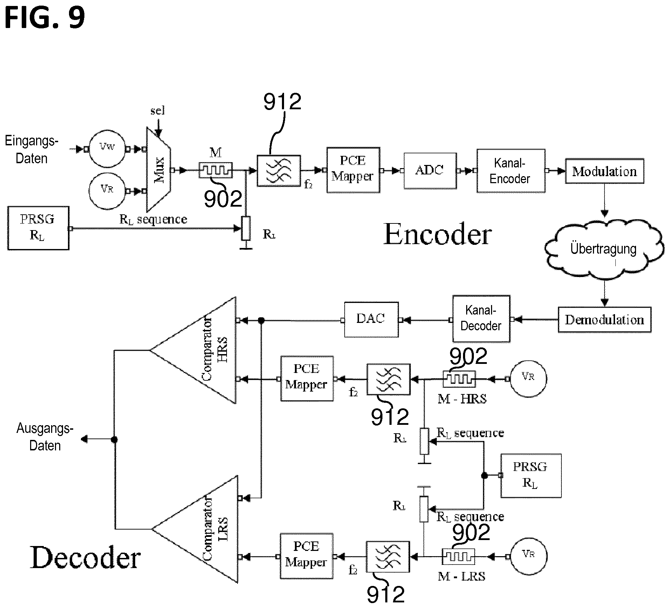

In Fig. 8C (oder auch in Fig. 9) ist ein schematischer Aufbau einer Schaltungs-Anordnung zum Kodieren und/oder Verschlüsseln von Eingabedaten (input data) beispielhaft veranschaulicht. Die Eingabedaten können in einer binären Form (beispielsweise als "0" und/oder "1") mittels entsprechenden Umschaltens des Memristors 902 (in einen HRS oder einen LRS) kodiert werden. Ferner kann, wie zuvor beschrieben, die PCE von dem Schaltungszustand des Memristors und dem Lastwiderstand abhängen. Beispielsweise können die PCE Werte in Form von 14-Bit-Binärdaten repräsentiert werden. Ferner kann eine Schreibspannung VW von ±7 V verwendet werden, um den Zustand des Memristors 902 in Bezug auf die Eingangsdaten zu ändern (bzw. die Memristor-Anordnung in einen HRS oder einen LRS zu schalten). Ferner kann ein Multiplexer (Mux) 904 sicherstellen, dass entweder der Widerstandszustand eines Memristors geschaltet wird (gemäß der Bitfolge) (dass der Widerstandszustand geschrieben wird), oder eine sinusförmige (oder andere periodische) Eingangsspannung mit einer Amplitude V_{R} (bzw. V₀) zum Auslesen des Memristors (bzw. zum Erzeugen der höheren Harmonischen) anliegt. Ferner kann der Wert des Lastwiderstands R_{L} mittels eines Pseudo-Random-Sequence-Generators (PRSG) (Pseudo-Zufallssequenz-Generator) für jedes einzelne Daten-Bit erzeugt werden. Anschaulich kann mittels eines PRSG jedem zu verschlüsselnden Daten Bit ein jeweiliger Lastwiderstand (mit einem Lastwiderstandswert) zugeordnet werden. Dabei kann eine Auswahl derart erfolgen, dass ein für einen Bitwert (0 oder 1) vorläufig ausgewählter Lastwiderstand mit einem entsprechenden Lastwiderstandswert verworfen wird, wenn der ausgewählter Lastwiderstandswert nicht in einen Lastwiderstandswerte-Bereich liegt, welcher dem Bitwert zugeordnet ist (vgl. Fig. 8D).

Beispielsweise kann das elektrische Signal V_{R} mit einer Eingangsspannung (Amplitude V_{R} (bzw. V₀))dem ausgewählten Lastwiderstand R_{L} und dem Memristor 902 zugeführt werden, so dass beispielsweise die Harmonischen f1, f2, f3, f4 erzeugt werden, in Abhängigkeit von dem ausgewählten Lastwiderstand und dem geschalteten Zustand (HRS oder LRS) des Memristors 902. Dabei kann die Amplitude V_{R} (bzw. V₀) der Eingangsspannung zufällig (beispielsweise mittels eines PRSG) gewählt werden, z.B. gemäß einer vorgegebenen Folge an Amplituden V_{R} (bzw. V₀) der Eingangsspannung. Ferner können die Harmonischen, welche genutzt werden, um die den Bitwert beschreibende Größe fk (z.B. die PCE bzw. ein Verhältnis zweier oder mehrerer Harmonischer zueinander) zu erzeugen oder breitzustellen, zufällig (beispielsweise mittels eines PRSG) gewählt werden, z.B. gemäß einer vorgegebenen Folge von Relationen (z.B. im einfachsten Fall Quotienten) der erzeugten Harmonischen f1, f2, f3, f4.

Beispielsweise kann die zufällige Wahl der Lastwiderstände, der Eingangsspannungen und/oder der genutzten Harmonischen einen Schlüssel der Verschlüsselung repräsentieren, da diese beispielsweise die den Bitwert beschreibende Größe fk beeinflussen können. Ferner kann auch jeweils ein verwendeter Memristor aus einer Mehrzahl unterschiedlicher Memristoren verwendet werden, wobei der verwendete Memristor dann zufällig ausgewählt werden kann bzw. gemäß einer Schlüsselfolge ausgewählt werden kann. Ferner kann der Memristor 902 auch eine Mehrzahl unterschiedlicher Kontakte (Metallkontakte) aufweisen, z.B. mit einer unterschiedlichen Kontaktfläche, welche dann zufällig ausgewählt werden können bzw. gemäß einer Schlüsselfolge ausgewählt werden können.

Ferner kann der Memristor 902 auch bei einer Mehrzahl unterschiedlicher Temperaturen genutzt werden, da beispielsweise die Temperatur einen Einfluss auf die erzeugten Harmonischen haben kann, wobei die tatsächlich zum Verschlüsseln verwendetet Temperatur dann zufällig ausgewählt werden kann bzw. gemäß einer Schlüsselfolge ausgewählt werden kann.

Im Allgemeinen kann das Erzeugen des den Bitwert beschreibenden Signals fk von einer Vielzahl von Parametern abhängig sein, wobei die Parameter beispielsweise den Memristor beeinflussen oder eine unter Verwendung des Memristors erzeugte Größe beeinflussen können, so dass sich zusätzliche Möglichkeiten der Verschlüsselung ergeben können. Um die verschlüsselte Bitfolge wieder zu entschlüsseln, kann der Besitz eines identischen Schaltungsaufbaus notwendig sein, wie zum Verschlüsseln verwendet wurde, sowie die Kenntnis der Vielzahl von Parametern.

Beispielsweise können die resultierenden Daten (beispielsweise die aus den Daten erzeugten PCE-Werte) vom Empfänger für die digitale Übertragung umgewandelt oder modifiziert werden (beispielsweise mittels eines PCE Mappers, eines Analog-Digital-Wandlers (ADC) oder eines Channel Encoders), um beispielsweise die Übertragungssicherheit zu erhöhen, und moduliert werden. Ferner können die übertragenen Daten vom Empfänger vor ihrer Entschlüsselung wieder entsprechend des invertierten Vorgangs behandelt werden, um die ursprünglichen resultierenden Daten (beispielsweise die aus den Daten erzeugte PCE Werte) zu erhalten.

Beispielsweise kann der Empfänger die verschlüsselte Bitfolge Hardwaretechnisch oder Softwaretechnisch entschlüsseln. Zum Generieren einer sogenannten Look-up-Tabelle, welche die die Bitwerte beschreibende Größe (z.B. PCE oder ein normiertes Leistungsverhältnis der Harmonischen, wie in Fig. 8D veranschaulicht) zu den jeweiligen Bitwerten zuordnet, kann eine identische Memristor-Schaltung notwendig sein, wie sie zum Verschlüsseln verwendet wurde, sowie die Kenntnis der Vielzahl von Parametern. Ferner können mittels einer identische Memristor-Schaltung sowie mittels der bekannten Parameter Referenzgrößen zum Entschlüsseln generiert werden, welche dann zum Vergleichen mit der übertragenen die Bitwerte beschreibenden Größe (beispielsweise die aus den Daten erzeugte PCE Werte) verwendet werden können.

Beispielsweise kann es notwendig sein, dass der Lastwiderstand R_{L} einer Memristor-Schaltung, wenn sich der Memristor in einem LRS befindet, in einem Bereich zwischen 100 Ω und 4,375 kΩ (oder log(R_{L}) in einem Bereich zwischen 2 und 4,361) liegt, wie in Fig. 8D mittels des Pfeils (LRS) gekennzeichnet ist. Ferner kann sich der Lastwiderstand R_{L} für die Memristor-Schaltung, wenn sich der Memristor in einem HRS befindet, in einem Bereich zwischen 27,164 kΩ und 1,897 MΩ (oder log(R_{L}) in der Bereich zwischen 4.434 und 6.278) liegen, wie mit einem Pfeil (HRS) in Fig. 8D gekennzeichnet ist.

In den Figuren können der Schaltungsaufbau sowie das Schema zum Verschlüsseln 900a mit Encoder bezeichnet sein und der Schaltungsaufbau sowie das Schema zum Entschlüsseln 900b mit Decoder. Das Übertragen (Transmission) der verschlüsselten Bitfolge kann auf beliebigen bekannten Wegen (mittels eines Transmissions-Mediums) erfolgen.

Beim Verschlüsseln kann mittels des PRSG ein Lastwiderstand in einem Lastwiderstandsbereich 840 (bezeichnet mit Fix) generiert werden, der zwischen den zwei Lastwiderstandsbereichen (850 für HRS und 830 für LRS) liegen kann, wie beispielsweise in Fig. 8D veranschaulicht ist, beispielsweise in einem Bereich zwischen 4,375 kΩ und 27,164 kΩ (oder log(R_{L}) im einem Bereich zwischen 4,361 und 4,434). Dabei kann dieser ungeeignet für die Verwendung zum Verschlüsseln der Bitwerte in einem HRS oder LRS sein und kann übersprungen (nicht ausgewählt) und/oder markiert werden (z.B. separat oder zusätzlich übertragen werden), um sicherzustellen, dass keine Unsicherheit bei einem Empfänger entsteht, ob ein Element aus der Folge von Lastwiderständen übersprungen wurde oder nicht. Anschaulich werden Elemente ("fixed points") aus der Folge an Lastwiderständen, die in einem bestimmten Bereich liegen zum Verschlüsseln der Bitwerte verworfen, da sie sich weder zum Kodieren in einem LRS noch zum Kodieren in einem HRS eignen können. Ferner können zusätzliche Daten zum Übertragen unter Verwendung der fixed points (FIX) generiert werden, beispielsweise zufallsverteilte Werte, welche beim Entschlüsseln berücksichtigt werden können.

Beispielsweise können gewählte Lastwiderstände ungeeignet zum Verschlüsseln der Bitwerte sein, wenn die mittels des Lastwiderstands erzeugte (die Bitwerte beschreibende) Größe außerhalb des Wertebereichs 820 (z.B. eines normierbaren Bereichs oder normierten Bereichs 0% bis 100% für die Leistungsverhältnisse) liegen, wie in Fig. 8D veranschaulicht ist. Der Wertebereich 820 für eine die Bitwerte beschreibende Größe (z.B. das Leistungsverhältnis der Harmonischen) kann anschaulich dadurch definiert sein, dass dieser ein gemeinsamer Wertebereich ist, in welchem die erzeugte den ersten Bitwert beschreibende Größe liegt, welche unter Verwendung eines Lastwiderstands aus dem ersten Lastwiderstandsbereich 830 für den ersten Widerstandszustand (LRS) erzeugt wurde, und in welchem die erzeugte den zweiten Bitwert beschreibende Größe liegt, welche unter Verwendung eines Lastwiderstands aus dem zweiten Lastwiderstandsbereich 850 für den zweiten Widerstandszustand (HRS) erzeugt wurde.

Anschaulich können jeweils die verschlüsselten Bits in einer Größe vorliegen, welche unkorreliert bzw. nur schwach korreliert sein kann, wie beispielsweise in Fig. 8E veranschaulicht.

Ferner kann ein Lastwiderstand aus der mittels des PRSG erzeugten Folge von Lastwiderständen beim Verschlüsseln der Bitwerte übersprungen oder verworfen werden, wenn der Lastwiderstand aus der Folge an Lastwiderständen für die Übertragung eines Leistungsverhältnisses aus einem HSR geeignet ist, aber ein Leistungsverhältnis aus einem LRS übertragen werden soll.

Ferner kann ein Lastwiderstand aus der mittels des PRSG erzeugten Folge von Lastwiderständen beim Verschlüsseln der Bitwerte übersprungen oder verworfen werden, wenn der Lastwiderstand aus der Folge an Lastwiderständen für die Übertragung eines Leistungsverhältnisses aus einem LRS geeignet ist, aber ein Leistungsverhältnis aus einem HRS übertragen werden soll.

Anschaulich kann für das Verschlüsseln des ersten Bitwerts ein erster Lastwiderstands-Wertebereich 830 definiert sein und entsprechend nur ausgewählte Lastwiderstände mit Lastwiderstandswerten aus dem ersten Lastwiderstands-Wertebereich 830 verwendet werden und für das Verschlüsseln des zweiten Bitwerts kann ein zweiter Lastwiderstands-Wertebereich 850 definiert sein und entsprechend nur ausgewählte Lastwiderstände mit Lastwiderstandswerten aus dem zweiten Lastwiderstands-Wertebereich 850 verwendet werden.

Das Verwerfen des Lastwiderstandes kann derart erfolgen, dass ein vorläufiger Lastwiderstand R_{L} ausgewählt wird, geprüft wird, ob der Lastwiderstandswert des vorläufig ausgewählten Lastwiderstands in dem zum Verschlüsseln des jeweiligen zu verschlüsselnden Bitwerts definierten Widerstandsbereich liegt, also zum Verschlüsseln geeignet ist, vgl. Fig. 8D, wobei dementsprechend dann ein geeigneter Lastwiderstand zum Verschlüsseln des Bitwerts genutzt wird oder ein ungeeigneter Lastwiderstand nicht genutzt wird (ausgelassen oder verworfen wird).

Beispielsweise kann die Auswahl der jeweils genutzten Lastwiderstandsbereiche (für HRS, LRS und/oder FIX) als Parameter der Verschlüsselung dienen. Ferner kann auch das Mapping (z.B. das Normieren der die Bitwerte beschreibenden Größe) als Parameter der Verschlüsselung dienen. Generell soll das Mapping derart erfolgen, dass die Ausgangsdaten zueinander unkorreliert sind.

Das Verwerfen von ausgewählten Lastwiderständen aus der (z.B. zufälligen) Folge von Lastwiderständen kann ferner dazu führen, dass etwa 40 % der ausgewählten Lastwiderstände aus der Folge von Lastwiderständen für das Kodieren von LRS und HRS verwendet werden (und 60% der ausgewählten Lastwiderstände aus der Folge von Lastwiderständen verworfen werden). Beispielsweise kann die Folge der Lastwiderstände mittels 21-bit binär Daten repräsentiert werden.

Ferner können die modulierten verschlüsselten Daten (z.B. die Werte der die Bitwerte beschreibenden Größe) drahtlos oder kabelgebunden übertragen werden.

Gemäß verschiedenen Ausführungsformen, welche zur weiteren Erläuterung der Erfindung dienen und nicht Teil dieser sind, können die übertragenen Daten vom Empfänger demoduliert, dekodiert und konvertiert werden, so dass anschaulich ihre ursprüngliche analoge Form zurück gewonnen werden kann. Der Empfänger kann ferner einen Memristor oder mehrere Memristoren oder einen Memristor-Schaltkreis aufweisen, wobei der Memristor analog zum Verschlüsseln geschaltet werden kann oder sich einer der Memristoren im HRS und ein anderer der Memristoren im LRS befinden kann (siehe Fig. 9). Ferner kann der mindestens eine Memristor oder können die mehreren Memristoren des Empfängers dazu verwendet werden, mittels einer Folge an Lastwiderständen entsprechende Referenz-Werte (Referenz PCE-Werte oder Referenzleistungsverhältnisse) zu den Bitwerten (z.B. 0 und 1) zu generieren, die mit empfangenen Daten verglichen werden können oder einem PCE Mapper zugeführt werden können, um sie mit empfangenen Daten oder modifizierten empfangenen Daten (z.B. durch einen Digital-Analog-Wandler modifiziert) vergleichen zu können.

Ferner können die PRSG des Empfängers mit den PRSG des Senders synchronisiert sein oder werden, so dass beispielsweise der PRSG des Empfängers dieselbe Folge von Lastwiderständen wie der PRSG des Senders generiert. Anschaulich kann dem Empfänger dieselbe Folge pseudozufälliger Lastwiderstandswerte zur Verfügung stehen, wie dem Sender (der die Daten verschlüsselt hat). In analoger Weise können auch andere Parametern oder Schlüssel verwendet werden, welche zwischen dem Sender und dem Empfänger ausgetauscht werden müssen. Anschaulich müssen dem Empfänger die Referenz-Größen zum Entschlüsseln zur Verfügung stehen, wobei der Empfänger diese generieren kann, wenn ihm der entsprechende Memristor und die Parameter zum Erzeugen der Harmonischen und/oder der daraus resultierenden Größe (bezeichnet mit fₖ) (z.B. PCE) zur Verfügung stehen.

Gemäß verschiedenen Ausführungsformen, welche zur weiteren Erläuterung der Erfindung dienen und nicht Teil dieser sind, können die empfangenen Daten mit einem Ausgangssignal eines PCE Mapper (zum Normieren gemäß einer Vorgabe) mittels mindestens eines Komparators (beispielsweise mittels eines HRS Komparators und eines LRS Komparators) verglichen werden, so dass auf die verschlüsselten oder kodierten Daten geschlossen werden kann. Beispielsweise kann der übertragene Bitwert "1" sein, wenn der HRS Komparator ein erstes Signal (z.B. HIGH) ausgibt, und "0" sein, wenn der LRS Komparator ein erstes Signal (z.B. HIGH) ausgibt. Geben beide Komparatoren ein anderes Signal (beispielsweise LOW) oder ein gleiches Signal (beispielsweise beide HIGH) aus, so kann kein Bitwert übertragen worden sein. Anschaulich kann mittels der Komparatoren ein Vergleich zwischen den empfangenen Daten und möglichen verschlüsselten Daten durchgeführt werden, so dass die kodierten Daten dekodiert werden können.

Gemäß verschiedenen Ausführungsformen, welche zur weiteren Erläuterung der Erfindung dienen und nicht Teil dieser sind, können zusätzliche Sicherheiten mittels einer pseudozufälligen Generierung der zur Kodierung eines Bits oder einer Bitfolge verwendeten Ordnungen der Harmonischen und/oder eine pseudozufällige Generierung der zur Kodierung eines Bits oder einer Bitfolge verwendeten Auslesespannung V₀ mittels eines PRSG gewonnen werden.

Wird beispielsweise eine 3000 Bits (Elemente) umfassende Daten-Folge (zu übermittelnde Daten, die die Eingangsdaten des ADC bilden können) aus einer zufälligen Folge von Eingangsdaten (zu kodierenden Daten) mittels eines Memristors basierten Encoders erzeugt (oder mittels eines Memristor-Schaltkreises kodiert oder verschlüsselt) kann die Mapping-Effizienz beispielsweise 42,167 % betragen. Anschaulich korrelieren von den 3000 übermittelten Bits 42,167% (entsprechend 1265 Bits) mit den zu kodierenden Daten und 1735 Bits mit aus den oben aufgeführten Gründen verworfenen Bits (vgl. Fig. 8E).

Fig. 8E veranschaulicht beispielhaft ein Ausgangs-Signal (eine Ausgangs-Sequenz) an dem Kanal-Decoder, wobei mittels eines Einzel-Lagen-Memristors eine Folge (1, 0, 0, 1, 0, 0, ...) von 100 Bits (linker Teil der Fig. 8E) und von 3000 Bits (rechter Teil der Fig. 8E) verschlüsselt wurde. Diese Ausgangs-Daten sind zufällig verteilt und stellen daher keinen Nutzen dar, falls der Datenstrom abgehört oder unberechtigt erfasst wird.

Eine höhere Effizienz der verschlüsselten Datenübertragung lässt sich erreichen, indem beispielsweise die ausgewählten Elemente aus der Folge an Lastwiderständen, die sich für keinen der Widerstandszustände (z.B. HRS oder LRS) des memristiven Systems eignen (z.B. "fixed points") verworfen und von der Übertragung ausgeschlossen werden. Anschaulich lässt sich eine höhere Mapping-Effizienz erreichen, indem beispielsweise der Wertebereich des PRSG eingeschränkt wird (z.B. auf sich zur Verschlüsselung der Bitwerte eignende Werte).

Gemäß verschiedenen Ausführungsformen, welche zur weiteren Erläuterung der Erfindung dienen und nicht Teil dieser sind, kann ein jeweils in Sender (Encoder) und Empfänger (Decoder) integrierter Zufallsgenerator, der sich aufgrund seiner einfachen Implementierung und hohen Geschwindigkeiten auszeichnen kann, oder eine Software-basierte Implementierung, die beispielsweise ein linear kongruentes Verfahren nutzt, zum Erzeugen einer Folge (Sequenz) an pseudozufälligen Elementen (z.B. von Lastwiderständen oder Eingangsspannungen usw.) verwendet werden.

Gemäß verschiedenen Ausführungsformen, welche zur weiteren Erläuterung der Erfindung dienen und nicht Teil dieser sind, kann der Autokorrelationskoeffizient (die Korrelation) der zu übermittelnden Daten (der Werte der die Bitwerte beschreibenden Größe) (die die Eingangsdaten des ADC bilden können), die ohne die Verwendung ungeeigneter Elemente aus der Folge an Lastwiderständen ("fixed points") mittels eines Memristors kodiert wurden, nahezu 0 betragen (vgl. Fig. 8E). Anschaulich beschreibt ein Autokorrelationskoeffizient die Korrelation von Elementen einer Folge oder einer Folge, beispielsweise einer Bitfolge, mit sich selbst (beispielsweise ob die Daten zufällig verteilt sind oder ob sie miteinander korreliert sind, wie es bei einer periodischen Folge der Fall ist) und kann Werte zwischen -1 und 1 (oder zwischen 0 und 1) annehmen, wobei für einen verschwindenden Autokorrelationskoeffizient (identisch null) die Folge keinerlei Korrelationen aufweist und vollständig zufälliger Natur ist.

Eine Folge, aufweisend einen Autokorrelationskoeffizient im Bereich von 0 bis 0,3 kann als niedrig korreliert, im Bereich von 0,3 bis 0,8 als signifikant korreliert und im Bereich von 0,8 bis 1,0 als stark korreliert bezeichnet werden. Beispielsweise kann eine Hardware-Implementierung eine Chaosbasierte PRSG aufweisen, um eine noch geringere Korrelation zu erreichen und eine größere Zuverlässigkeit für das Verschlüsselungssystem (oder Sicherheit der verschlüsselten Daten) zu haben.

Wird beispielsweise eine 3000 Bits (Elementen) umfassende Daten-Folge (zu übermittelnde Daten, die die Eingangsdaten des ADC bilden können) aus einer zufälligen Folge von Eingangsdaten (zu kodierenden Daten) mittels eines Memristors basierten Encoders erzeugt, lässt sich eine Verteilung der erzeugten Elemente visualisieren, indem ein die Elemente repräsentierender Wert (beispielsweise der PCE oder das daraus erzeugt Eingangssignal eines ADC) entsprechend der Übertragungs-Folge aufgetragen wird, wie in Fig. 8E dargestellt ist. Auf der Ordinate ist das Eingangssignal des ADC dargestellt, wobei auf der Abszisse die Nummer des erzeugten Elements aufgetragen ist (entsprechend 1 bis 3000). Die dargestellten Symbole unterscheiden zwischen im HRS und LRS kodierten Elementen, also beispielsweise Elemente der zu kodierenden Daten die verschlüsselt wurden, und aus den für die Übertragung ungeeigneten Elementen der Folge an Lastwiderständen erzeugte Daten FP. Fig8E veranschaulicht die zufällige Verteilung der verschlüsselten Größe, wobei keine Elemente gehäuft auftreten. Anschaulich wird aus einer Folge diskreter Elemente (beispielsweise "0" und "1", die z.B. die zu kodierenden Daten bilden oder die zu übermittelnden Informationen repräsentieren können) mittels eines Memristors eine Folge annähernd zufällig verteilter Elemente erzeugt (beispielsweise die daraus gewonnenen PCE Werte), deren mangelnde Korrelation einen besseren Schutz gegen den Zugriff Dritter bieten kann, verglichen mit der ursprünglichen Folge diskreter Elemente, und die sich daher zur geschützten Übermittlung von Informationen eignen können. Mit anderen Worten erschwert die annähernd zufällige Verteilung der kodierten Daten die Rekonstruktion der ursprünglichen Informationen ohne einen passenden Empfänger.

Beispielsweise hängen die Werte der PCE von einer Grundfrequenz und der Harmonischen höherer Ordnungen (z.B. zweite, dritte oder vierte oder höher) einer Memristor-Schaltung neben der sinusförmigen Eingangsspannung ebenfalls von der Symmetrie der Hysterese der Strom-Spannungs-Charakteristika (U-I-Kennlinien) ab. Ferner kann ein mittels einer sinusförmigen Eingangsamplitude von 7 V geschalteter Memristor ein größeres Leistungsverhältnis erzeugen als ein mittels einer sinusförmigen Eingangsamplitude von kleiner als 7 V geschalteter Memristor.

Für einen gegebenen Lastwiderstand und eine sinusförmige Eingangsspannung kann das Leistungsverhältnis einer Memristor-Schaltung (oder eines Memristor-Schaltkreises) mit asymmetrischen Hysterese-Eigenschaften der U-I-Kennlinien (asymmetrischen Hysterese) größer sein als das Leistungsverhältnis einer Memristor-Schaltung mit symmetrischen Hysterese-Eigenschaften der U-I-Kennlinie.

Ferner können zwei voneinander unterscheidbare Harmonische zweiter Ordnung mittels einer Memristor-Schaltung, aufweisend einen Memristor basierend auf BiFeO₃, wie vorangehend beschrieben, erzeugt werden. Ferner kann sich eine Memristor-Schaltung für ein Datentransfer-System mit hoher Sicherheit der Datenübertragung eignen.

Beispielsweise kann jeder Lastwiderstand einen Lastwiderstandswert aufweisen.

Wie in Fig. 9 veranschaulicht, kann eine Schaltkreis-Anordnung zum Verschlüsseln einer Bitfolge Folgendes aufweisen: mindestens ein Widerstandselements M (z.B. einen Memristor oder einen nichtlinearen Widerstand), welches zumindest in einen ersten Widerstand-Zustand (z.B. LRS) mit einem ersten Widerstandswert und in einen zweiten Widerstand-Zustand (HRS) mit einem zweiten Widerstandswert geschaltet werden kann (der elektrische Widerstand des Widerstandselements kann im HRS-Zustand größer sein als im LRS-Zustand), wobei der erste Widerstand-Zustand einem ersten Bitwert (z.B. 0) eines Bits der Bitfolge zugeordnet ist und der zweite Widerstand-Zustand einem zweiten Bitwert (z.B. 1) eines Bits der Bitfolge zugeordnet ist, wobei der zweite Widerstandswert unterschiedlich ist zu dem ersten Widerstandswert; mindestens ein Lastwiderstandselement (z.B. einen regelbaren Widerstand oder eine Widerstandsvorrichtung mit einer Vielzahl von wählbaren Widerständen) zum Bereitstellen einer Mehrzahl von Lastwiderständen unterschiedlicher Lastwiderstandswerte; mindestens einen Signalgenerator zum Erzeugen eines elektrischen Signals (z.B. Vᵢₙ bzw. V_{R}), wobei der Signalgenerator mit dem mindestens einen Widerstandselement und dem mindestens einen Lastwiderstandselement derart gekoppelt ist, dass ein mittels des mindestens einen Signalgenerators erzeugtes elektrisches Signal (z.B. eines periodischen elektrischen Signals) dem Lastwiderstandselement und dem Widerstandselement zugeführt werden kann und mindestens eine Oberwelle oder Oberschwingung (mehrere Harmonische) des elektrischen Signals erzeugt werden kann; ein Analyse-Element zum Analysieren des elektrischen Signals und der mindestens einen Oberwelle oder Oberschwingung (der Harmonischen) des elektrischen Signals und zum Bereitstellen einer den ersten Bitwert (z.B. "0") oder den zweiten Bitwert (z.B. "1") beschreibenden Größe (z.B. ein Leistungsverhältnis der Harmonischen oder ein normiertes Leistungsverhältnis der Harmonischen).

Beispielsweise kann ein mit dem Lastwiderstandselement gekoppelter Lastwiderstands-Folgen-Generator (PRSG R_{L}) zum Erzeugen einer Folge von unterschiedlichen Lastwiderstandswerten (R_{L}), und beispielsweise eine Stellvorrichtung für das Lastwiderstandselement, so dass an dem Lastwiderstandselement unterschiedliche Lastwiderstände eingestellt werden können.

Beispielsweise kann eine Schaltkreis-Anordnung zum Entschlüsseln einer verschlüsselten Bitfolge Folgendes aufweisen: mindestens ein Widerstandselements (z.B. einen Memristor oder einen nichtlinearen Widerstand), welches zumindest in einen ersten Widerstand-Zustand mit einem ersten Widerstandswert und in einen zweiten Widerstand-Zustand mit einem zweiten Widerstandswert geschaltet werden kann (z.B. HRS oder LRS), wobei der erste Widerstand-Zustand einem ersten Bitwert eines Bits der Bitfolge (z.B. zu verschlüsselnde Daten oder Eingangsdaten; engl. "Input Data") zugeordnet ist und der zweite Widerstand-Zustand einem zweiten Bitwert eines Bits der Bitfolge zugeordnet ist, wobei der zweite Widerstandswert unterschiedlich ist zu dem ersten Widerstandswert; mindestens ein Lastwiderstandselement zum Bereitstellen einer Mehrzahl von Lastwiderständen unterschiedlicher Lastwiderstandswerte; mindestens einen Signalgenerator zum Erzeugen eines elektrischen Signals, wobei der Signalgenerator mit dem mindestens einen Widerstandselement und dem mindestens einen Lastwiderstandselement derart gekoppelt ist, dass ein mittels des mindestens einen Signalgenerators erzeugtes elektrisches Signal dem Lastwiderstandselement und dem Widerstandselement zugeführt werden kann und mindestens eine Oberwelle oder Oberschwingung des elektrischen Signals erzeugt werden kann; ein Analyse-Element zum Analysieren des elektrischen Signals und der mindestens einen Oberwelle oder Oberschwingung des elektrischen Signals und zum Bereitstellen einer den ersten Bitwert oder den zweiten Bitwert beschreibenden Referenz-Größe; ein Empfangselement zum Empfangen einer verschlüsselten Bitfolge und zum Bereitstellen einer Größe, welche einen verschlüsselten Bitwert eines Bits der Bitfolge repräsentiert; ein mit dem Analyse-Element und dem Empfangselement gekoppeltes Vergleichselement zum Vergleichen der Größe mit der Referenzgröße und zum Ermitteln des jeweiligen Bitwerts des Bits der empfangenen verschlüsselten Bitfolge.

Beispielsweise kann eine mit dem Encoder erzeugte den ersten Bitwert oder den zweiten Bitwert beschreibende Größe mittels herkömmlicher Signalübertragung übertragen werden, z.B. unter Verwendung eines ADC (Analog-Digital-Umsetzer (ADU); engl. ADC für Analog-to-Digital-Converter) oder DAC (Digital-Analog-Umsetzer (DAU); engl. DAC für Digital-to-Analog-Converter), eines Kanal-Encoders und/oder Kanal-Decoders (channel encoder; channel decoder), eines Modulators und/oder Demodulators zur Modulation und/oder Demodulation der versendeten/übermittelten (verschlüsselten) Daten.

Ferner können die Daten auch auf einer Hardware abgespeichert werden und mittels der Hardware übertragen werden. Die entschlüsselte Bitfolge kann dann als Ausgangs-Daten (output Data) ausgegeben werden.

Beispielsweise kann der Decoder jeweils einen oder jeweils mehrere PCE-Mapper und Komparatoren (Comparator LRS und Comparator HRS) aufweisen.

Beispielsweise kann ein elektrisches Signal aufweisend mehrere Harmonische mittels einer Signalanalyse oder einer entsprechenden Signalanalyse-Einheit 912 ausgewertet werden (z.B. mittels einer Fouriertransformation) und die die Bitwerte beschreibende Größe kann anhand dessen erzeugt werden.

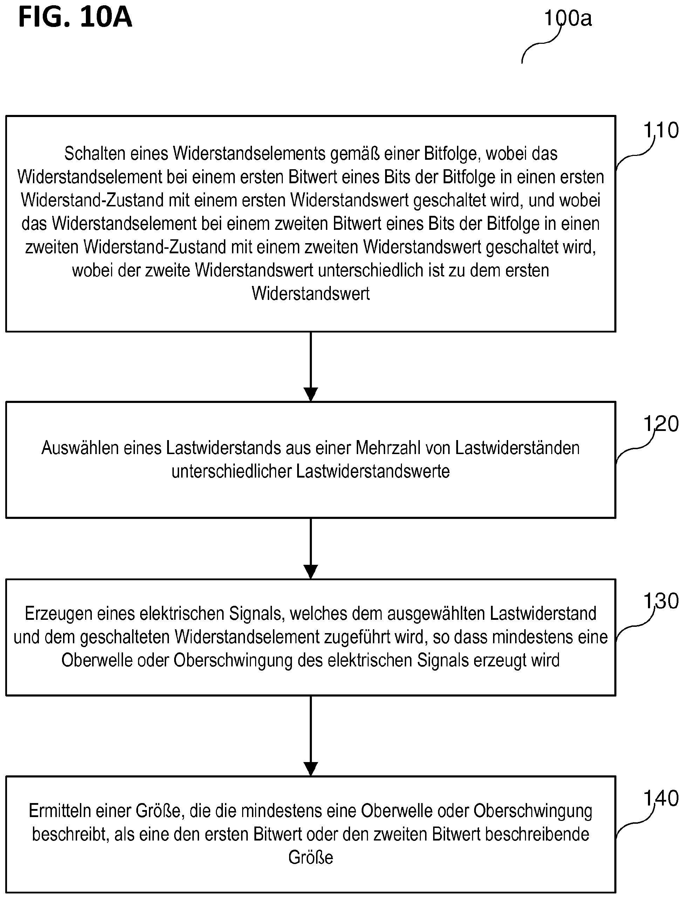

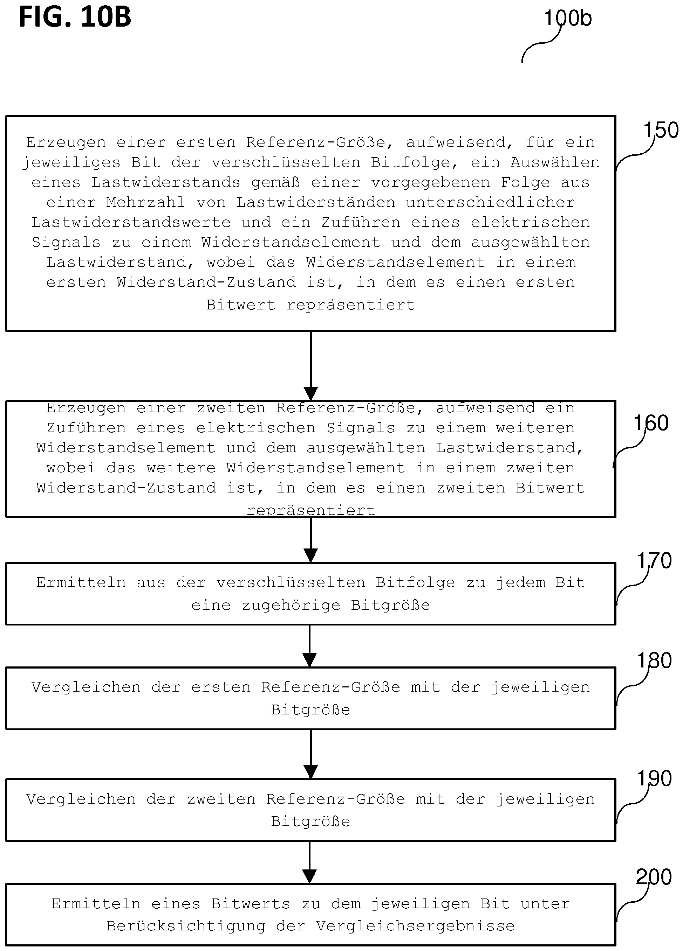

In Fig. 10A ist ein Verfahren 100a zum Verschlüsseln einer Bitfolge in einem schematischen Ablaufdiagramm dargestellt, wobei das Verfahren 100a aufweisen kann: in 110, das Schalten eines Widerstandselements (z.B. eines Memristors) gemäß einer Bitfolge, wobei das Widerstandselement bei einem ersten Bitwert eines Bits der Bitfolge in einen ersten Widerstand-Zustand mit einem ersten Widerstandswert geschaltet wird, und wobei das Widerstandselement bei einem zweiten Bitwert eines Bits der Bitfolge in einen zweiten Widerstand-Zustand mit einem zweiten Widerstandswert geschaltet wird, wobei der zweite Widerstandswert unterschiedlich ist zu dem ersten Widerstandswert; in 120, das Auswählen eines Lastwiderstands aus einer Mehrzahl von Lastwiderständen unterschiedlicher Lastwiderstandswerte; in 130, das Erzeugen eines elektrischen Signals, welches dem ausgewählten Lastwiderstand und dem geschalteten Widerstandselement zugeführt wird, so dass mindestens eine Oberwelle oder Oberschwingung des elektrischen Signals erzeugt wird; und, in 140, das Ermitteln einer Größe, die die mindestens eine Oberwelle oder Oberschwingung beschreibt, als eine den ersten Bitwert oder den zweiten Bitwert beschreibende Größe.

Wie beispielsweise in Fig. 9 veranschaulicht, kann das Widerstandselement mindestens eines der folgenden Elemente aufweisen: mindestens einen Memristor M; und einen Schaltkreis mit mindestens zwei Widerständen, wobei mindestens ein Widerstand der mindestens zwei Widerstände ein nichtlinearer Widerstand ist.

Ferner kann die Mehrzahl von Lastwiderständen eine Mehrzahl ohmscher Widerstände aufweisen. Der Lastwiderstand kann ein stellbarer Widerstand sein oder ein regelbarer Widerstand sein, mittels dessen ein Widerstandswert in einem Bereich von ungefähr 100 Ω bis ungefähr 10⁷ Ω eingestellt oder bereitgestellt werden kann.

Beispielsweise kann eine Größe verwendet werden, die die mindestens eine Oberwelle oder Oberschwingung beschreibt, wobei die Größe beispielsweise sein kann: eine Größe, welche die elektrische Leistung der Oberwelle oder Oberschwingung repräsentiert; oder eine Größe, welche die elektrische Leistung der Oberwelle oder Oberschwingung im Verhältnis zu der elektrischen Leistung des die Oberwelle oder Oberschwingung erzeugenden elektrischen Signals repräsentiert, oder eine Größe, welche die elektrische Leistung mehrere Oberwellen oder Oberschwingungen im Verhältnis zueinander repräsentiert.

Das Auswählen des Lastwiderstands zum Verschlüsseln eines Bits kann beispielsweise aufweisen: das Prüfen eines vorläufig ausgewählten Lastwiderstands, ob sein Lastwiderstandswert in einem vorgegebenen Lastwiderstandswertbereich (im HRS-Bereich oder LRS Bereich, wie beispielsweise in Fig. 8D veranschaulicht) von mehreren Lastwiderstandswertbereichen (830, 840, 850) liegt, der einem Widerstand-Zustand (HRS oder LRS) zugeordnet ist, welcher dem Bitwert (0 oder 1) des zu verschlüsselnden Bits zugeordnet ist, und das Auswählen des vorläufig ausgewählten Lastwiderstands als den Lastwiderstand R_{L} , wenn dies der Fall ist.

Beispielsweise können die mehreren Lastwiderstandswertbereiche 830, 840, 850 einen ersten Lastwiderstandswertbereich 830 und einen zweiten Lastwiderstandswertbereich 850 aufweisen, wobei der erste Lastwiderstandswertbereich 830 und der zweite Lastwiderstandswertbereich 850 derart relativ zueinander vorgegeben sind, dass sich die Größe (z.B. log(P_{L}(k)/P_{S}) bzw. das Leistungsverhältnis der Harmonischen) für den ersten Lastwiderstandswertbereich 830 für den ersten Widerstand-Zustand (z.B. LRS) und die Größe für den zweiten Lastwiderstandswertbereich (z.B. log(P_{L}(k)/P_{S}) für den zweiten Widerstand-Zustand (z.B. HRS) in einem vorgegebenen Wertebereich 820 für die Größe (z.B. log(P_{L}(k)/P_{S}) befinden.

Anschaulich kann beispielsweise aufgrund des Überlagerns der erzeugten Größen in dem Größen-Bereich 820, für die HRS und LRS verschlüsselten Bitwerte, die die Bitwerte beschreibende Größe unkorreliert übertragen werden. Die die Bitwerte beschreibende Größe kann beispielsweise normiert übertragen werden, als Prozentwert des Normierungs-Bereichs 820.

Beispielsweise können die mehreren Lastwiderstandswertbereiche ferner einen dritten Lastwiderstandswertbereich 840 aufweisen, wobei der dritte Lastwiderstandswertbereich 840 (Fix) zwischen dem ersten Lastwiderstandswertbereich 830 und dem zweiten Lastwiderstandswertbereich 850 vorgegeben ist, wobei eine zusätzliche Größe (eine Größe, welche repräsentiert, dass der Lastwiderstand aus dem dritten Lastwiderstandswertbereichs 840 ausgewählt wurde), welche in dem vorgegebenen Wertebereich für die Größe liegt (der zusätzlichen Größe kann beispielsweise ein zufälliger Wert zugeordnet werden, welcher in dem Bereich 820 der Größe liegt), erzeugt wird, welche keinen der Bitwerte repräsentiert, wenn beim Auswählen eines Lastwiderstands ein Lastwiderstandswert aus dem dritten Lastwiderstandswertbereich als vorläufiger Lastwiderstand gewählt wird.

Ferner kann der vorläufig ausgewählte Lastwiderstand gemäß einer vorgegebenen Folge von Lastwiderständen unterschiedlicher Lastwiderstandswerte gewählt werden. Die Folge von Lastwiderständen kann ferner auch ein Wertebereich für auswählbare Lastwiderstände bzw. für auswählbare Lastwiderstandswerte sein. Die Kenntnis der auswählbaren Lastwiderstände bzw. die Kenntnis des Wertebereichs der auswählbaren (beim Verschlüsseln verwendeten) Lastwiderstandswerte kann zum Entschlüsseln der verschlüsselten Daten bzw. zum Generieren einer Zuordnungstabelle zum Entschlüsseln notwendig sein.

Wie in Fig. 8C und/oder in Fig. 9 in einem Block-Diagramm darstellt ist, kann eine auf einem Memristor (oder auf einem Widerstandselement mit nichtlinearer U-I-Charakteristic) basierende Schaltung oder Schaltungsanordnung für Kryptographie-Anwendung genutzt werden, z.B. in einem Encoder (Kodierer) und Decoder (Dekodierer). Gemäß verschiedenen Ausführungsformen wird ein Memristor-basiertes Verschlüsseln und Entschlüsseln veranschaulicht. Weitere Schaltungs-Bauelemente wie ADC, DAC, sogenannte channel encoder/decoder, Komparatoren, und/oder Modulatoren/Demodulatoren können herkömmliche Bauelemente, wie beispielsweise in der Hardwarebasierten Kryptographie verwendet, sein.

Anschaulich kann beispielsweise versucht werden, die verschlüsselten Daten während der Transmission zu erfassen, wobei diese Daten allerdings unkorreliert sein können, so dass eine Entschlüsselung ohne den Schlüssel (z.B. ohne einen entsprechenden Memristor zum Entschlüsseln) nicht möglich sein kann, wie beispielsweise in Fig. 8E veranschaulicht ist, wobei die den Bitwert beschreibende Größe (z.B. normiert) der verschlüsselten Ausgangssequenz dargestellt ist.

In Fig. 10A ist ein Verfahren 100b zum Entschlüsseln einer verschlüsselten Bitfolge in einem schematischen Ablaufdiagramm dargestellt, wobei das Verfahren 100b aufweisen kann: in 150, das Erzeugen einer ersten Referenz-Größe (beispielsweise zum Vergleich mit der Größe, welche die verschlüsselten Bitwerte repräsentiert), aufweisend, für ein jeweiliges Bit der verschlüsselten Bitfolge, ein Auswählen eines Lastwiderstands Rₗ gemäß einer vorgegebenen Folge aus einer Mehrzahl von Lastwiderständen unterschiedlicher Lastwiderstandswerte (oder aus einer Wertetabelle für Lastwiderstandswerte) und ein Zuführen eines elektrischen Signals (z.B. eines zeitlich und/oder räumlich periodischen elektrischen Signals) zu einem Widerstandselement (z.B. zu einem Memristor oder einem Memristor-Schaltkreis) und dem ausgewählten Lastwiderstand, wobei das Widerstandselement in einem ersten Widerstand-Zustand (beispielsweise ohne Beschränkung der Allgemeinheit LRS) ist, in dem es einen ersten Bitwert (beispielsweise ohne Beschränkung der Allgemeinheit 0) repräsentiert; in 160, das Erzeugen einer zweiten Referenz-Größe, aufweisend ein Zuführen eines elektrischen Signals zu einem weiteren Widerstandselement und dem ausgewählten Lastwiderstand, wobei das weitere Widerstandselement in einem zweiten Widerstand-Zustand (beispielsweise ohne Beschränkung der Allgemeinheit HRS) ist, in dem es einen zweiten Bitwert (beispielsweise ohne Beschränkung der Allgemeinheit 1) repräsentiert; in 170, das Ermitteln aus der verschlüsselten Bitfolge zu jedem Bit eine zugehörige Bitgröße (z.B. das Leistungsverhältnis der Harmonischen, welches die verschlüsselten Bitwerte beschreibt); in 180, das Vergleichen der ersten Referenz-Größe mit der jeweiligen Bitgröße; in 190, das Vergleichen der zweiten Referenz-Größe mit der jeweiligen Bitgröße; und, in 200, das Ermitteln eines Bitwerts zu dem jeweiligen Bit unter Berücksichtigung der Vergleichsergebnisse.

Beispielsweise kann zum Entschlüsseln auch nur ein Widerstandselement genutzt werden, welches dann in den entsprechenden Widerstand-Zustand geschaltet wird. Mit anderen Worten können das Widerstandselement und das weitere Widerstandselement derselbe Memristor sein oder mittels zweier gleicher Memristoren realisiert sein.

Beispielsweise können auch zum Verschlüsseln der Bitwerte mehrere verschiedene Memristoren genutzt werden.

Gemäß verschiedenen Ausführungsformen, welche zur weiteren Erläuterung der Erfindung dienen und nicht Teil dieser sind, kann ein Verfahren zum Erzeugen von Referenzgrößen zum Entschlüsseln einer verschlüsselten Bitfolge aufweisen: das Erzeugen einer ersten Referenz-Größe, aufweisend ein Auswählen eines Lastwiderstands gemäß einer vorgegebenen Folge aus einer Mehrzahl von Lastwiderständen unterschiedlicher Lastwiderstandswerte und ein Zuführen eines elektrischen Signals zu einem Widerstandselement und dem ausgewählten Lastwiderstand, wobei das Widerstandselement in einem ersten Widerstand-Zustand ist, in dem es einen ersten Bitwert repräsentiert; das Erzeugen einer zweiten Referenz-Größe, aufweisend ein Zuführen eines elektrischen Signals zu einem weiteren Widerstandselement und dem ausgewählten Lastwiderstand, wobei das weitere Widerstandselement in einem zweiten Widerstand-Zustand ist, in dem es einen zweiten Bitwert repräsentiert; das Abspeichern der ersten Referenz-Größe und der zweiten Referenz-Größe in einer Entschlüsselungs-Einheit zum Entschlüsseln einer verschlüsselten Bitfolge. Dabei können beispielsweise alle notwendigen (zum Verschlüsseln genutzten Lastwiderstände) die entsprechenden Werte für die den Bitwert beschreibende Größe ermittelt werden, und somit kann mittels Vergleichens der Größe mit den Referenz-Größen wieder der entsprechende Bitwert zu der Größe ermittelt werden.

Ferner können das Erzeugen einer ersten Referenz-Größe und das Erzeugen einer zweiten Referenz-Größe aufweisen: das Erzeugen einer ersten Referenz-Größe, aufweisend ein Auswählen eines Lastwiderstands gemäß einer vorgegebenen Folge aus einer Mehrzahl von Lastwiderständen unterschiedlicher Lastwiderstandswerte und ein Zuführen eines elektrischen Signals zu einem Widerstandselement und dem ausgewählten Lastwiderstand, wobei das Widerstandselement in einem ersten Widerstand-Zustand ist, in dem es einen ersten Bitwert repräsentiert; das Erzeugen einer zweiten Referenz-Größe, aufweisend ein Zuführen eines elektrischen Signals zu dem Widerstandselement und dem ausgewählten Lastwiderstand, wobei das Widerstandselement in einem zweiten Widerstand-Zustand ist, in dem es einen zweiten Bitwert repräsentiert.

Beispielsweise kann das Widerstandselement und/oder das weitere Widerstandselement das gleiche wie zum Verschlüsseln sein oder gemäß einer Zuordnungsvorschrift können die Widerstandselemente zum Verschlüsseln mit den Widerstandselementen zum Entschlüsseln abgeglichen oder bezüglich zueinander kalibriert werden.

## Patentansprüche

1. Widerstandsstruktur (3), aufweisend:
• einen ersten elektrisch leitfähigen Kontakt (T1);
• einen zweiten elektrisch leitfähigen Kontakt (T2);
• eine erste piezoelektrische oder ferroelektrische Schicht (11a);
• eine zweite piezoelektrische oder ferroelektrische Schicht (11b);
• wobei die erste piezoelektrische oder ferroelektrische Schicht (11a) und die zweite piezoelektrische oder ferroelektrische Schicht (11b) miteinander in körperlichem Kontakt stehen und zwischen dem ersten elektrisch leitfähigen Kontakt (T1) und dem zweiten elektrisch leitfähigen Kontakt (T2) angeordnet sind;
• wobei der erste elektrisch leitfähige Kontakt (T1) mit der ersten piezoelektrischen oder ferroelektrischen Schicht (11a) einen Schottky-Kontakt bildet und/oder der zweite elektrisch leitfähige Kontakt (T2) mit der zweiten piezoelektrischen oder ferroelektrischen Schicht (11b) einen Schottky-Kontakt bildet,
• **dadurch gekennzeichnet, dass** die zweite piezoelektrische oder ferroelektrische Schicht (11b) mit mindestens einem zusätzlichen Metall und/oder einem zusätzlichen Halbmetall als Dotand dotiert ist.

2. Widerstandsstruktur (3) gemäß Anspruch 1,
wobei die erste piezoelektrische oder ferroelektrische Schicht (11a) und die zweite piezoelektrische oder ferroelektrische Schicht (11b) voneinander verschiedene Dotierungen und/oder räumliche Dotierungsverteilungen aufweisen.

3. Widerstandsstruktur (3) gemäß Anspruch 1 oder 2,
wobei die erste piezoelektrische oder ferroelektrische Schicht (11a) mindestens einen ersten Schichtbereich (11'a, 11"a) aufweisen kann, wobei sich die Eigenschaften des mindestens einen ersten Schichtbereichs (11'a, 11"a) von denen der ersten piezoelektrischen oder ferroelektrischen Schicht (11a) unterscheiden, und/oder wobei die zweite piezoelektrische oder ferroelektrische Schicht (11b) mindestens einen zweiten Schichtbereich (11'b, 11"b) aufweisen kann, wobei sich die Eigenschaften des mindestens einen zweiten Schichtbereichs (11'a, 11"a) von denen der zweiten piezoelektrischen oder ferroelektrischen Schicht (11a) unterscheiden.

4. Widerstandsstruktur (3) gemäß einem der Ansprüche 1 bis 3,
wobei die zweite piezoelektrische oder ferroelektrische Schicht (11b) mit mindestens einem zusätzlichen Metall und/oder einem zusätzlichen Halbmetall als Dotand mit einem Anteil von 0,1 at% dotiert ist.

5. Widerstandsstruktur (3) gemäß Anspruch 4,
wobei das zusätzlichen Metall und/oder das zusätzliche Halbmetall als Dotand eine n-Dotierung in der zweiten piezoelektrischen oder ferroelektrischen Schicht (11b) erzeugt.

6. Widerstandsstruktur (3) gemäß einem der Ansprüche 1 bis 5,
wobei die erste piezoelektrische oder ferroelektrische Schicht (11a) Bismut-Ferrit (BiFeO₃) aufweist und wobei die zweite piezoelektrische oder ferroelektrische Schicht (11b) mit Titan dotiertes Bismut-Ferrit (Bi(Fe,Ti)O₃) aufweist.

7. Widerstandsstruktur (3) gemäß einem der Ansprüche 1 bis 6,
wobei die erste piezoelektrische oder ferroelektrische Schicht (11a) und die zweite piezoelektrische oder ferroelektrische Schicht (11b) oxidisch sind und eine Sauerstoff-Fehlstellen-n-Dotierung aufweisen.

8. Widerstandsstruktur (3) gemäß einem der Ansprüche 1 bis 7,
wobei die erste piezoelektrische oder ferroelektrische Schicht (11a) und die zweite piezoelektrische oder ferroelektrische Schicht (11b) in einem elektrisch leitfähigen Kontaktbereich aneinander angrenzen.

9. Widerstandsstruktur (3) gemäß Anspruch 8,
wobei der Kontaktbereich jeweils das Schichtmaterial der ersten piezoelektrischen oder ferroelektrischen Schicht (11a) und/oder der zweiten piezoelektrischen oder ferroelektrische Schicht (11b) mit einer Konzentration an freien Ladungsträgern von mehr als 10¹⁹ cm⁻³ aufweist.

10. Widerstandsstruktur (3) gemäß einem der Ansprüche 1 bis 9,
wobei der erste Kontakt (T1) und der zweite Kontakt (T2) jeweils mindestens ein Metall aufweisen.

11. Widerstandsstruktur (3) gemäß Anspruch 1,
wobei die erste piezoelektrische oder ferroelektrische Schicht (11a) und/oder die zweite piezoelektrische oder ferroelektrische Schicht mindestens ein Material aus der folgenden Gruppe von Materialien aufweist: Blei-Zirkonat-Titanat, Bariumtitanat, Blei-Magnesium-Niobat, Aluminiumorthophosphat, einem Material aus der Turmalingruppe, und Kaliumnatriumtartrat-Tetrahydrat.

12. Verfahren zum Betreiben einer Widerstandsstruktur (3), gemäß einem der Ansprüche 1 bis 11, das Verfahren aufweisend:
• Bereitstellen einer ersten Spannung mit einer ersten Polarität zwischen dem ersten elektrischen Kontakt (T1) und dem zweiten elektrischen Kontakt (T2), so dass die erste ferroelektrische Schicht (11a) oder piezoelektrische Schicht (11a) mit dem ersten elektrischen Kontakt (T1) einen ohmschen Übergang bildet und die zweite ferroelektrische Schicht (11b) oder piezoelektrische Schicht (11b) mit dem zweiten elektrischen Kontakt (T2) einen Schottky-Kontakt bildet; und/oder
• Bereitstellen einer zweiten Spannung mit einer zweiten Polarität zwischen dem ersten elektrischen Kontakt (T1) und einem zweiten elektrischen Kontakt (T2), so dass die erste ferroelektrische Schicht (11a) oder piezoelektrische Schicht (11a) mit dem ersten elektrischen Kontakt (T1) einen Schottky-Kontakt bildet und die zweite ferroelektrische Schicht (11b) oder piezoelektrische Schicht (11b) mit dem zweiten elektrischen Kontakt (T2) einen ohmschen Übergang bildet.

## Claims

1. A resistance structure (3), comprising:
• a first electrically conductive contact (T1);
• a second electrically conductive contact (T2);
• a first piezoelectric or ferroelectric layer (11a);
• a second piezoelectric or ferroelectric layer (11b);
• wherein the first piezoelectric or ferroelectric layer (11a) and the second piezoelectric or ferroelectric layer (11b) are in physical contact with one another and are arranged between the first electrically conductive contact (T1) and the second electrically conductive contact (T2);
• wherein the first electrically conductive contact (T1) together with the first piezoelectric or ferroelectric layer (11a) forms a Schottky contact and/or the second electrically conductive contact (T2) together with the second piezoelectric or ferroelectric layer (11b) forms a Schottky contact;
• **characterized in that** the second piezoelectric or ferroelectric layer (11b) is doped with at least one additional metal and/or one additional semimetal as dopant.

2. The resistance structure (3) as claimed in claim 1,
wherein the first piezoelectric or ferroelectric layer (11a) and the second piezoelectric or ferroelectric layer (11b) have mutually different dopings and/or spatial doping distributions.

3. The resistance structure (3) as claimed in claim 1 or 2,
wherein the first piezoelectric or ferroelectric layer (11a) can comprise at least one first layer region (11'a, 11"a), wherein the properties of the at least one first layer region (11'a, 11"a) differ from those of the first piezoelectric or ferroelectric layer (11a), and/or wherein the second piezoelectric or ferroelectric layer (11b) can comprise at least one second layer region (11'b, 11"b), wherein the properties of the at least one second layer region (11'a, 11"a) differ from those of the second piezoelectric or ferroelectric layer (11a).

4. The resistance structure (3) as claimed in any of claims 1 to 3,
wherein the second piezoelectric or ferroelectric layer (11b) is doped with at least one additional metal and/or one additional semimetal as dopant with a proportion of 0.1 at%.

5. The resistance structure (3) as claimed in claim 4,
wherein the additional metal and/or the additional semimetal as dopant produces an n-type doping in the second piezoelectric or ferroelectric layer (11b).

6. The resistance structure (3) as claimed in any of claims 1 to 5,
wherein the first piezoelectric or ferroelectric layer (11a) comprises bismuth ferrite (BiFeO₃), and wherein the second piezoelectric or ferroelectric layer (11b) comprises titanium-doped bismuth ferrite (Bi(Fe, Ti)O₃).

7. The resistance structure (3) as claimed in any of claims 1 to 6,
wherein the first piezoelectric or ferroelectric layer (11a) and the second piezoelectric or ferroelectric layer (11b) are oxidic and have an oxygen defect n-type doping.

8. The resistance structure (3) as claimed in any of claims 1 to 7,
wherein the first piezoelectric or ferroelectric layer (11a) and the second piezoelectric or ferroelectric layer (11b) adjoin one another in an electrically conductive contact region.

9. The resistance structure (3) as claimed in claim 8,
wherein the contact region in each case comprises the layer material of the first piezoelectric or ferroelectric layer (11a) and/or of the second piezoelectric or ferroelectric layer (11b) with a concentration of free charge carriers of more than 10¹⁹ cm⁻³.

10. The resistance structure (3) as claimed in any of claims 1 to 9,
wherein the first contact (T1) and the second contact (T2) in each case comprise at least one metal.

11. The resistance structure (3) as claimed in claim 1,
wherein the first piezoelectric or ferroelectric layer (11a) and/or the second piezoelectric or ferroelectric layer comprise(s) at least one material from the following group of materials: lead zirconate titanate, barium titanate, lead magnesium niobate, aluminum orthophosphate, a material from the tourmaline group, and potassium sodium tartrate tetrahydrate.

12. A method for operating a resistance structure (3), as claimed in any of claims 1 to 11, the method comprising:
• providing a first voltage having a first polarity between the first electrical contact (T1) and the second electrical contact (T2), such that the first ferroelectric layer (11a) or piezoelectric layer (11a) together with the first electrical contact (T1) forms an ohmic junction and the second ferroelectric layer (11b) or piezoelectric layer (11b) together with the second electrical contact (T2) forms a Schottky contact; and/or
• providing a second voltage having a second polarity between the first electrical contact (T1) and a second electrical contact (T2), such that the first ferroelectric layer (11a) or piezoelectric layer (11a) together with the first electrical contact (T1) forms a Schottky contact and the second ferroelectric layer (11b) or piezoelectric layer (11b) together with the second electrical contact (T2) forms an ohmic junction.

## Revendications

1. Structure résistante (3), comportant :
• un premier contact électriquement conducteur (T1) ;
• un deuxième contact électriquement conducteur (T2) ;
• une première couche piézoélectrique ou ferroélectrique (11a) ;
• une deuxième couche piézoélectrique ou ferroélectrique (11b) ;
• la première couche piézoélectrique ou ferroélectrique (11a) et la deuxième couche piézoélectrique ou ferroélectrique (11b) étant en contact physique l'une avec l'autre, et étant disposées entre le premier contact électriquement conducteur (T1) et le deuxième contact électriquement conducteur (T2) ;
• le premier contact électriquement conducteur (T1) formant avec la première couche piézoélectrique ou ferroélectrique (11a) un contact de Schottky et/ou le deuxième contact électriquement conducteur (T2) formant avec la deuxième couche piézoélectrique ou ferroélectrique (11b) un contact de Schottky,
• **caractérisée en ce que** la deuxième couche piézoélectrique ou ferroélectrique (11 b) est dopée par au moins un métal supplémentaire et/ou par un métalloïde supplémentaire servant de dopant.

2. Structure résistante (3) selon la revendication 1,
dans laquelle la première couche piézoélectrique ou ferroélectrique (11a) et la deuxième couche piézoélectrique ou ferroélectrique (11b) comportent des dopages et/ou des répartitions spatiales des dopages différents les uns des autres.

3. Structure résistante (3) selon la revendication 1 ou 2,
dans laquelle la première couche piézoélectrique ou ferroélectrique (11a) peut comporter au moins une première zone de couche (11'a, 11"a), les propriétés de l'au moins une première zone de couche (11'a, 11"a) étant différentes de celles de la première couche piézoélectrique ou ferroélectrique (11a), et/ou la deuxième couche piézoélectrique ou ferroélectrique (11b) peut comporter au moins une deuxième zone de couche (11'b, 11"b), les propriétés de l'au moins une deuxième zone de couche (11'a, 11"a) étant différentes de celles de la deuxième couche piézoélectrique ou ferroélectrique (11a).

4. Structure résistante (3) selon l'une des revendications 1 à 3,
dans laquelle la deuxième couche piézoélectrique ou ferroélectrique (11b) est dopée par au moins un métal supplémentaire et/ou par un métalloïde supplémentaire servant de dopant, selon une proportion de 0,1 % en atomes.

5. Structure résistante (3) selon la revendication 4,
dans laquelle le métal supplémentaire et/ou le métalloïde supplémentaire servant de dopant produit un dopage n dans la deuxième couche piézoélectrique ou ferroélectrique (11b).

6. Structure résistante (3) selon l'une des revendications 1 à 5,
dans laquelle la première couche piézoélectrique ou ferroélectrique (11a) comprend du ferrite de bismuth (BiFeO₃), et la deuxième couche piézoélectrique ou ferroélectrique (11b) comprend du ferrite de bismuth dopé au titane (Bi(Fe,Ti)O₃).

7. Structure résistante (3) selon l'une des revendications 1 à 6,
dans laquelle la première couche piézoélectrique ou ferroélectrique (11a) et la deuxième couche piézoélectrique ou ferroélectrique (11b) sont à base d'oxydes, et comportent un dopage n à trous d'oxygène.

8. Structure résistante (3) selon l'une des revendications 1 à 7,
dans laquelle la première couche piézoélectrique ou ferroélectrique (11a) et la deuxième couche piézoélectrique ou ferroélectrique (11b) sont adjacentes l'une à l'autre dans une zone de contact électriquement conductrice.

9. Structure résistante (3) selon la revendication 8,
dans laquelle la zone de contact comprend le matériau de couche de la première couche piézoélectrique ou ferroélectrique (11a) et/ou de la deuxième couche piézoélectrique ou ferroélectrique (11b), chacun à une concentration de porteurs de charge libres supérieure à 10¹⁹ cm⁻³.

10. Structure résistante (3) selon l'une des revendications 1 à 9,
dans laquelle le premier contact (T1) et le deuxième contact (T2) comprennent chacun au moins un métal.

11. Structure résistante (3) selon la revendication 1,
dans laquelle la première couche piézoélectrique ou ferroélectrique (11a) et/ou la deuxième couche piézoélectrique ou ferroélectrique comprennent au moins un matériau du groupe suivant de matériaux : titanate-zirconate de plomb, titanate de baryum, niobate de magnésium et de plomb, orthophosphate d'aluminium, un matériau du groupe de la tourmaline, et tartrate de potassium et de sodium tétrahydraté.

12. Procédé pour l'utilisation d'une structure résistante (3) selon l'une des revendications 1 à 11, le procédé comprenant :
• l'application d'une première tension ayant une première polarité entre le premier contact électrique (T1) et le deuxième contact électrique (T2), de telle sorte que la première couche ferroélectrique (11a) ou couche piézoélectrique (11a) forme avec le premier contact électrique (T1) une transition ohmique, et que la deuxième couche ferroélectrique (11b) ou couche piézoélectrique (11b) forme avec le deuxième contact électrique (T2) un contact de Schottky ; et/ou
• l'application d'une deuxième tension ayant une deuxième polarité entre le premier contact électrique (T1) et un deuxième contact électrique (T2), de telle sorte que la première couche ferroélectrique (11a) ou couche piézoélectrique (11a) forme avec le premier contact électrique (T1) un contact de Schottky, et que la deuxième couche ferroélectrique (11b) ou couche piézoélectrique (11b) forme avec le deuxième contact électrique (T2) une transition ohmique.
